# EUROPÄISCHE PATENTSCHRIFT

(11) **EP 3 111 086 B1**
(45) Veröffentlichungstag und Bekanntmachung des Hinweises auf die Patenterteilung: **03.01.2018**
(21) Anmeldenummer: 15707080.6
(22) Anmeldetag: 24.02.2015
(51) Int. Cl.: F03G 7/04, F03G 7/08, F16D 25/08, F03B 17/00

(54) **LAGEENERGIESPEICHER MIT DICHTUNG**
POTENTIAL ENERGY STORE WITH SEAL
ACCUMULATEUR D'ÉNERGIE POTENTIELLE AVEC GARNITURE D'ÉTANCHÉITÉ

(30) Priorität: 25.02.2014 DE 102014102405
(43) Veröffentlichungstag der Anmeldung: 04.01.2017
(73) Patentinhaber: Heindl Energy GmbH, 70565 Stuttgart (DE)
(72) Erfinder: STENZEL, Gerd, 78647 Trossingen (DE)
(74) Vertreter: Westphal, Mussgnug & Partner Patentanwälte mbB
(86) Internationale Anmeldenummer: PCT/EP2015/053788
(87) Internationale Veröffentlichungsnummer: WO 2015/128309

(56) Entgegenhaltungen:
- DE-A1-102007 057 323
- DE-A1-102007 062 672
- DE-A1-102010 034 757
- DE-A1-102012 210 845

## Beschreibung

Der in den letzten Jahren forcierte Ausbau der Nutzung erneuerbarer Energien, insbesondere der Bau zahlreicher Photovoltaik- und Windkraftanlagen, deren Energieproduktion von nicht kontrollierbaren Umweltbedingungen abhängig ist, hat zu der Einsicht geführt, dass zur Sicherung kontinuierlich bedarfsgerechter Energieversorgung Energiespeichern eine wesentliche Bedeutung zukommt. Dementsprechend hat die Entwicklung von Energiespeichern, insbesondere solchen, die eine große Speicherkapazität haben, eine große Bedeutung gewonnen.

Eine Kategorie derartiger Energiespeicher sind Lageenergiespeicher, bei denen überschüssige Energie dazu genutzt wird, die potentielle Energie einer (großen) Masse zu erhöhen. Eine seit langen Jahren bekannte Kategorie von Lageenergiespeichern sind Pumpspeicherkraftwerke, bei denen Wasser in ein höher gelegenes Reservoir gepumpt wird, um Lageenergie zu speichern. Die Kapazität von individuellen Pumpspeicherkraftwerken ist aber begrenzt und ihre Zahl ist wegen hoher Erfordernisse an den Standort nicht beliebig erhöhbar.

Diese Nachteile sind bei einer neuen Kategorie von Lageenergiespeichern vermieden. Bei diesen Lageenergiespeichern, für die ein Beispiel aus der DE 10 2010 034 757 B4 bekannt ist und die nachfolgend als "gattungsgemäße Lageenergiespeicher" bezeichnet werden, wird eine große Masse unter Verwendung einer Hydraulikflüssigkeit, z.B. Wasser, in einem Hydraulikzylinder durch Einpumpen der Hydraulikflüssigkeit über eine oder mehrere Leitungen relativ zur Erdoberfläche angehoben, so dass die Masse praktisch den Kolben, der im Hydraulikzylinder bewegt wird, darstellt und Energie als potentielle Energie des angehobenen Kolbens gespeichert wird.

Ist der Kolben im Hydraulikzylinder so weit wie möglich angehoben oder ist gerade keine überschüssige Energie zur Speicherung verfügbar, sind die Leitungen durch Ventile bzw. Schleusen verschlossen, und der Kolben bleibt in seiner aktuellen Position.

Die potentielle Energie des angehobenen Kolbens kann dann wieder in Elektrizität umgewandelt werden, wenn die Ventile oder Schleusen geöffnet werden, ohne dass die Pumpen in Betrieb sind. Dann wird Hydraulikflüssigkeit aus dem Hydraulikzylinder hinausgedrängt, und deren Strömungsenergie kann auf bekannte Weise, ähnlich wie bei konventionellen Pumpspeicherkraftwerken, durch Generatoren wieder in elektrische Energie umgewandelt werden.

Dabei kann die Masse insbesondere durch einen ausgeschnittenen Fels gebildet und der notwendige Hydraulikzylinder durch das den ausgeschnittenen Fels umgebende Gestein gebildet werden.

Naturgemäß muss bei derartigen Lageenergiespeichern zwischen der großen Masse, z.B. der Felsmasse, und dem Hydraulikzylinder, z.B. dem umgebenden Gestein, eine Dichtung angeordnet sein, um den unkontrollierten Austritt der Hydraulikflüssigkeit unter Umgehung des Leitungssystems zu vermeiden.

Der große Vorteil bei dieser Konstruktion, bei der Kolbendurchmesser und Hubhöhen von mehreren hundert m realisiert werden können, liegt in der sehr hohen Speicherkapazität der Anlagen, die die von konventionellen Speicherkraftwerken bei weitem übertrifft.

Ein Lageenergiespeicher der vorstehend beschriebenen Gattung, wie ihn z.B. die DE 10 2010 034 757 B4 offenbart, ist der Ausgangspunkt der nachfolgend beschriebenen Erfindungen, die diesen in mehrere Richtungen weiterentwickelt.

Entwicklungsarbeiten haben gezeigt, dass die Bereitstellung eines gut geeigneten Dichtungsrings schwierig ist und die direkte Übertragung bekannter Dichtkonzepte zu suboptimalen Ergebnissen führt.

Problematisch ist dabei bereits, dass bei hohen herrschenden Drücken einerseits im Vergleich zu üblicherweise abzudichtenden Spaltgrößen relativ breiter Spalt vorliegt, denn der Abstand zwischen der Arbeitsmasse, die durch den Kolben gebildet wird, und dem umgebenden Gestein, das die Wand des Hydraulikzylinders bildet, hat eine typische minimale Ausdehnung von mehreren hundert mm bis hin zu 1000 mm.

Selbst dann, wenn eine geringere Ausdehnung des Abstands im nicht geladenen Zustand möglicherweise technisch realisierbar wäre, wäre sie nicht wünschenswert, denn die Felsmasse, die den Kolben bildet, ist in zumindest partiell ausgefahrenem Zustand einem nicht zu vernachlässigenden Winddruck ausgesetzt, der eine leichte Verkippung der den Kolben bildenden Masse gegenüber dem Hydraulikzylinder bewirkt. Bei zu geringem Abstand zwischen der Masse und dem Hydraulikzylinder könnte es in dieser Situation zu einem Verklemmen der Masse im Hydraulikzylinder kommen.

Gerade das Verkippen der den Kolben bildenden Masse im Hydraulikzylinder verschärft aber die Dichtproblematik dadurch noch weiter, dass dann einerseits die Breite des abzudichtenden Spalts entlang der Hubrichtung variieren kann und andererseits auch in unterschiedliche Richtungen senkrecht zur Hubrichtung unterschiedlich sein kann.

Hinzu kommt als weitere Besonderheit des abzudichtenden Spaltes zwischen Kolben und Hydraulikzylinder, dass die Spaltbreite in Abhängigkeit von seinem Ladezustand, der mit der aktuellen Hubhöhe des Kolbens korreliert, variiert. Dies ist darauf zurückzuführen, dass der Druck der Hydraulikflüssigkeit, der auf Kolben und Hydraulikzylinder wirkt, von dieser Größe abhängig ist und so hoch ist, dass die Materialien, aus denen diese Bauteile bestehen, komprimiert werden. Diese Effekte liegen bei Lageenergiespeichern mit Radien von einigen hundert Meter in der Größenordnung Dezimeter.

Als weiteres Problem tritt hinzu, dass die Oberflächen von Kolben und/oder Hydraulikzylinder keinen perfekten prismoidalen Körper definieren und nicht nachhaltig sind, sondern uneben sind und somit nicht nur auf mikroskopischer Skala eine Rauigkeit aufweisen. Beispielsweise führen bergmännische Arbeiten, die zum Heraustrennen einer den Kolben des Hydraulikzylinders bildenden Felsmasse aus dem umgebenden Gestein notwendig sind, zu strukturierten Gesteinsoberflächen. Diese rauen Oberflächen erhöhen Anforderungen an die Dichtung in zweifacher Hinsicht. Einerseits muss die Dichtung hinreichend flexibel sein, um bei Kontakt mit einer strukturierten Oberfläche den Durchtritt von Flüssigkeit an jeder Stelle der Oberflächenstruktur zu vermeiden. Andererseits muss aber sichergestellt sein, dass die Dichtung bei einer Änderung der Position der den Kolben des Hubzylinders bildenden Felsmasse im Hubzylinder, welche für den Betrieb des Lageenergiespeichers essentiell ist, nicht übermäßig verschlissen wird.

Die Aufgabe der Erfindung besteht daher darin, einen Lageenergiespeicher mit einer verbesserten Dichtung bereitzustellen. Diese Aufgabe wird gelöst durch einen Lageenergiespeicher mit den Merkmalen des Patentanspruchs 1. Vorteilhafte Weiterbildungen der Erfindung sind Gegenstand der abhängigen Ansprüche.

Diese Aufgabe wird gelöst durch einen Lageenergiespeicher mit einem Hydraulikzylinder, in dem ein Kolben zur Speicherung von Energie in Form von potentieller Energie des Kolbens angeordnet ist, wobei die Position des Kolbens relativ zur Erdoberfläche veränderbar ist, mit einer Pumpe, mit der eine Hydraulikflüssigkeit über Leitungen in den Hydraulikzylinder pumpbar ist, so dass der Kolben angehoben wird, und mit einem Generator zur Umwandlung von Strömungsenergie von beim Absinken des Kolbens aus dem Hydraulikzylinder verdrängter Hydraulikflüssigkeit in Elektrizität, wobei zwischen dem Hydraulikzylinder und dem Kolben (d.h. im Bereich zwischen Hydraulikzylinder und Kolben; eine an beide Bauteile unmittelbar angrenzende Anordnung der Dichtung ist zwar in vielen Ausführungsformen vorteilhaft, soll aber durch die Formulierung "zwischen Hydraulikzylinder und Kolben" nicht impliziert werden) eine Dichtung oder eine Dichtungsanordnung zumindest partiell angeordnet ist. Zumindest partiell angeordnet bedeutet dabei, dass sich die Dichtung oder Dichtungsanordnung nicht vollständig im Spalt befinden muss, sondern auch Abschnitte im Hydraulikzylinder, im Kolben oder in in diesen vorgesehenen Ausnehmungen aufweisen kann.

Die Geometrie dieser -in vielen Fällen im Wesentlichen zylindersymmetrischen- Grundanordnung und insbesondere ihre Hubachse bestimmt auch die Begriffe "außen", "innen", "oben" und "unten" für einen solchen Lageenergiespeicher. "Oben" entspricht der Richtung, in die der Kolben sich bei Speicherung von Energie im Lageenergiespeicher bewegt, "unten" der Richtung, in die der Kolben sich bei Entnehmen von Energie aus dem Lageenergiespeicher bewegt. "Außen" bedeutet radial von der Hubachse weg, "innen" radial auf die Hubachse zu.

Erfindungswesentlich ist dabei, dass die Dichtung zumindest einen Dichtabschnitt mit einer flexiblen Trägerstruktur zur Aufnahme der wirkenden Kräfte aufweist, der ein- oder beidseitig mit einer fluiddichten Schicht zur Abdichtung gegen den Durchtritt von Fluid beschichtet oder mit einem erstarrten fluiddichten Material durchtränkt ist.

Die Einschränkung "zumindest einen Dichtabschnitt" trägt dabei der Tatsache Rechnung, dass, wie unten detailliert erläutert wird, Dichtungsanordnungen möglich sind, bei denen die Dichtung mehrlagig, insbesondere quasi "gefaltet" oder "umgeschlagen" in einem Spalt zwischen Kolben und Hydraulikzylinder angeordnet sind und dass es bei einer solchen Anordung ausreichend zum Abdichten des Spalts ist, wenn eine dieser Lagen, die alle zu einer Dichtung gehören, die Dichtwirkung entfaltet und dass, wie ebenfalls nachfolgend detailliert erläutert wird, Dichtungsanordnungen möglich sind, in denen der Dichtabschnitt und weitere, anders aufgebaute Komponenten der Dichtung durch ihr Zusammenwirken die angestrebte Dichtwirkung erzielen. Eine solche Komponente kann beispielsweise auch ein in den Spalt hineinragender Teil eines Lagerrings aus Beton für die Dichtung sein, der im Kolben oder im Hydraulikzylinder verankert ist.

Wie aus dem vorstehenden Abschnitt deutlich wird, unterscheidet diese Patentanmeldung somit zwischen den Begriffen "Dichtabschnitt", "Dichtung" und "Dichtungsanordnung". Als Dichtung wird dabei die im abzudichten Raum angeordnete Baugruppe, die aus mehreren Komponenten bestehen kann, verstanden. Notwendiger Bestandteil einer Dichtung ist mindestens ein Dichtabschnitt, d.h. mindestens ein Abschnitt oder Bestandteil der Dichtung, der eine Dichtwirkung herbeiführen kann, also den Durchtritt von Hydraulikflüssigkeit durch den abzudichtenden Raum oder einen Teil desselben verhindert; eine Dichtung kann aber auch Bestandteile aufweisen, die diese Funktion nicht erfüllen. Die Dichtungsanordnung kann neben der Dichtung auch Komponenten wie Lager oder Mittel zur mechanischen Positionierung umfassen, also insbesondere Mittel, die die Lage der Dichtung im abzudichten Raum bestimmen und/oder beeinflussen.

Als Material für die fluiddichte Schicht sind z.B. Gummi, Silikon, Kautschuk oder ein elastischer Kunststoff besonders geeignet. Als Trägerstruktur kann insbesondere eine Anordnung von Seilen oder Bändern dienen. Eine solche Anordnung kann z.B. durch in einem Abstand von einigen mm oder wenigen cm nebeneinander, gegebenenfalls auch so dicht wie möglich nebeneinander, angeordnete Seile oder Bänder bzw. von nebeneinander angeordneten Abschnitten solcher Seile oder Bänder gebildet werden. Wenn nachfolgend im Sinne einer knappen und prägnanteren Formulierung von nebeneinander angeordneten Seilen oder Bändern die Rede ist, soll dies nicht ausschließen, dass unterschiedliche Abschnitte desselben Seils oder desselben Bands nebeneinander angeordnet sind, sondern diese Variante mit umfassen.

Explizit hingewiesen wird an dieser Stelle auf die Tatsache, dass "nebeneinander" nicht notwendig "parallel zueinander" oder "unmittelbar benachbart" bedeutet und es in der Praxis vorteilhaft ist, Seile oder Bänder zumindest mit einer Verlaufskomponente in radialer Richtung zur Achse der Hubrichtung verlaufen zu lassen, was mit sich bringt, dass der Abstand der Seile oder Bänder voneinander an der dem Kolben zugewandten Seite der Dichtung etwas geringer ist als an der der Innenwand des Hydraulikzylinders zugewandten Seite. Die Praxisrelevanz dieses Verlaufs ergibt sich daraus, dass insgesamt eine kreisringförmige Öffnung abzudichten ist. Bei dieser Dichtungsgeometrie werden insbesondere in dieser Beschreibung als Ende oder Rand der Dichtung solche Abschnitte der Dichtung bezeichnet, mit denen die Dichtung am Hydraulikzylinder oder am Kolben anliegt bzw. befestigt ist.

Der Vollständigkeit halber sei angemerkt, dass die Dichtung naturgemäß den Kolben in radialer Richtung umgeben muss, also in jeder Richtung senkrecht zur Hubachse gesehen ein Abschnitt der Dichtung vorhanden sein muss. Für diesen Sachverhalt wird nachfolgend der Begriff "radial umlaufende Dichtung" verwendet.

Dabei müssen zu demselben Zeitpunkt in unterschiedlichen Richtungen unterschiedlich breite Spalte, die sich beispielsweise als Konsequenz aus einem Winddruckversatz des Kolbens ergeben können, ebenso wie in derselben Richtung zu unterschiedlichen Zeitpunkten unterschiedlich breite Spalte, die sich dadurch ergeben, dass der Druck der Hydraulikflüssigkeit auf Kolben und Hydraulikzylinder in Abhängigkeit vom Ladezustand des Lageenergiespeichers variiert und zur den Spalt verbreiternden Kompression von Kolben und Hydraulikzylinder führen kann, durch die Dichtung abgedichtet werden können.

Besonders vorteilhaft ist es, wenn der Dichtabschnitt oder die Dichtung in Umfangsrichtung des Kolbens, also jeweils lokal in Richtung tangential zum Kolben an der jeweiligen Stelle, elastisch, insbesondere reversibel dehnbar und reversibel komprimierbar ist. Durch diese Maßnahme ist eine Anpassung des Dichtabschnitts an mit unterschiedlichen Spaltbreiten einher gehende Variationen des Umfangs an der Kontaktfläche zwischen Dichtabschnitt bzw. Dichtung und Kolben bzw. Wand des Hydraulikzylinders, realisierbar.

Für Fertigung, Transport und Installation der Dichtung ist es vorteilhaft, wenn die Dichtung aus einzelnen Segmenten zusammengesetzt wird, wobei insbesondere auch eine polygonzugartig zusammengesetzte Dichtung bei großen Radien realisierbar ist. Insbesondere in diesem Fall können gegebenenfalls auch Dichtungen mit parallel verlaufenden Seilen oder Bändern verwendet werden, um die einzelnen Segmente zu bilden. Zwar führt eine polygonzugartige Anordnung, z.B. an der Hydraulikzylinderwand, dazu, dass bei einem Nachführen der Dichtung zur Abdichtung eines breiteren Spalts aus geometrischer Sicht zu einem Überlapp zwischen den Dichtabschnitten bzw. Dichtungen der einzelnen Segmente, bedingt durch die großen Radien der Lageenergiespeicher kann dieser Überlapp jedoch durch die bevorzugte Elastizität in Umfangsrichtung des Kolbens vermieden, insbesondere im diskutierten Beispiel in eine Kompression des Dichtabschnitts bzw. der Dichtung überführt werden.

In einer besonders bevorzugten Ausführungsform dieser Erfindung ist vorgesehen, dass bei der installierten Dichtung mindestens nebeneinander angeordneten Seile oder Bänder der Trägerstruktur in eine Richtung verlaufen, die eine Komponente radial zur Hubrichtung und gegebenenfalls eine Komponente parallel zur Hubrichtung, aber keine Komponente tangential zum Kolbenumfang haben. Dies impliziert, dass die Dichtung einerseits mit beiden Enden entweder am Hydraulikzylinder oder am Kolben verankert ist oder andererseits mit einem Ende am Hydraulikzylinder und mit dem anderen Ende am Kolben verankert ist und bringt den Effekt mit sich, dass die wirkenden Kräfte, die von der Trägerstruktur aufgenommen werden sollen, durch die Verankerung an diesen Stellen abgefangen werden.

Für die vorstehend beschriebene Ausführungsform ist es besonders bevorzugt, wenn die nebeneinander angeordneten Seile oder Bänder der Trägerstruktur an den Enden der Dichtung jeweils an einem gemeinsamen Wulstseil befestigt oder um das Wulstseil herumgeschlungen sind. Das letztgenannte Merkmal ermöglicht es insbesondere, dass nebeneinander verlaufende Seile oder Bänder der Trägerstruktur durch unterschiedliche Abschnitte desselben Seils oder Bands gebildet werden. Das Wulstseil kann dann zur Verankerung der Dichtung am Kolben oder an der Innenwand des Hydraulikzylinders verwendet werden, z.B. durch Aufnahme in einen dort befestigten, insbesondere eingegossen und/oder mit Stahlarmierungen verbundenen bzw. verspannten Ankerkasten, in dem es mit Beton eingegossen wird.

Als Wulstseil wird dabei in dieser Offenbarung ein Seil, insbesondere ein Stahlseil bezeichnet, das einen deutlich größeren, insbesondere mindestens doppelt, bevorzugt mindestens dreimal so großen Durchmesser hat, der jedenfalls die Mindestkauschengröße des umschlingenden Seils erreicht oder übersteigt, wobei das Seil beispielsweise durch Verflechten oder Verseilen von mehreren Seilen oder Bändern der Trägerstruktur gebildet werden kann.

Einerseits wird durch das Wulstseil mit seinem deutlich größeren Durchmesser sichergestellt, dass es die Zugkräfte der an ihm angeordneten Seile oder Bänder der Trägerstruktur aufnehmen kann. Zweitens stellt der größere Durchmesser sicher, dass Seile oder Bänder der Trägerstruktur ohne allzu starke Knickung um das Wulstseil herumgewickelt werden können. Drittens erlaubt ein großer Durchmesser des Wulstseils eine sichere Verankerung, beispielsweise in einem Ankerkasten.

Ein anderes Ausführungsbeispiel für eine Trägerstruktur ist ein Geflecht aus Seilen oder Bändern.

Für die Anwendung in Lageenergiespeichern sind als Grundkomponente der Trägerstruktur Stahlseile besonders bevorzugt. Für typische Abmessungen von Lageenergiespeichern und die daraus resultierenden Belastungen haben sind z.B. Stahlseile, insbesondere Edelstahlseile mit einem Durchmesser zwischen etwa 5mm und etwa 25mm besonders geeignet.

Besonders bevorzugt ist dabei, wenn die Seile oder Bänder der Trägerstruktur mit einem Gewebe miteinander verbunden sind, so dass die Trägerstruktur durch das Gewebe zusammengehalten wird. Geeignet hierfür sind insbesondere Abstandsgewebe.

Beispielsweise können Stahlseile als Kettfäden und und Kunstfasergeweben als Schussfäden miteinander verwebt und dann mit der fluiddichten Schicht beschichtet werden, um eine Dichtung für einen Lageenergiespeicher zu erhalten.

Um die Lebensdauer der Dichtung zu erhöhen, können vorzugsweise Dichtlippen oder Wülste aus Gummi, Silikon oder einem elastischen Kunststoff an Positionen der Dichtung vorgesehen werden, an denen eine Wechselwirkung mit dem Kolben oder der Innenwand des Hydraulikzylinders zu erwarten ist.

Unter Verwendung einer derart aufgebauten Dichtung lassen sich eine Reihe von unterschiedlichen Dichtungsmechanismen realisieren, die im Hinblick auf die unterschiedlichen Erfordernisse individueller Realisationen von Lageenergiespeichern optimiert sind. Durch die Dichtung abzudichten ist dabei jeweils eine Fläche, die durch einen inneren Kreis (nämlich den äußeren Umfang des Kolbens) und einen äußeren Kreis (nämmlich den inneren Umfang der Wand des Hydraulikzylinders) begrenzt ist, wobei sich der innere Kreis in dem äußeren Kreis bewegen kann (z.B. bei Versatz des Hydraulikzylinders durch Winddruck) und die sich zudem in Abhängigkeit vom Ladezustand des Lageenergiespeichers ändern kann.

### Rollmembran

Ein erster Dichtmechanismus sieht vor, dass zwischen dem Hydraulikzylinder und dem Kolben ein radial umlaufender, durch die gesamte Dichtung gebildeter Dichtabschnitt angeordnet ist, dessen eines Ende bzw. dessen einer Rand in einem ersten, in die Innenwand des Hydraulikzylinders eingelassenen Lager verankert ist und dessen anderes Ende bzw. dessen anderer Rand in einem zweiten, in die Außenwand des Kolbens eingelassenen Lager verankert ist. Die Lager können beispielsweise als Betonringe ausgeführt sein, an bzw. in denen der Dichtabschnitt eingelassen ist. Der Vorteil dieses Dichtmechanismus besteht darin, dass die Dichtung nicht entlang einer (rauen) Oberfläche bewegt werden muss.

Besonders bevorzugt ist dabei, wenn der Abstand des ersten und des zweiten Lagers bei vollständig entladenem Lageenergiespeicher der halben maximalen Hubhöhe entspricht und das zweite, in die Außenwand des Kolbens eingelassene Lager bei vollständig entladenem Lageenergiespeicher unterhalb des ersten, in die Innenwand des Hydraulikzylinders eingelassenen Lagers angeordnet ist. In diesem Fall reicht ein Dichtabschnitt mit einer die halbe maximale Hubhöhe um wenige Prozent übersteigenden Länge aus, um die Bewegung des Kolbens um die Hubhöhe zu erlauben, was die für den Dichtabschnitt aufzuwendenden Kosten signifikant reduziert.

### SCHIRM-DICHTUNG

Ein zweiter Dichtungsmechanismus basiert auf einer den Kolben radial, also senkrecht zu seiner Hubrichtung umgebenden Dichtung, die somit eine Dichtmanschette bildet. Der im abzudichtenden Spalt angeordnete Abschnitt der Dichtung bildet in einer Querschnittsebene durch den Kolben, die dessen Längsachse enthält betrachtet eine Schlaufe. Beide Enden bzw. Ränder der als Dichtmanschette ausgestalteten Dichtung sind in zwei am oder im Hydraulikzylinder eingelassenen Lagern oder in zwei am oder im im Kolben eingelassenen Lagern verankert, so dass eine doppellagige Dichtmanschette entsteht, wobei das nicht gelagerte, die Schlaufe bildende Mittelteil zwischen den Endabschnitten nach oben weist und eine Länge hat, die das Zweifache des maximalen Abstands zwischen Kolben und Innenwand des Hydraulikzylinders um mindestens 200%, bevorzugt 300%übersteigt und wobei die untere, der Hydraulikflüssigkeit zugewandte Lage der doppellagigen Dichtmanschette im schlaufenförmigen Abschnitt zumindest abschnittsweise für den Durchtritt von Hydraulikflüssigkeit durchlässig ist, während die obere Lage der Schlaufe und der gekrümmte Bereich der Schlaufe, in dem die obere Lage in die untere Lage der doppellagigen Dichtmanschette übergeht, den Dichtabschnitt bilden.

Bei dieser Dichtungsanordnung wird die doppelwandige Dichtmanschette also mit anderen Worten durch ein Umschlagen des Dichtungsmaterials und Verankerung beider Enden bzw. Ränder der Dichtung an bzw. im Kolben oder Hydraulikzylinder gebildet. Damit bildet die Dichtmanschette im Querschnitt durch den Lageenergiespeicher betrachtet eine Schlaufe, die im Bereich zwischen dem Kolben und dem Hydraulikzylinder liegt und sich nach oben erstreckt, aus. Die unter Druck stehende Hydraulikflüssigkeit dringt dann durch für sie durchlässige Abschnitte der unteren Lage in das Innere der Schlaufe ein, entfaltet sie und drückt sie an die Wand um so die Dichtwirkung herbeizuführen.

Ein wesentlicher Vorteil dieser Dichtungsanordnung liegt darin, dass sie auf sehr einfache Weise Änderungen in der Breite des abzudichtenden Spalts kompensiert. Dabei ist im Gegensatz zu der vorstehend diskutierten Ausgestaltung als Rollmembran der minimale Platzbedarf geringer, und es können sehr enge Biegeradien, an denen der Druck angreift, vermieden werden, da nötigenfalls auch z.B. bei der Lagerung der doppellagigen Dichtmanschette am Kolben eine Aussparung im Kolben vorgesehen werden kann.

Gemäß einer vorteilhaften Weiterbildung dieser Dichtungsanordnung ist vorgesehen, dass im Inneren der doppelwandigen Dichtmanschette eine Spannklammer oder Andruckfeder angeordnet ist, welches den minimalen Radius der Schlaufe nach unten begrenzt und die Ausrichtung der Schlaufe nach oben sichert. Dadurch kann das schnelle Entfalten der Schlaufe gewährleistet werden und verhindert werden, dass die Schlaufe beim Verfahren des Kolbens im Hydraulikzylinder nach unten gezogen wird.

### SCHLAUCHDICHTUNG

Eine Variante der vorstehend beschriebenen Dichtungsanordnung erhält man, wenn eine den Kolben radial, also senkrecht zu seiner Hubrichtung umgebenden Dichtmanschette, deren im abzudichtenden Spalt angeordneter Dichtabschnitt in einer Querschnittsebene durch den Kolben, die dessen Längsachse enthält betrachtet eine Schlaufe bildet und bei der beide Enden bzw. Ränder der Dichtmanschette in zwei am oder im Hydraulikzylinder eingelassenen Lagern oder in zwei am oder im im Kolben eingelassenen Lagern verankert sind, vorhanden ist, so dass eine doppellagige Dichtmanschette entsteht, wobei das nicht gelagerte, die Schlaufe bildende Mittelteil zwischen den Endabschnitten nach oben weist und eine Länge hat, die das Zweifache des maximalen Abstands zwischen Kolben und Innenwand des Hydraulikzylinders um mindestens 200%, bevorzugt 300% übersteigt, bei der aber im Gegensatz zu der vorstehend diskutierten Ausführungsform die die Dichtungswirkung hervorrufende Druckbeaufschlagung nicht durch Flüssigkeitseintritt durch einen für die Hydraulikflüssigkeit durchlässigen Abschnitt der Schlaufe bewirkt wird, sondern bei der Innenraum der Schlaufe durch Beschickung mit einem Fluid durch ein im Hydraulikzylinder oder im Kolben vorgesehenes Leitungssystem unter einen Druck gesetzt werden kann, der mindestens dem Druck der Hydraulikflüssigkeit im Spalt an der Dichtung entspricht, bevorzugt jedoch diesen Druck um 5 bis 10 % übersteigt, so dass im Inneren der Schlaufe, ein Überdruck herrscht.

Als Fluid kann auch die Hydraulikflüssigkeit selbst verwendet werden, wenn sie durch ein Leitungssystem im Kolben oder im Hydraulikzylinder ins Innere der Schlaufe geleitet wird. Es müssen allerdings insbesondere dann, wenn mit Überdruck gearbeitet werden soll, noch Mittel zur Druckerhöhung, z.B. durch einen Druckgastank oder eine Pumpe vorgesehen werden.

Bei dieser Variante kann das Verhalten der Schlaufe noch besser kontrolliert werden und die Dichtungsfunktion wird zuverlässiger gewährleistet. Dies gilt in besonderem Maße dann, wenn im Innenraum der Schläuche mit Überdruck gearbeitet wird. Allerdings müssen zusätzlich ein Leitungssystem und ggf. Mittel zur Druckerhöhung vorgesehen werden.

### DRUCKSCHLAUCH MIT DICHTSCHÜRZE

Eine weitere Möglichkeit, den Dichtungsmechanismus zu realisieren besteht darin, eine Dichtung vorzusehen, die an einem oberen Lager und einem unteren Lager, die beide in der Innenwand des Hydraulikzylinders oder beide im Kolben angeordnet sind, verankert ist und zumindest mit einem Abschnitt einen in einer umlaufenden Ausnehmung der Innenwand des Hydraulikzylinders, wenn die Lager dort angeordnet sind oder in einer Ausnehmung im Kolben, wenn die Lager dort angeordnet sind, vorgesehenen, radial um den Kolben herumlaufenden Druckschlauch überdeckt, der über eine Pumpe unter einen den an der Dichtung herrschenden Druck der Hydraulikflüssigkeit übersteigenden Druck gesetzt werden kann, so dass sich der Druckschlauch in den Spalt zwischen Hydraulikzylinder und Kolben hinein ausdehnt und die Dichtung in jeder Richtung senkrecht zur Hubrichtung an einen Kontaktpunkt mit der inneren Oberfläche des Hydraulikzylinders, wenn die Dichtschürze am Kolben verankert ist oder der äußeren Oberfläche des Kolbens, wenn die Dichtschürze am Hydraulikzylinder verankert ist, gepresst wird, wobei sich der Dichtabschnitt der Dichtung in dieser Position zumindest vom unteren Lager bis zum Kontaktpunkt erstreckt, so dass keine Hydraulikflüssigkeit austreten kann.

Der besondere Vorteil dieses Dichtungssystem besteht darin, dass durch das Vorsehen des Druckschlauchs die Dichtung bzw. der Dichtabschnitt auch in lokale Vertiefungen hineingedrückt wird und dadurch auf einfache Weise auch die sichere Abdichtung von strukturierten Oberflächen erlaubt.

Vorteilhaft ist dabei insbesondere, wenn die Verankerung der Dichtung im oberen Lager derart beweglich ausgeführt ist, dass sie die Veränderung der Weglänge vom unteren Lager über die Schlauchoberfläche zum oberen Lager, die mit der Ausdehnung des Druckschlauchs üblicherweise einher geht, zumindest teilweise kompensiert. Dies kann insbesondere dadurch erreicht werden, dass die Dichtschürze über Zugfedern im oberen Lager verankert ist.

### STUFEN-SCHIRM-DICHTUNG (BALG)

Ein Nachteil der bislang diskutierten Dichtungsanordnungen ist darin zu sehen, dass jeweils eine relativ ausgedehnte, flexible Dichtung im Bereich des Spaltes angeordnet ist, was dazu führt, dass die Bewegung dieser Dichtung beim mit dem Betrieb des Lageenergiespeichers einhergehenden Verfahren des Kolbens relativ zum Hydraulikzylinder schwierig zu kontrollieren sein kann.

Diese Problematik kann man dadurch reduzieren, dass mehrere kleinere und damit leichter kontrollierbare Dichtungen bzw. Dichtabschnitte, die miteinander verbunden sind, so dass sie einen Dichtungsbalg bilden, vorgesehen werden, welche mechanisch geführt werden. Die mechanische Führung kann dabei insbesondere an den Verbindungsstellen angreifen, beispielsweise mit einer die Verbindungsstelle übergreifenden Klammer oder mit in die Verbindungsstelle integrierten Ösen bzw. Laschen. Die mechanische Führung kann dabei z.B. durch Schleppstangen mit Endbegrenzung oder Haltescheren bzw. Scherenanker gewährleistet werden. Auch die so aufgebauten Systeme können antriebslos durch Hydraulikflüssigkeit, die in den Raum zwischen der Dichtung und ihrer Lagerung eingeleitet wird, aufgeklappt werden, es ist aber auch ein mechanischer oder hydraulischer Antrieb denkbar.

Ein Nebeneffekt dieser Anordnungen besteht darin, dass die deutlich kleineren resultierenden Dichtabschnitte zumindest im Hinblick auf die mit deren Herstellung verbundenen Kosten deutlich geringer sind.

### KLAPPEN-SCHIRM-DICHTUNG

In einer weiteren alternativen Ausgestaltung der Dichtungsanordnung ist vorgesehen, dass der Dichtabschnitt mit mindestens einem, bevorzugt seinem oberen Rand an einem starren, aber drehbar oder verschiebbar im Kolben oder, bevorzugt, in der Innenwand des Hydraulikzylinders gelagerten Dichtungsträger gelagert ist, welcher durch die Drehung oder die Verschiebung in den Spalt zwischen der Innenwand des Hydraulikzylinders und dem Kolben hinein bewegbar ist, so dass der in den Spalt hinein bewegte Dichtungsträger oder ein daran befestigtes Anbauteil den Durchfluss von Hydraulikflüssigkeit durch den Teil des Spalts, der von dem Dichtungsträger oder dem daran befestigten Anbauteil überdeckt wird, sperrt, wobei der Dichtabschnitt den zwischen dem Dichtungsträger und der Innenwand des Hydraulikylinders, wenn der Dichtungsträger im Kolben gelagert ist oder zwischen dem Dichtungsträger und dem Kolben, wenn der Dichtungsträger in der Innenwand des Hydraulikzylinders gelagert ist, verbleibenden Teil des Spalts abdichtet. Diese Anordnung hat den Vorteil, dass die Ausdehnung des Dichtabschnitts gering gehalten werden kann.

Eine vorteilhafte Ausgestaltung dieser Dichtungsanordnung sehen vor, dass der Dichtungsträger kreissegmentförmig ist und so drehbar auf Druckrollen gelagert ist, dass er auf einer Kreisbahn geführt wird, deren Mittelpunkt im abzudichtenden Spalt liegt. Auf diese Weise können Biegemomente, die auf den Dichtungsträger wirken, reduziert und beherrscht werden.

Eine zusätzliche oder alternative Weiterbildung sieht vor, dass zwischen dem Dichtungsträger und seinem Lager eine als Rollmembran ausgeführter weiterer Dichtabschnitt angeordnet ist, so dass durch den Druck der Hydraulikflüssigkeit auf den weiteren Dichtabschnitt der Dichtabschnitt angepresst wird. Auf diese Weise kann sichergestellt werden, dass der Dichtabschnitt immer eine gute Dichtwirkung entfaltet.

Für alle vorstehend diskutierten Dichtungsanordnungen, die nur auf einer Seite des Spalts, d.h. entweder am Hydraulikzylinder oder nur am Kolben gelagert sind, ist es vorteilhaft, wenn in der Innenwand des Hydraulikzylinders, falls die Dichtung am Hydraulikzylinder angeordnet ist, oder in der Außenwand des Kolbens, falls die Dichtung am Kolben angeordnet ist, eine Ausnehmung vorhanden ist, in die die Dichtung aufgenommen werden kann, wenn sich die Breite des Spalts zwischen Hydraulikzylinder und Kolben verringert. Insbesondere bei hohem Winddruck kann es dazu kommen, dass eine solche Verringerung der Spaltbreite auftritt, die auch sehr stark ausfallen kann, was zu einer starken Belastung der Dichtung führt, wenn diese nicht ausweichen kann. Durch die Bereitstellung einer Aufnahme für die Dichtung kann diese Belastung effektiv vermieden werden. Ein Mindestabstand zwischen Innenwand des Hydraulikzylinders und Außenwand des Kolbens kann durch das Vorsehen von Puffern, die zum Abfangen dieser Belastungen ausgelegt sind, an der Innenwand des Hydraulikzylinders oder der Außenwand des Kolbens gewahrt werden.

In einer besonders bevorzugten Ausgestaltung des Lageenergiespeichers ist vorgesehen, dass Zentriermittel zur Zentrierung des Kolbens in Hydraulikzylinder vorhanden sind, und zwar insbesondere solche, die den Kolben bei vollständig entladenem Lageenergiespeicher in eine Sollposition zwingen. Dies ist insbesondere dadurch möglich, dass am Boden des Hydraulikzylinders Strukturen angeordnet werden, in welche am Boden des Kolbens vorgesehene, komplementär geformte Strukturen eingreifen, zum Beispiel Dorne, die in komplementäre Trichter eingreifen oder abgeschrägte, am Rand des Bodens des Hydraulikzylinders angeordnete Zentrierblöcke, die in korrespondierende Ausnehmungen im unteren Randbereich des Kolbens eingreifen. Diese Maßnahmen gewährleisten, dass der Lageenergiespeicher in eine definierte Ausgangsposition gebracht werden kann, in der insbesondere nach dem Absenken des Kolbens kein Kontakt mit einer Hydraulikzylinderwand mehr besteht. Dies ist deshalb von wesentlicher Bedeutung, weil als Folge der mit dem Absenken einhergehenden signifikanten Druckreduktion eine etwaige Kompression von Kolben und Hydraulikzylinderwand durch die Hydraulikflüssigkeit fort fällt, was zu einer Ausdehnung des Kolbens radial nach außen und der Hydraulikzylinderwand radial nach innen führt. Beim Bestehen eines Kontakts zwischen Kolben und Hydraulikzylinderwand würde der Kolben in abgesenktem Zustand durch die Ausdehnung verschoben, was zu einer Beschädigung oder Zerstörung des Hydraulikzylinderbodens führen könnte.

Als vorteilhafte Weiterbildung eines Lageenergiespeichers hat sich darüber hinaus erwiesen, wenn als Lager für die Dichtung am Zylinder und/oder am Kolben ein umlaufender Betonring vorgesehen ist, wobei explizit darauf hingewiesen wird, dass auch ein aus Sektionen, welche gemeinsam den Kolben vollständig umlaufen, zusammengesetzter Betonring ein umlaufender Betonring im Sinne dieses Dokuments ist. Auf diese Weise wird eine besonders zuverlässige Lagerung der Dichtung erreicht.

### WANDBESCHICHTUNG

Ein wesentlicher Anteil der Probleme, eine geeignete Dichtung für einen gattungsgemäßen Lageenergiespeicher bereitzustellen basiert auf der beim Bau des Lageenergiespeichers erreichbaren Oberflächenstruktur der Innenseite des Hydraulikzylinders bzw. der Außenseite des Kolbens. Diese hat eine erhebliche Oberflächenrauigkeit, was einerseits zu starker Abnutzung der Dichtung beim Anheben und Ablassen des Kolbens führt, andererseits aber auch erschwert, das Durchsickern von Hydraulikflüssigkeit durch eine Dichtung, die naturgemäß auf den Maxima der Oberflächenstruktur aufliegt, aber gleichzeitig die Minima der Oberflächenstruktur noch verschließen muss effektiv zu verhindern.

Aufgabe einer eigenständigen Erfindung ist daher das Problem, eine Verbesserung der Wirkung von Dichtungen des Lageenergiespeichers, unabhängig von deren Aufbau zu bewirken. Diese Aufgabe wird gelöst durch einen Lageenergiespeicher mit einem Hydraulikzylinder, in dem ein Kolben zur Speicherung von Energie in Form von potentieller Energie des Kolbens angeordnet ist, wobei die Position des Kolbens relativ zur Erdoberfläche veränderbar ist, mit einer Pumpe, mit der eine Hydraulikflüssigkeit über Leitungen in den Hydraulikzylinder pumpbar ist, so dass der Kolben angehoben wird, und mit einem Generator zur Umwandlung von Strömungsenergie von beim Absinken des Kolbens aus dem Hydraulikzylinder verdrängter Hydraulikflüssigkeit in Elektrizität, wobei zwischen dem Hydraulikzylinder und dem Kolben eine Dichtung angeordnet ist.

Erfindungswesentlich für diese Erfindung ist dabei, dass die innere Wandfläche des Hydraulikzylinders und/oder die äußere Wandfläche des Kolbens zumindest in dem Höhenbereich zwischen dem Punkt, an dem die Dichtung bei vollständig entladenem Lageenergiespeicher anliegt und dem Punkt, an dem die Dichtung bei maximal geladenen Lageenergiespeicher anliegt, mit einer die Rauigkeit der Wandfläche reduzierenden Schicht verkleidet oder beschichtet sind. Beispielsweise kann als solche Schicht eine Edelstahlschicht verwendet werden.

### BOHRPFAHLWAND

Eine weitere, sowohl in Kombination mit als auch unabhängig von den anderen in diesem Dokument diskutierten Erfindungen verwendbare Erfindung besteht in einem alternativ aufgebauten, aber nach demselben Prinzip arbeitenden Lageenergie-Speicher. Die Wahl des Ortes für einen mit bergmännischen Verfahren aus dem Fels herausgearbeiteten Lageenergiespeicher, wie er der DE 10 2010 034 757 B4 zu entnehmen ist, ist nämlich durch geologische Gegebenheiten eingeschränkt. Es ist zwingend erforderlich, dass das Gestein, aus dem der Hydraulikzylinder durch Ausschneiden bzw. Abtrennen des anzuhebenden Kolbens herausgearbeitet wird, den Durchtritt der Hydraulikflüssigkeit auch dann, wenn sie unter sehr hohem Druck steht, sicher vermeidet.

Daher ist die Aufgabe dieser Erfindung, einen alternativ aufgebauten Lageenergiespeicher bereitzustellen, dessen Standort weniger hohen Anforderungen genügen muss, bei dem aber trotzdem durch den Aufbau des Hydraulikzylinders sichergestellt ist, dass der Durchtritt der Hydraulikflüssigkeit auch dann, wenn sie unter sehr hohem Druck steht, sicher vermieden wird.

Diese Aufgabe wird gelöst durch einen Lageenergiespeicher mit einem Hydraulikzylinder, in dem ein Kolben zur Speicherung von Energie in Form von potentieller Energie des Kolbens angeordnet ist, wobei die Position des Kolbens relativ zur Erdoberfläche veränderbar ist, mit einer Pumpe, mit der eine Hydraulikflüssigkeit über Leitungen in den Hydraulikzylinder pumpbar ist, so dass der Kolben angehoben wird, und mit einem Generator zur Umwandlung von Strömungsenergie von beim Absinken des Kolbens aus dem Hydraulikzylinder verdrängter Hydraulikflüssigkeit in Elektrizität, wobei zwischen dem Hydraulikzylinder und dem Kolben eine Dichtung angeordnet ist.

Erfindungswesentlich für diese Erfindung ist dabei, dass die Wandung des Hydraulikzylinders aus Bohrpfählen aus Beton gebildet ist, wobei auf der Innenseite des Hydraulikzylinders Abdicht-Gewebe-Matten aus einem gegenüber dem Durchtritt von Hydraulikflüssigkeit dichten Material einander überlappend angeordnet sind, wobei jede Abdicht-Gewebe-Matte an einem Bohrpfahl verankert ist. Insbesondere können die Abdicht-Gewebematten einander an Sollbruch-Fugen überlappen.

Unter einem Bohrpfahl im Sinne dieser Beschreibung und der Ansprüche ist auch ein elliptisches oder quaderförmiges Wandsegment zu verstehen, das in einen in den Untergrund z.B. durch Einfräsen oder mit einer Bandsäge eingebrachten Schlitz eingegossen wird.

Auf den ersten Blick scheint die Realisierung des Hydraulikzylinders durch Bohrpfähle problematisch zu sein, denn ein solcher Aufbau des Hydraulikzylinders ist zwar technisch gut beherrschbar, da die einzelnen Bohrpfähle aber bei hohem Innendruck auseinandergedrückt werden könnten besteht das Risiko, dass Fugen entstehen, durch die dann Hydraulikflüssigkeit in die Umgebung entweichen könnte. Durch an Bohrpfählen verankerte Matten aus Abdicht-Gewebe, die einander an den Sollbruchstellen, d.h. an den Stellen, an denen das Auftreten von solchen Fugen am wahrscheinlichsten ist, überlappen, kann dieses Problem aber entschärft werden, da diese Matten aus Abdicht-Gewebe dann ebenfalls mit demselben hohen Innendruck aufeinander gepresst werden.

In einer bevorzugten Ausgestaltung dieser Erfindung sind die zwischen den einzelnen Bohrpfählen bestehenden Zwickel mit Spritzbeton gefüllt, so dass die Matten aus Abdicht-Gewebeauf einer glatten Oberfläche aufliegen. Dies reduziert nicht nur die Belastung der Matten aus Abdicht-Gewebe bei Druckänderungen, sondern kann darüber hinaus auch dem Entstehen von Fugen zwischen den einzelnen Bohrpfählen entgegenwirken.

Vorteilhaft ist es ferner, wenn die einander zugewandten Oberflächen von zwei benachbarten Bohrpfählen derart gestaltet sind, dass sie passgenau ineinander greifen. Dies kann insbesondere dadurch erreicht werden, dass ein Bohrpfahl im Querschnitt senkrecht zur Verlaufsrichtung des Bohrpfahls gesehen einen konvexen Abschnitt, der zum Beispiel ein durch einen Abschnitt einer kreisförmigen Querschnittsfläche eines zylindrischen Bohrpfahls gebildet werden kann, aufweist und ein benachbarter Bohrpfahl im Querschnitt senkrecht zur Verlaufsrichtung des Bohrpfahls gesehen einen konkaven Abschnitt aufweist, dessen Geometrie an den konvexen Abschnitt des Nachbarbohrpfahls angepasst ist.

Die Wand kann somit durch Bohrpfähle einer ersten Art und Bohrpfähle einer zweiten Art gebildet werden, die so angeordnet sind, dass die zu einem gegebenen Bohrpfahl benachbarten Bohrpfähle jeweils Bohrpfähle der anderen Art sind. Z.B. können die Bohrpfähle der ersten Art einen kreisförmigen Querschnitt aufweisen, während der Querschnitt der Bohrpfähle der zweiten Art kreisförmig mit an den den benachbarten Bohrpfählen der ersten Art zugewandten Seiten angeordneten konkaven Ausnehmungen, deren Krümmung an die Krümmung des Querschnitts der Bohrpfähle der ersten Art entspricht ist. Bei dieser Ausgestaltung ergibt sich, dass die benachbarten Bohrpfähle jeweils flächig aneinander angrenzen und sich dadurch gegenseitig stabilisieren. Eine weitere Stabilisierung wird erreicht, wenn die Zwickel zwischen benachbarten Bohrpfählen 212,213 mit Spritzbeton ausgespitzt sind.

Um die Dichtigkeit des Hydraulikzylinders auch bei hohem Druck der Hydraulikflüssigkeit, der trotz der vorstehend beschriebenen Maßnahmen ein Restrisiko zu einer Riss- oder Spaltbildung und somit zur Undichtigkeit der so gebildeten Wand des Hydraulikzylinders birgt, gewährleisten zu können, können zusätzlich jeweils an den Bohrpfählen der ersten Art und/oder der zweiten Art Abdicht-Gewebe-Matten aus einem gegenüber dem Durchtritt von Hydraulikflüssigkeit dichten Material einander überlappend angeordnet sein, wobei jede Abdicht-Gewebe-Matte an einem Bohrpfahl verankert ist. Die überlappenden Abschnitte benachbarter Abdicht-Gewebe-Matten werden durch den Druck der Hydraulikflüssigkeit aufeinander gepresst und dadurch das Durchsickern von Hydraulikflüssigkeit sicher vermieden.

### TOPF-KOLBEN

Insbesondere dann, wenn der Kolben des Lageenergiespeichers nicht "aus dem Vollen" aus einem Gesteinsblock geeigneter Größe herausgearbeitet werden kann, muss ein Weg zur Bereitstellung eines geeigneten Kolbens gefunden werden. Da, wie bereits erwähnt, für die angestrebten Speichermengen die radialen Dimensionen der Kolben ebenso wie ihre axialen Dimensionen hundert Meter zum Teil deutlich übersteigen werden, ist eine wichtige Bedingung, dass der Kolben vor Ort hergestellt werden kann. Dabei ist das Material, aus dem der Kolben besteht, insbesondere seine Dichte, von entscheidender Bedeutung für die Menge der Energie, die im Energiespeicher gespeichert werden kann.

Daher ist die Aufgabe dieser Erfindung, einen alternativ aufgebauten Kolben für Lageenergiespeicher bereitzustellen, der insbesondere ebenfalls dazu beiträgt, dass der Standort des Lageenergiespeichers weniger hohen Anforderungen genügen muss, bei dem aber trotzdem eine Herstellbarkeit vor Ort gegeben ist und bei dem zudem durch den Aufbau des Kolbens des Hydraulikzylinders sichergestellt werden kann, dass dieser eine möglichst hohe Dichte aufweist, was dazu führt, dass dieselbe Energiemenge in einem Speicher mit geringerer räumlicher Ausdehnung gespeichert werden kann.

Diese Aufgabe wird gelöst durch einen Lageenergiespeicher mit einem Hydraulikzylinder, in dem ein Kolben zur Speicherung von Energie in Form von potentieller Energie des Kolbens angeordnet ist, wobei die Position des Kolbens relativ zur Erdoberfläche veränderbar ist, mit einer Pumpe, mit der eine Hydraulikflüssigkeit über Leitungen in den Hydraulikzylinder pumpbar ist, so dass der Kolben angehoben wird, und mit einem Generator zur Umwandlung von Strömungsenergie von beim Absinken des Kolbens aus dem Hydraulikzylinder verdrängter Hydraulikflüssigkeit in Elektrizität, wobei zwischen dem Hydraulikzylinder und dem Kolben eine Dichtung angeordnet ist.

Erfindungswesentlich für diese Erfindung ist dabei, dass der Kolben durch einen Topf gebildet wird, der mit einem Material mit einer hohen Dichte gefüllt ist.

Als hohe Dichte wird dabei eine Dichte > 2000 kg/m³ angesehen, wobei eine möglichst hohe Dichte anzustreben ist, um die in einem Lageenergiespeicher gegebener Größe speicherbare Energiemenge zu maximieren. Ein bevorzugtes Füllmaterial sind z.B. Schlacken, wie sie bei der Stahlherstellung als Restprodukt übrig bleiben, da deren Dichte 3500kg/m³ erreichen und sogar überschreiten kann.

Eine weitere Steigerung der Masse des gefüllten Topfes und somit auch der in einem Lageenergiespeicher mit gegebener Geometrie des Hydraulikzylinders speicherbaren Energie ergibt sich, wenn der als Kolben dienende Topf so befüllt ist, dass im Bereich der Mittelachse des Topfes der Topf über seinen oberen Rand hinaus mit Füllmaterial angefüllt ist, so dass sich die Oberfläche des Kolbens bei vollständig entleertem Lageenergiespeicher über das Niveau des Erdbodens erhebt. Mit anderen Worten ist der Topf so befüllt, dass sich in diesem Zustand ein Berg von Füllstoff über den Erdboden erhebt, wie es z.B. ein auf dem Boden aufgeschütteter Sandberg tut, der stabil liegt, solange nicht ein kritischer Steigungswinkel zwischen dem Erdboden und der Geraden, die sich durch Verbindung eines Randpunkts des Sandbergs und von dessen höchsten Punkt ergibt, überschritten wird. Die so definierten kritischen Steigungswinkel für den Füllstoffberg liegen, unter Berücksichtigung möglicher Erschütterungen bei der Bewegung des Kolbens, bei ca. 30°.

Dabei ist es besonders bevorzugt, wenn der Topf als doppelwandiger Topf ausgestaltet wird. Insbesondere kann der Bereich zwischen den Wänden mit Beton gefüllt sein.

Der Boden des Topfes kann durch eine Schale gebildet werden, die mit einer Betonschicht ausgegossen ist, die stark genug ist, um bei abgepumpter Hydraulikflüssigkeit auf den Lagerblöcken aufsitzend das Füllmaterial zu unterstützen ohne zu brechen oder zu reißen. Die Wand kann dann doppelwandig mit äußerer Wand, innerer Wand und zwischen äußerer, an der Schale ansetzender Wand und innerer Wand angeordneter, auf der Betonschicht des Bodens aufsetzender Betonschicht ausgeführt werden. Äußere Wand, innere Wand und Schale können dabei z.B. aus Beton-Fertigelementen oder Stahl aufgebaut sein.

Dieser Aufbau macht es möglich, den Kolben sequentiell vor Ort aufzubauen. Nachdem die Trägerblöcke am Boden des Hydraulikzylinders gegossen worden sind, wird die Schale installiert, z.B. aus Fertigteilen zusammengesetzt oder am Stück gegossen. Dann kann jeweils ein Ring aus (Beton-) Fertigteilen gesetzt werden, um die äußere Wand und die innere Wand ein Stück zu erhöhen. Die aus diesen Ringen gebildete Form bzw. Schalung kann dann mit Beton ausgegossen werden, wobei bevorzugt ein Anschluss zur darunter liegenden Betonschicht, ggf. unter Verwendung von Stahl-Armierungen, hergestellt wird. Der so hergestellte Abschnitt des Topfes kann dann bereits mit Füllmaterial aufgefüllt werden, so dass die Errichtung des nächsten Abschnitt der Wand des Topfes ausgehend von diesem Niveau erfolgen kann und nicht in immer größerer Höhe relativ zum Boden des Topfes erfolgen muss.

Ein Lageenergiespeicher mit einem derartigen Kolben kann sequentiell und vor Ort aufgebaut werden. Dazu wird zumindest das Innenvolumen des Hydraulikzylinders ausgeschachtet, wobei an Standorten, an denen die Wände nicht hinreichend stabil sind, um den Hydraulikzylinder zu bilden, zuvor die Wand des Hydraulikzylinders, z.B. in der oben beschriebenen Bohrpfahl-Bauweise, errichtet werden muss. Am Boden des Innenvolumens werden dann Lagerpunkte und Zentriervorrichtungen gebaut, auf denen abgestützt dann der Topf sequentiell errichtet und bevorzugt auch sequentiell befüllt wird, wie weiter unten exemplarisch beschrieben ist.

### WINDDRUCK-KOMPENSATION

Ein bereits weiter oben kurz angesprochenes Problem von gattungsgemäßen Lageenergierspeichern besteht darin, dass sie empfindlich gegen Verkippung sind. Wegen des angestrebten Hubwegs von oftmals mehreren hundert Metern kann schon eine geringe Verkippung des Kolbens diesen im Hydraulikzylinder verkeilen, selbst wenn man den Kolben maximal bis zu seiner halben Höhe ausfährt. Auf den ausgefahrenen Kolben wirkt aber ein erheblicher, zudem oftmals mit steigender Höhe über dem Erdboden ansteigender Winddruck, der eine solche Verkippung bewirken kann.

Daraus ergibt sich das Problem, einen gattungsgemäßen Lageenergiespeicher mit verringerter Empfindlichkeit gegen Winddruck bereitzustellen.

Diese Aufgabe wird gelöst durch einen Lageenergiespeicher mit einem Hydraulikzylinder, in dem ein Kolben zur Speicherung von Energie in Form von potentieller Energie des Kolbens angeordnet ist, wobei die Position des Kolbens relativ zur Erdoberfläche veränderbar ist, mit einer Pumpe, mit der eine Hydraulikflüssigkeit über Leitungen in den Hydraulikzylinder pumpbar ist, so dass der Kolben angehoben wird, und mit einem Generator zur Umwandlung von Strömungsenergie von beim Absinken des Kolbens aus dem Hydraulikzylinder verdrängter Hydraulikflüssigkeit in Elektrizität, wobei zwischen dem Hydraulikzylinder und dem Kolben eine Dichtung angeordnet ist.

Erfindungswesentlich für diese Erfindung ist dabei, dass an der Oberseite, d.h. der von der Hydraulikflüssigkeit abgewandten Seite des Kolbens eine ringförmige Anordnung von mehreren Ballasttanks konzentrisch zur Zentralachse des Kolbens vorgesehen ist, wobei der Füllstand der Ballasttanks voneinander unabhängig regelbar ist. Insbesondere ist bevorzugt, wenn diese ringförmige Anordnung von Ballasttanks einen maximierten radialen Abstand zur Zentralachse des Kolbens aufweist. Dadurch, dass die Tanks, die an der dem Wind zugewandten Seite des Kolbens angeordnet sind, mit Flüssigkeit, z.B. mit der Hydraulikflüssigkeit, befüllt werden, kann das durch den Winddruck hervorgerufene Kippmoment ausgeglichen und ein Verkippen des Kolbens sicher verhindert werden. Da der Füllstand der Tanks an die Windgeschwindigkeit anpassbar ist, gilt dies für alle Windgeschwindigkeiten.

Trotz einer solchen, auf den jeweils herrschenden Winddruck angepassten Trimmung, die den Kolben in der Senkrechten hält, bleibt allerdings anzumerken, dass der Kolben dennoch mit der Windkraft gegen die lee-seitige Dichtung gedrückt wird. Daher ist in einer bevorzugten Weiterbildung der Erfindung ein oberhalb der Dichtung angeordneter Poller-Ring zur Aufnahme dieser Kräfte vorgesehen.

Es wird explizit darauf hingewiesen, dass die vorstehend beschriebenen unabhängigen Erfindungen miteinander kombinierbar sind.

Die Erfindungen werden nachfolgend anhand von Figuren näher erläutert. Es zeigen:
- Fig. 1a:: Eine schematische Darstellung eines Querschnitts durch einen Lageenergie-Speicher,
- Fig. 1b:: einen Grundriss des Hubzylinders aus Fig. 1a,
- Fig. 1c:: eine Ausschnittsvergrößerung des oberen Randbereichs des Hubzylinders in fast eingefahrenem Zustand, d.h. bei entladenem Lageenergiespeicher,
- Fig. 2a:: den Aufbau von Sektionen einer erfindungsgemäßen Dichtung in einem Querschnitt mit Stoßverbindung,
- Fig. 2b:: einen Längsschnitt durch eine Trägerstruktur einer erfindungsgemäßen Dichtung,
- Fig. 2c:: eine Aufsicht auf die Trägerstruktur der Dichtung,
- Fig.2d:: eine schematische Ausführung des Wulstknotens einer solchen Dichtung,
- Fig. 2e:: eine Ansicht des fertiggestellten Wulstknotens der Dichtung,
- Fig.3a:: eine erste Variante einer Verankerung für die Dichtung, ausgeführt als Kasten mit Verschraubung,
- Fig.3b:: eine zweite Variante einer Verankerung für die Dichtung, ausgeführt als Kasten mit Verschraubung,
- Fig.3c:: eine dritte Variante einer Verankerung für die Dichtung, ausgeführt als Kasten mit Blockierung,
- Fig.3d:: eine vierte Variante einer Verankerung für die Dichtung, ausgeführt als Kasten mit Blockierung,
- Fig.3e:: eine fünfte Variante einer Verankerung für die Dichtung, ausgeführt als Klemm-Block,
- Fig.3f:: eine sechste Variante einer Verankerung für die Dichtung, ausgeführt als Klemm-Block,
- Fig.3g:: eine siebte Variante einer Verankerung für die Dichtung, ausgeführt als Klemm-Block
- Fig.3h:: eine achte Variante einer Verankerung für die Dichtung, ausgeführt als Klemm-Block
- Fig.4a:: eine Querschnittsdarstellung einer ersten Dichtungsanordnung, ausgeführt als Rollmembran,
- Fig.4b:: eine schematische Darstellung der Lage der Dichtungsanordnung aus Figur 4a bei vollständig entladenem Lageenergiespeicher,
- Fig.4c:: eine schematische Darstellung der Lage der Dichtungsanordnung aus Figur 4a bei halb geladenem Lageenergiespeicher,
- Fig.4d:: eine schematische Darstellung der Lage der Dichtungsanordnung aus Figur 4a bei vollständig geladenem Lageenergiespeicher,
- Fig.5a:: eine Querschnittsdarstellung einer zweiten Dichtungsanordnung mit einer schirmartigen Dichtung bei maximaler Spaltbreite,
- Fig.5b:: die Dichtungsanordnung gemäß Figur 5a bei maximaler Spaltbreite,
- Fig.5c:: die Dichtungsanordnung gemäß Figur 5a bei minimaler Spaltbreite,
- Fig.6a:: eine Querschnittsdarstellung einer dritten Dichtungsanordnung mit einer schlauchartigen Dichtung bei maximaler Spaltbreite,
- Fig.6b:: die Dichtungsanordnung gemäß Figur 6a bei minimaler Spaltbreite,
- Fig.7a:: eine Querschnittsdarstellung einer zweistufigen, auf einer Kombination der zweiten und dritten Dichtungsanordnung aus Figur 5a und 6a basierenden, Dichtungsanordnung, die aus zwei schlauchartigen Dichtungen zusammengesetzt ist bei maximaler Spaltbreite,
- Fig.7b:: die Dichtungsanordnung gemäß Figur 7a bei minimaler Spaltbreite,
- Fig.8a:: eine Querschnittsdarstellung einer vierten Dichtungsanordnung mit Druckschlauch und Dichtschürze, bei maximaler Spaltbreite
- Fig.8b:: die Dichtungsanordnung gemäß Figur 8a bei minimaler Spaltbreite,
- Fig.9a:: eine Querschnittsdarstellung einer fünften Dichtungsanordnung, basierend auf einer als Balg ausgeführten Dichtung mit einer ersten mechanischen Positioniervorrichtung bei maximaler Spaltbreite,
- Fig.9b:: die Dichtungsanordnung gemäß Figur 9a bei minimaler Spaltbreite,
- Fig.10a:: eine Variante der Dichtungsanordnung aus Figur 9a mit einer alternativen mechanischen Positioniervorrichtung bei maximaler Spaltbreite,
- Fig.10b:: die Dichtungsanordnung gemäß Figur 10a bei minimaler Spaltbreite,
- Fig.11:: eine Detaildarstellung zur Erläuterung des Aufbaus des Balgs in Figuren 9 und 10,
- Fig.12a:: eine Querschnittsdarstellung einer sechsten Dichtungsanordnung, basierend auf einem klappbaren Schirm, bei maximaler Spaltbreite
- Fig.12b:: die Dichtungsanordnung gemäß Figur 12a bei minimaler Spaltbreite,
- Fig.13a:: eine Querschnittsdarstellung einer siebten Dichtungsanordnung,
- Fig.13b:: die Dichtungsanordnung gemäß Figur 16a bei maximaler Spaltbreite,
- Fig.14a:: eine Querschnittsdarstellung einer achten Dichtungsanordnung,
- Fig.14b:: die Dichtungsanordnung gemäß Figur 17a bei maximaler Spaltbreite,
- Fig.15a:: eine Querschnittsdarstellung einer neunten Dichtungsanordnung,
- Fig.15b:: die Dichtungsanordnung gemäß Figur 18a bei maximaler Spaltbreite,
- Fig.16a:: einen Grundriss eines Beton-Außenrings mit Ankerschienen und Dichtkasten-Unterteil,
- Fig.16b:: einen Vertikalschnitt eines ersten Montageabschnitts für eine Dichtungsanordnung gemäß Figur 12a mit installiertem Dichtkasten-Unterteil, montiertem Dichtungsträger und während der Dichtschirm-Montage,
- Fig.16c:: einen Vertikalschnitt eines zweiten Montageabschnitts für eine Dichtungsanordnung gemäß Figur 12b nach Installation eines Dichtungskasten-Mittelteils und während der Rollmembran-Montage,
- Fig. 16d:: einen Vertikalschnitt mit komplettem Dichtungskasten, Klappe, Schirmdichtung, Rollmembran, Spannschrauben-System und Montage der Druckverankerung gegen den Betonring,
- Fig.17a:: den Aufbau eines Klappensegments für eine Dichtungsanordnung gemäß Figur 12a in einem Blick auf die Klappe von der Kolbenseite,
- Fig.17b:: einen Schnitt durch einen Dichtungsträger, des Klappensegments aus Figur 17a,
- Fig.17c:: die Ausbildung des Drehgelenks des Klappensegments, und
- Fig. 17d:: die Ausbildung des Dichtungsblocks an den Stoßfugen einzelner Klappensegmente.

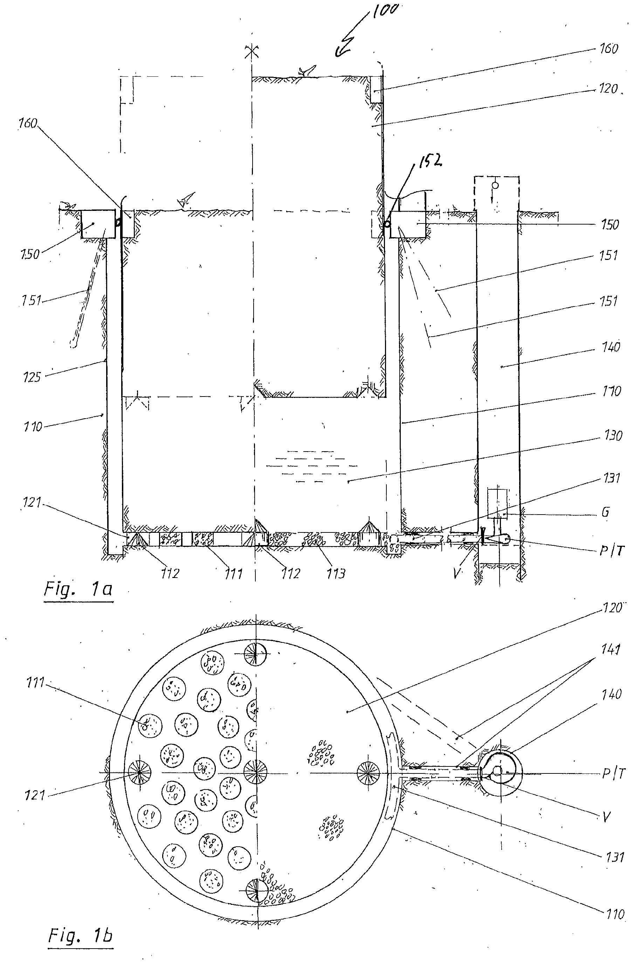

Figur 1a zeigt eine schematische Darstellung einer ersten Ausführungsform eines Lageenergiespeichers 100 mit Hydraulikzylinder 110 und Kolben 120 im Querschnitt, wobei die linke Hälfte der Figur 1a den Lageenergiespeicher 100 im vollständig von Energie entladenen Zustand, d.h. mit abgesenktem Kolben 120 und die rechte Hälfte der Figur 1a den Lageenergiespeicher 100 im maximal mit Energie geladenen Zustand, d.h. mit durch in den Hydraulikzylinder 110 gepumpte Hydraulikflüssigkeit 130 angehobenen Kolben 120 zeigt.

Die bevorzugte Geometrie des Lageenergiespeichers 100, wie er in Figur 1a dargestellt ist die Folgende: Der zylindrische Kolben 120 hat bei einem Radius r bevorzugt eine Höhe von 2,2r. Um das Risiko eines Verkippens des Kolbens 120 bei Seitenwind zu verringern, wird der Kolben maximal um eine Distanz r angehoben. Um wesentliche Parameter des Betriebs einer solchen Anlage zu verdeutlichen, werden in Tabelle 1 für eine Reihe von Radien r die entsprechende Höhe h, das resultierende Volumen V und die resultierende Masse m des Kolbens bei einer angenommenen Dichte von 2,6t/m³, die bei einem Maximalhub vom h speicherbare Energie und der geschätzte Druck p an der Dichtung bei Verwendung der Hydraulikflüssigkeit Wasser angegeben:

**Tabelle 1**

| | | | | |
|---|---|---|---|---|
| r [m] | 62,5 | 125 | 250 | 500 |
| h [m] | 138 | 275 | 550 | 1100 |
| V [m³] | 1694000 | 13499000 | 108000000 | 864000000 |
| m [t] | 4404400 | 35097400 | 280800000 | 2246400000 |
| E [GWh] | 0,6 | 9,6 | 149,0 | 2376,0 |
| p [bar] | 29 | 58 | 128 | 230 |

Am Boden des Hydraulikzylinders 110 sind Lagerblöcke 111 und Zentrierdornen 112 angeordnet. Die Zentrierdornen 112 greifen, wenn der Kolben 120 im vollständig entladenen Zustand des Lageenergiespeichers 100 abgesenkt ist, so dass er auf den Lagerblöcken 111 ruht, in trichterförmige Öffnungen 121 ein. Dabei sollten bevorzugt mindestens drei Zentrierdornen 112 und trichterförmige Öffnungen 121 an Positionen vorhanden sein, die nicht durch Drehung um die Symmetrieachse des Kolbens 120 ineinander überführbar sind. Durch diesen Eingriff wird sichergestellt, dass der Kolben 120 immer in derselben, definierten Orientierung im Hydraulikzylinder 110 bleibt und eine Drehung des Kolbens im Hydraulikzylinder 110 vermieden.

Durch die Lagerung des Kolbens 120 auf Lagerblöcken 111 im völlig entladenen Zustand des Lageenergiespeichers 100 wird das Anheben des Kolbens 120 durch Einpumpen der Hydraulikflüssigkeit 130 erleichtert, da diese an der gesamten verbleibenden Unterseite des Kolbens 120 angreifen kann. Die Gestaltung der Unterseite des Kolbens 120 mit den trichterförmigen Öffnungen 121 und den Lagerpunkten 122, an denen der Kolben 120 bei völlig entladenem Lageenergiespeicher 100 auf den Lagerblöcken 111 aufliegt, ist besonders gut in Figur 1b zu erkennen.

Skizzenhaft dargestellt ist in Figur 1a ferner ein Transport-, Versorgungs- und Turbinenschacht 140, der parallel zur Hubrichtung des Kolbens 120 des Lageenergiespeichers 100 verläuft und eine Versorgungsleitung 141 zum Boden des Hydraulikzylinders 110, durch die der Zu- und Abfluss von Hydraulikflüssigkeit 130 in den Innenraum des Hydraulikzylinders 120 erfolgen kann. Bei abgepumpter Hydraulikflüssigkeit 130 und in der Bauphase des Lageenergiespeichers 100 ist durch Transport-, Versorgungs- und Turbinenschacht 140 und Versorgungsleitung 141 der Zugang zum Innenraum des Hydraulikzylinders 110 im Bereich von dessen Boden möglich.

In der Figur 1a sind ferner schematisch Pumpe P, und Generator G und Ventile bzw. Schleusen V, die für eine Änderung des Ladezustands des Lageenergiespeichers geöffnet werden und ansonsten geschlossen bleiben, um einen gegebenen Füllstand von Hydraulikflüssigkeit zu halten, in der Versorgungsleitung 141 angeordnet dargestellt, diese können aber auch anders angeordnet sein. Nicht dargestellt ist ein Vorratsreservoir für die Hydraulikflüssigkeit 130.

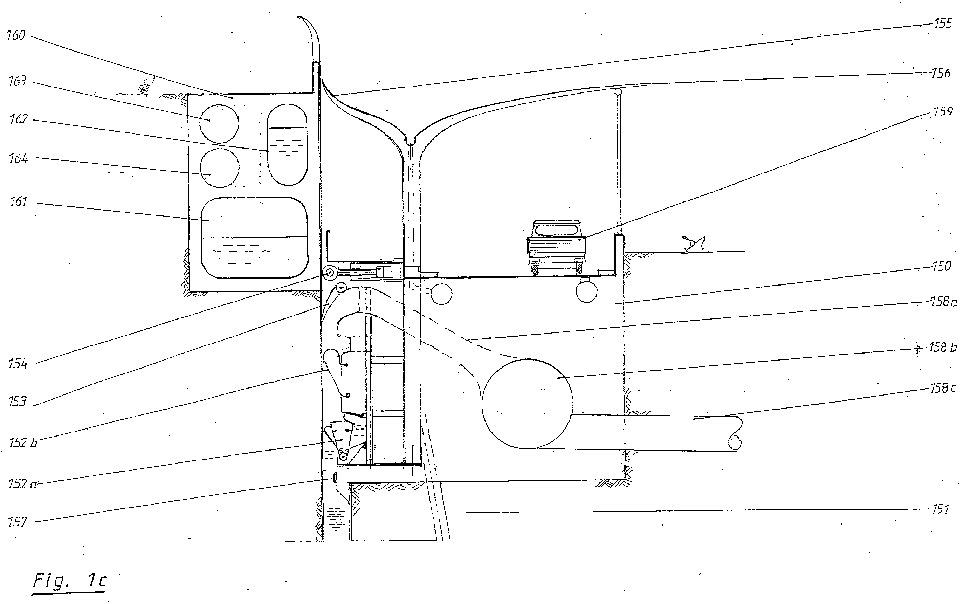

Bei dem in Figur 1a dargestellten Lageenergiespeicher 100 ist der obere Rand des Hydraulikzylinders 110 als umlaufender Betonring 150 ausgeführt, der über Zuganker 151 gegen den die Zylinderwand 125 des Hydraulikzylinders 110 bildenden Felsens verspannt ist. Wie in der vergrößerten Darstellung gemäß Figur 1c, die den Zustand bei fast vollständig entladenem Lageenergiespeicher 100 zeigt, erkennbar ist, kann der Betonring 150 als Lager für mehrere Dichtungsanordnungen 152a, 152b, die in der Darstellung der Figur 1a schematisch zu der Dichtung 152 zusammengefasst dargestellt sind, und ein Havarie-System 153 sowie eine Positionierungs-Anlage 154 dienen und ein Rohr- und Ablaufsystem 158a-c aufnehmen, in das etwaig durch die Dichtung hindurch sickernde Hydraulikflüssigkeit ablaufen oder abgesaugt werden kann.

Ferner kann der Betonring 150, wie in Figur 1c dargestellt ist, ein umlaufendes Schutzdach 156 mit einem Abstreifer 155 tragen, die verhindern, dass Gegenstände oder am ausgefahrenen Kolben 120 herablaufendes Regenwasser in den Spalt zwischen der Innenwand des Hydraulikzylinders 110 und dem Kolben 120 gelangen können. Eine weitere Funktion des umlaufenden Betonrings 150 ist, dass er, wie durch das skizzierte Werkstattfahrzeug 159 angedeutet ist, als Betriebsstraße dienen kann.

Zweckmäßigerweise ist am Betonring ferner ein umlaufender Puffer 157 angeordnet.

Ebenfalls besonders gut in Figur 1c zu erkennen ist, dass im oberen Randbereich des Kolbens 120 des Lageenergiespeichers 100 ein umlaufender Betonring 160 vorgesehen ist, der insbesondere Tanks 161 zur Trimmung gegen Winddruck und Tanks 162 zur Trimmung des Schwerpunkts des Hydraulikzylinders aufweist, die über die Rohrsysteme 163,164 unter Verwendung nicht dargestellter Pumpen befüllt und entleert werden können.

An dem über den Erdboden ausgefahrenen Teil des Kolbens 110 greift der Wind an. Die resultierende Windangriffs-Kraft führt zu einem Kippmoment, das durch eine Befüllung von den auf der dem Wind zugewandten Seite des Kolbens 120 angeordneten Tanks kompensiert werden kann, was aber zu einem Querversatz des Kolbens 120 in Lee-Richtung führt, so dass die Symmetrieachsen von Hydraulikzylinder 110 und Kolben 120 nicht mehr zusammenfallen und es somit zu einer Vergrößerung des Spalts zwischen Kolben 120 und Hydraulikzylinder 110 auf der Luv-Seite und einer Verringerung des Spalts zwischen Kolben 120 und Hydraulikzylinder 110 auf der Lee-Seite kommt, die natürlich von der Dichtung kompensiert werden muss.

Einen abgeschätzten Überblick über die nötigen Tankquerschnittsflächen in Abhängigkeit vom Radius des Kolbens unter der Annahme, dass eine Windgeschwindigkeit von (bis zu) 180 km/h kompensierbar sein soll, bietet die Tabelle 2.

**Tabelle 2**

| | | | | |
|---|---|---|---|---|
| r [m] | 62,5 | 125 | 250 | 500 |
| Windangriffsfläche [m²] | 7812 | 31250 | 125000 | 500000 |
| Winddruck [kN] | 11875 | 47500 | 190000 | 760000 |
| Kipp-Moment [kNm] | 520·10³ | 416·104 | 333·10⁵ | 266·10⁶ |
| Tank-Querschnittsfläche [m²] | 6 | 12 | 24 | 48 |

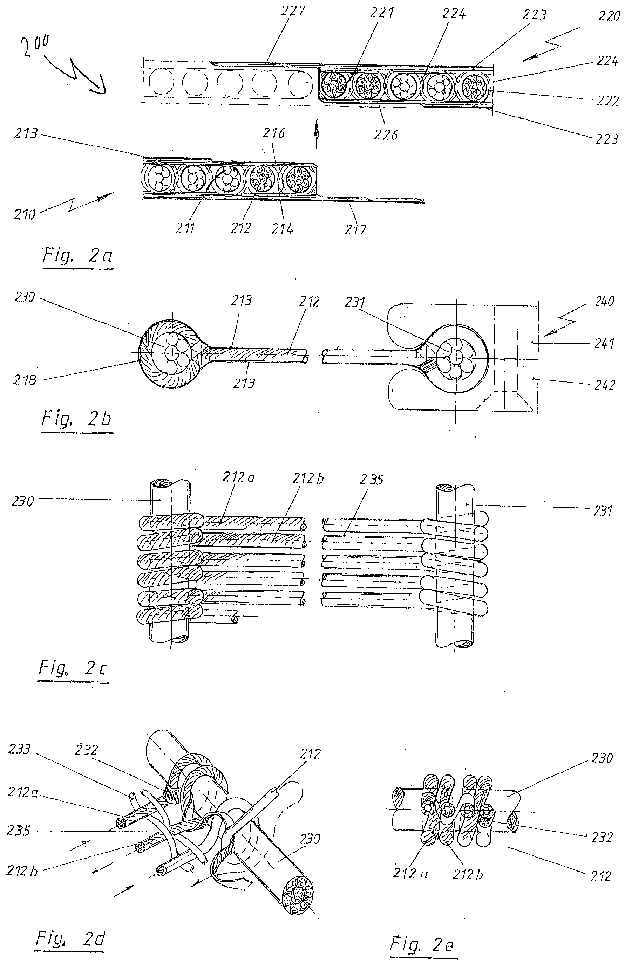

Figur 2a zeigt den Aufbau von Sektionen 210,220 einer erfindungsgemäß aufgebauten, in diesem Beispiel aus solchen Sektionen 210,220 zusammengesetzten Dichtung 200 in einem Querschnitt entlang einer Richtung, die bei installierter Dichtung 200 etwa einer Tangente zum Kolben 120 entspricht oder parallel zu dieser Richtung verläuft. Grundsätzlich kann die Dichtung aber auch an einem Stück gefertigt werden.

Man erkennt als flexible Trägerstruktur aus Faserbündeln 211,221 geflochtene Stahlseile 212,222, wobei die Stahlseile 212 der Sektion 210 im Wesentlichen nebeneinander verlaufen und die Stahlseile 222 der Sektion 220 im Wesentlichen nebeneinander verlaufen. Die Stahlseile 212 bzw. 222 können jeweils separate Seile sein, sie können aber auch Abschnitte eines oder einiger weniger Seile sein, die an den Enden der Dichtung umgelenkt werden, wie weiter unten anhand der Figuren 2c bis 2e genauer erläutert wird.

Bei installierter Dichtung 200 verläuft zumindest eine Komponente der Erstreckungsrichtung der Trägerstruktur im Wesentlichen radial zum Kolben 120 bzw. radial zur Mittelachse des Hydraulikzylinders.

Die durch die Stahlseile 212,222 gebildete flexible Trägerstruktur ist in diesem Ausführungsbeispiel beidseitig mit fluiddichtem Gewebe 213,223 das die fluiddichte Schicht bildet, beschichtet. Eine weitere Verbesserung der Stabilität der Dichtung 200 wird dadurch erzielt, dass die Zwischenräume 214,224 zwischen den Stahlseilen 212,222, die die flexible Trägerstruktur bilden, mit Kautschuk, Gummi, Kunststoff oder einem anderen elastischen und fluiddischten Material gefüllt sind.

Um die Sektionen 210,220 miteinander verbinden zu können, weist die Sektion 210 auf ihrer oberen Seite einen Abschnitt 216 auf, in dem die fluiddichte Schicht dünner ausgeführt ist und auf ihrer unteren Seite einen die flexible Trägerstruktur nach rechts hin überragenden Abschnitt 217 fluiddichten Gewebes auf, während die Sektion 220 auf ihrer unteren Seite einen Abschnitt 226 aufweist, in dem die fluiddichte Schicht dünner ausgeführt ist und auf ihrer oberen Seite einen die flexible Trägerstruktur nach links hin überragenden Abschnitt 227 fluiddichten Gewebes besitzt. Zur Verbindung der Sektionen 210,220 werden zunächst eine Stoßüberlappungen zwischen den Abschnitten 216 und 227 sowie 217 und 226 hergestellt und dann diese Abschnitte jeweils miteinander schub- und druckfest verklebt und/oder verschweißt. Eine Länge der Abschnitte von ca. 5 bis 10 cm hat sich dabei als zweckmäßig erwiesen.

Figur 2b zeigt einen Längsschnitt einer erfindungsgemäßen Dichtung 200, wie sie in Figur 2a abgebildet ist, entlang eines der Stahlseile 212, die die flexible Trägerstruktur bilden. Außer dem Stahlseil 212 ist auch dessen beidseitige Beschichtung mit fluiddichtem Gewebe 213 zu erkennen. Wie man in Figur 2b erkennt, ist es zweckmäßig, an den Enden der Trägerstruktur jeweils Schlaufen 218,219 vorzusehen, die beispielsweise durch Herumwickeln um Wulstseile 230,231 gebildet werden können. Die daraus resultierende Vergrößerung des Durchmessers der flexiblen Trägerstruktur an ihren Endabschnitten kann vorteilhaft für ihre Verankerung am Kolben 120 oder Hydraulikzylinder 110 genutzt werden, wie in Figur 2b exemplarisch durch die skizzierte Halterung 240 verdeutlicht wird, die durch Verschrauben einer oberen Hälfte 241 und einer unteren Hälfte 242 realisiert ist.

Figur 2c zeigt eine Aufsicht auf die Trägerstruktur der Dichtung 200, wenn diese aus nebeneinander verlaufenden Abschnitten 212a, 212b eines jeweils am Ende eines Abschnitts um Wulstseile 230 bzw. 231 gewickelten Stahlseils 212 gebildet wird. Als Ergebnis des Herumwickelns verlaufen die Abschnitte 212a auf der in Figur 2c dem Betrachter zugewandten Seite der Wulstseile 230 bzw. 231, während die Abschnitte 212b auf der dem Betrachter abgewandten Seite, somit tieferliegend in Richtung der Papierebene gesehen, verlaufen. Um die Fugen zwischen den jeweiligen Abschnitten 212a und 212b gering zu halten, ist es, wie in Figur 2d exemplarisch für das Wulstseil 232 dargestellt ist, vorteilhaft, durch Einflechten eines Edelstahlbands 232 unmittelbar vor bzw. nach der Wicklung um das Wulstseil 230 bzw. 231 herum und durch Verflechten der Abschnitte 212a und 212b mit einem Kunstfaser-Geflecht 233 die Abschnitte 212a und 212b in eine Ebene zu ziehen. Mit diesen Maßnahmen wird es möglich, die Breite der Fugen 235 zwischen den Abschnitten 212a und 212b auf ein oder wenige mm zu reduzieren.

Die Herstellung der in Figur 2c zu erkennenden Umwicklungen der Wulstseile 231,232 durch Abschnitte 212a,212b der Stahlseile 212 und das Verflechten derselben mit dem Schlaufenband 232 und Kunstfaser-Geflecht 233 ist in Figur 2d skizziert, das Ergebnis, betrachtet aus der Verlaufsrichtung der Stahlseile 212, in Figur 2e dargestellt.

Als überaus vorteilhaft hat es sich für die vorstehend in den Figuren 2a bis 2e beschriebenen, aber auch allgemein für alle Anordnungen mit nebeneinander verlaufenden Abschnitten einer Trägerstruktur erwiesen, wenn zwischen diesen nebeneinander verlaufenden Abschnitten und/oder als Deckschicht ein elastisches Material verwendet wird, das sowohl dehnbar als auch quetschbar ist, wobei für die Alternative "und" der obigen "und/oder"-Kombination bevorzugt die Dehnbarkeit und Quetschbarkeit des im Zwischenraum zwischen den nebeneinander verlaufenden Abschnitten angeordneten Materials und der Deckschicht aufeinander abgestimmt sein sollte. Durch die Verwendung von Materialien mit diesen Eigenschaften in dieser Anordnung wird nämlich das Problem, dass z.B. als Funktion des Windversatzes ein gegebenes Segment einer Dichtung einen Spalt variabler Breite abdichten muss, so dass sich auch die Länge des Segments in Umfangsrichtung des Kolbens ändern muss, gelöst.

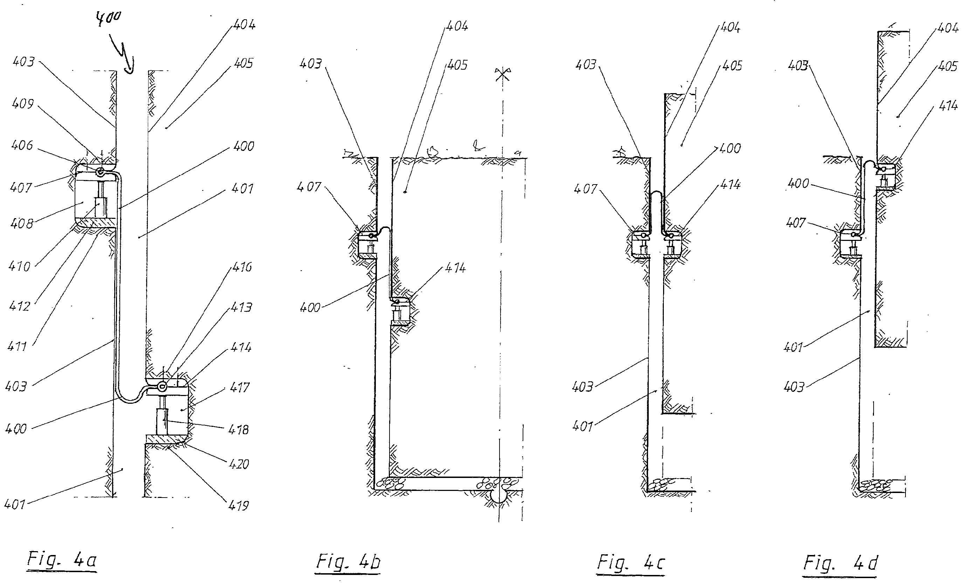

Die in den nachfolgenden Figurenbeschreibungen zu den Figuren 4 bis 17 als "Dichtabschnitt" bezeichneten Bauteile weisen jeweils einer flexible Trägerstruktur zur Aufnahme der wirkenden Kräfte aufweist, die ein- oder beidseitig mit einer fluiddichten Schicht zur Abdichtung gegen den Durchtritt von Fluid beschichtet oder mit einem erstarrten fluiddichten Material durchtränkt ist auf und sind beispielsweise jeweils so aufgebaut, wie in vorstehend anhand der Figuren 2a bis 2e erläutert wurde.

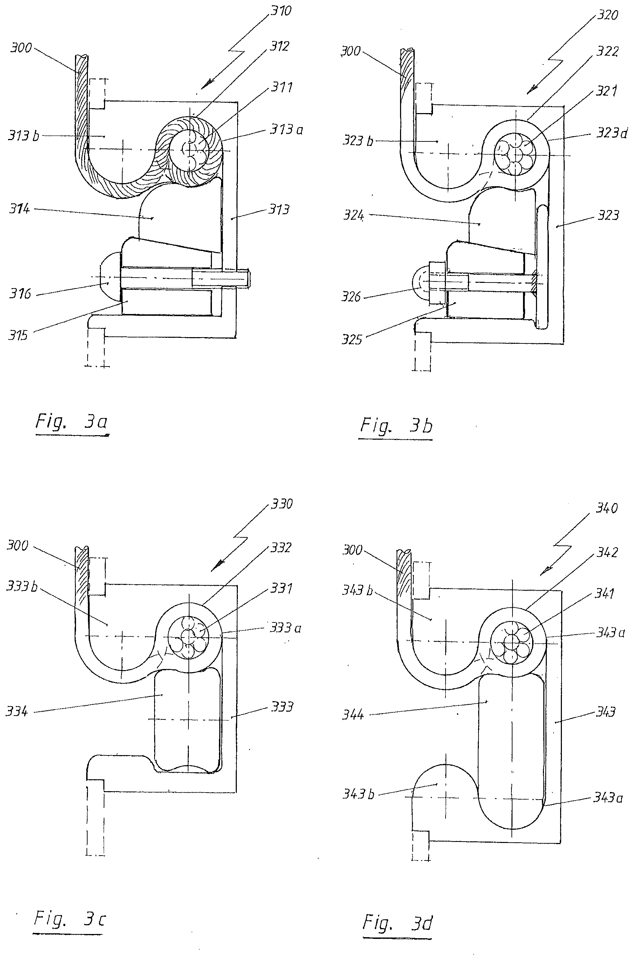

Die Figuren 3a bis 3h zeigen jeweils im Querschnitt betrachtet Verankerungen 310320,330,340,350,360,370,380 mit denen ein jeweils durch Umschlingung eines Wulstseils 311,321,331,341,351, 361,371,381 gebildete Dichtungsendabschnitte 312,322,332,342, 352,362,372,382 in der in diesen Figuren nicht dargestellten Innenwand des Hydraulikzylinders bzw. im Kolben verankert werden können. Insbesondere können derartige Verankerungen 310, 320,330,340,350,360,370,380 zur Realisierung der Verankerung von Dichtungen verwendet werden, wenn eine Verankerung nachfolgend in den Figurenbeschreibungen der Ausführungsbeispiele gemäß den Figuren 4 bis 17 erwähnt wird.

Allen Verankerungen 310,320,330,340,350,360,370,380 ist dabei gemein, dass sie jeweils einen Ankerkasten 313,323,333,343, 353,363,373,383 aufweisen, der im Kolben oder im Hydraulikzylinder eines Lageenergiespeichers befestigt, z.B. eingegossen oder darin verspannt ist. Allen Ankerkästen 313,323,333,343, 353,363,373,383 gemein ist, dass sie eine Ausnehmung 313a, 323a,333a,348a, 353a,363a,373a,383a aufweisen, in die der Dichtungsendabschnitt 312,322,332,342,352,362,372,382 eingelegt ist und dass sie mindestens einen Führungsabschnitt 313b,323b,333b,343b,353b,363b,373b, 383b aufweisen, um den ein Abschnitt der Dichtung herumgeführt ist, um ein Knicken der Dichtung sicher zu vermeiden und eine kontrollierte Ableitung der wirkenden Zugkräfte zu ermöglichen. Der eingelegte Dichtungsendabschnitts 312,322, 332,342,352,362,372,382 wird dann in seiner Position fixiert. Dies kann beispielsweise durch Spannmittel, durch Keile, durch einen Vorsprung im Ankerkasten und durch eine Umspritzung, Hinterspritzung oder Unterspritzung, z.B. mit Beton, geschehen.

Insbesondere die in den Figuren 1a bis 1c beschriebenen Lageenergiespeicher 100 können mit den nachfolgend in den Figuren 4 bis 17 beschriebenen Dichtungsanordnungen ausgerüstet werden. Die Dichtungsanordnungen werden jeweils so angeordnet, dass ein zwischen Hydraulikzylinder 110 und Kolben 120 verbleibender Spalt durch sie verschlossen wird, wobei zur Dichtungsanordnung auch ein teilweise in der Außenwand des Kolbens oder der Innenwand des Hydraulikzylinders angeordnetes Lager, das in den Spalt hineinragt und ihn teilweise verschließt, z.B. ein vorspringender Betonring, gehören kann. Aus diesem Grund wird zur Vermeidung von Wiederholungen und zu Fokussierung der Beschreibung auf die wesentlichen Aspekte in den nachfolgenden Figurenbeschreibungen lediglich Bezug auf diese Außenwand des Kolbens bzw. Innenwand des Hydraulikzylinders genommen, ohne jeweils noch auf die einzelnen Bestandteile des Lageenergiespeichers explizit einzugehen.

In den nachfolgend beschriebenen Figuren 4 bis 17 ist die Dichtung jeweils an der Innenwand des Hydraulikzylinders 110 angeordnet, so dass der Dichtabschnitt an der Außenwand des Kolbens 120 anliegt, grundsätzlich wäre aber durch eine einfache Vertauschung der Seiten auch eine Anordnung an der Außenwand des Kolbens 120 möglich, so dass der Dichtabschnitt an der Innenwand des Hydraulikzylinders 110 anliegt.

Die Höhe, auf der die Dichtungsanordnung angebracht wird, ist bei den meisten Dichtungsanordnungen nicht zwingend vorgegeben, sondern kann variiert werden, wobei zu beachten ist, dass die Dichtungsanordnung an der unteren Hälfte des Kolbens 120 oder an der oberen Hälfte des Hydraulikzylinders 110 anzuordnen ist, da andernfalls die Dichtungsanordnung nicht in jeder Betriebsposition des Kolbens 120 des Lageenergiespeichers 100 zwischen Kolben 120 und Hydraulikzylinder 110 angeordnet wäre.

Allerdings bietet eine Anordnung am oberen Rand des Hydraulikzylinders 110 den Vorteil, dass eine Installation mit relativ geringem Aufwand verbunden ist.

Figur 4a zeigt eine Dichtungsanordnung bestehend aus einer Dichtung 400, die als Rollmembran ausgeführt ist, im Querschnitt. Die Dichtung 400 kann dabei strukturell so aufgebaut sein, wie oben anhand der Figuren 2a bis 2e beschrieben wurde. Bei der Dichtung 400, die einen Spalt 401 der Breite b zwischen Innenwand 403 des Hydraulikzylinders und der dieser zugewandten Außenwand 404 des Kolbens 405 abdichtet, wird der Dichtabschnitt von der gesamten Dichtung 400 gebildet und ist deshalb nicht mit einem separaten Bezugszeichen versehen. Mit anderen Worten ist die Dichtung 400 über ihre gesamte Länge, wobei die Länge durch den maximalen Abstand der Enden 406,413 der Dichtung 400 definiert ist, mit einer auf die, z.B. durch Stahlseile gebildete, Trägerstruktur aufgebrachten fluiddichten Schicht gegen den Durchtritt von Hydraulikflüssigkeit abgedichtet. Die Länge der Dichtung 400 sollte die Hälfte des Radius r des Lageenergiespeichers übersteigen, und zwar bevorzugt um einige Prozent des Radius r. Beispielsweise kann eine Länge der Dichtung von 0,52*r gut verwendet werden. Dieser Längenüberschuss ist nicht nur nötig, um einen eventuellen Querversatz des Kolbens 405 im Hydraulikzylinder durch Winddruck kompensieren zu können, sondern erlaubt auch, wie unten anhand der Figuren 4b bis 4d erläutert wird, eine Anpassung der Form der Dichtung 400 an den herrschenden Druck der Hydraulikflüssigkeit, die für die Definition der Richtung der wirkenden Kräfte vorteilhat ist.

Die Dichtung 400 ist mit einem Ende 406 über ein Lager 407, das z.B. wie eine der in Figur 3a-h dargestellten Verankerungen ausgestaltet sein kann, in einer Ausnehmung 408 der Innenwand 403 des Hydraulikzylinders an der Decke 409 der Ausnehmung 408 befestigt. Das Lager 407 ist zusätzlich als Lagersicherung über einen Stempel 410 auf einem am Boden 411 der Ausnehmung 408 angeordneten, umlaufenden Betonring 412, der als Stempelfundament dient, abgestützt.

Das andere Ende 413 der Dichtung 400 ist über ein Lager 414, die ebenfalls z.B. wie eine der in Figur 3a-h dargestellten Verankerungen ausgestaltet sein kann, in einer Ausnehmung 417 an der Außenwand 404 des Kolbens 405 an der Decke 416 der Ausnehmung 417 befestigt. Das Lager 414 ist zusätzlich als Lagersicherung über einen Stempel 418 auf einem am Boden 419 der Ausnehmung 417 angeordneten, umlaufenden Betonring 420, der als Stempelfundament dient, abgestützt.

Die Figuren 4b bis 4d zeigen schematisch die Lage der Dichtung 400 bei unterschiedlichen Hubhöhen des Kolbens 405 relativ zum Hydraulikzylinder, was mit unterschiedlichen Ladezuständen des Lageenergiespeichers korrespondiert, anhand eines Ausschnitts aus einer Querschnittsdarstellung des Lageenergiespeichers, der eine Innenwand 403 des Hydraulikzylinders, den Spalt b und die Außenwand 404 des Kolbens zeigt.

Bei völlig abgesenktem Kolben, wie in Figur 4b dargestellt, wird die Dichtung 400 fast vollständig durch den Druck der Hydraulikflüssigkeit an die Außenwand 404 des Kolbens gepresst. Da die Länge der Dichtung 400 größer ist als die Entfernung zwischen den beiden Lagern 407, 414 wird ein Abschnitt der Dichtung 400 durch den Druck der Hydraulikflüssigkeit ein kleines Stück über das höher angeordnete der Lager 407 hinaus angehoben und dann in einem Bogen zu dem Lager 414 zurückgeführt.

Bei halb angehobenem Kolben, wie in Figur 4c dargestellt, befinden sich beide Lager 407,414 auf gleicher Höhe, so dass die Dichtung 400 fast vollständig frei beweglich ist und somit durch den Druck der Hydraulikflüssigkeit an die Innenwand 403 des Hydraulikzylinders und die Außenwand 404 des Kolbens 405 gepresst, wobei diese Abschnitte über eine bogenförmige Verbindung ineinander über gehen.

Bei völlig angehobenem Kolben, wie in Figur 4d dargestellt, wird die Dichtung 400 fast vollständig durch den Druck der Hydraulikflüssigkeit an die Innenwand 403 des Hydraulikzylinders gepresst. Da die Länge der Dichtung 400 größer ist als die Entfernung zwischen den beiden Lagern 407, 414, wird ein Abschnitt der Dichtung 400 durch den Druck der Hydraulikflüssigkeit ein kleines Stück über das höher angeordnete der Lager 414 hinaus angehoben und dann in einem Bogen zu dem höher angeordneten Lager 407 zurückgeführt.

Bei Betrachtung der Figuren 4b bis 4d wird insbesondere klar, dass die auftretenden Kräfte hauptsächlich parallel zur Hubrichtung wirken und von der Spaltbreite b abhängig sind. Zugleich wird deutlich, dass mit diesem Dichtungsaufbau eine Veränderung der Breite b des Spalts 401 problemlos beherrschbar ist.

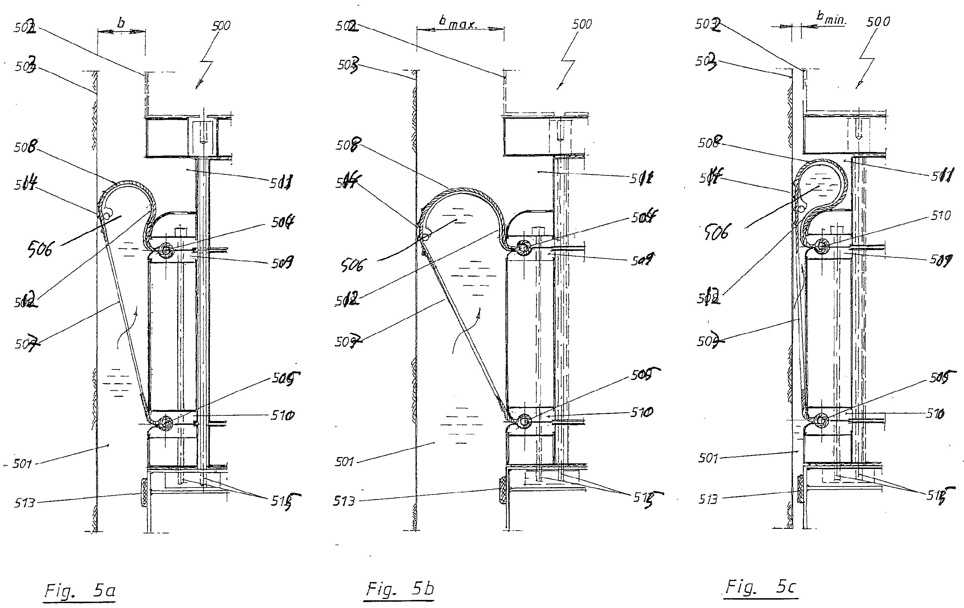

Figur 5a zeigt eine andere Ausführungsform einer Dichtungsanordnung mit einer Dichtung 500, die den Spalt 501 mit Breite b zwischen der Innenwand 502 eines Hydraulikzylinders und der Außenwand 503 eines Kolbens abdichtet, im Querschnitt durch eine Ebene des Kolbens, die dessen Hubachse enthält, betrachtet. Aus der radialen Symmetrie des eine zylindrische Grundform aufweisenden Kolbens folgt, dass die Dichtung 500 eine den Kolben radial zu seiner Hubrichtung umgebende Dichtmanschette bildet. Beide Enden (bzw. Ränder) 504, 505 der Dichtung 500 sind jeweils in im Hydraulikzylinder bzw. dessen Innenwand 502 eingelassenen Lagern 509,510 verankert, so dass sich eine doppellagige Dichtmanschette ergibt, deren nicht gelagerter, im Spalt 501 angeordneter Mittelteil im Querschnitt betrachtet die Form einer Schlaufe 506 hat, deren Länge die maximale Spaltbreite um ein Mehrfaches, d.h. insbesondere um mehr als einen Faktor 2, übersteigt.

Die Schlaufe 506 weist dabei einen für Hydraulikflüssigkeit durchlässigen Abschnitt 507, der in Figur 5 ohne Schraffur dargestellt ist, und einen Dichtabschnitt 508, der in Figur 5 mit Schraffur dargestellt ist, auf. Der für Hydraulikflüssigkeit durchlässige Abschnitt 507, der beispielsweise nur aus der flexiblen Trägerstruktur ohne fluiddichte Beschichtung bestehen kann oder durch Schaffung von Kanälen in einer solchen Struktur aus dieser hergestellt werden kann, bildet dabei eine untere, der Hydraulikflüssigkeit zugewandte Seite der Schlaufe 506 bzw. der doppellagigen Dichtmanschette, so dass die untere Seite der Schlaufe 506 zumindest abschnittsweise für den Durchtritt von Hydraulikflüssigkeit durchlässig ist. Der Dichtabschnitt 508 bildet die obere Lage und den gekrümmten Abschnitt der Schlaufe 506, in dem die obere Lage der Schlaufe 506 in die untere Lage der Schlaufe 506 übergeht.

Diese Konstruktion führt dazu, dass gewährleistet ist, dass eine Schlaufe 506 dann, wenn sie den Spalt 501 noch nicht vollständig abdichtet, so dass es zu einem Strom von Hydraulikflüssigkeit kommt, durch von dem für Hydraulikflüssigkeit durchlässigen Abschnitt 507 der Schlaufe 506 Hydraulikflüssigkeit hindurchtritt, sich am Dichtabschnitt 508 staut, was dann die Schlaufe 506 wie einen Fallschirm im Luftstrom entfaltet und sicherstellt, dass ein Teil des Dichtabschnitts 608 an die Außenwand 503 des Kolbens gedrückt wird und somit die sichere Abdichtung gewährleistet ist.

Wegen dieser Analogie wird eine so ausgeführte, aber an anderen Stellen verankerte bzw. gelagerte Dichtung, die auch als Bestandteil von weiter unten ausführlich beschriebenen alternativen Dichtungsanordnungen dienen kann, in dieser Beschreibung als "Schirmdichtung" bezeichnet.

Durch die Ausgestaltung des Mittelteils der Dichtung 500 als Schlaufe 506 mit einer Länge, die ein Mehrfaches der maximalen Breite des Spalts 501 beträgt und die im Spalt 501 angeordnet ist, wird sichergestellt, dass die Dichtung 500 ihre Funktion weitgehend unbeeinflusst von einer Variation der Breite b des Spalts 501 erfüllen kann. Wird der Spalt 501 breiter, wie in Figur 5b dargestellt, senkt sich der Scheitelpunkt der Schlaufe 506 und ihr Krümmungsradius wird größer. Wird der Spalt 501 enger, wie in Figur 5c dargestellt, hebt sich der Scheitelpunkt der Schlaufe 506 und ihr Krümmungsradius wird kleiner.

Ein Problem könnte sich allerdings dann ergeben, wenn die Breite b des Spalts 501 gegen Null geht, wie in Figur 5c dargestellt ist. Daher ist in Figuren 5a bis 5c im sich an die Lager 509,510 in Hubrichtung anschließenden Bereich des Hydraulikzylinders eine Ausnehmung 511 in der Innenwand 502 des Hydraulikzylinders vorgesehen, in der die Schlaufe 506 aufgenommen wird, wenn die Breite b des Spaltes fast Null wird, wie es z.B. für die Leeseite eines Lageenergiespeichers, bei dem die Verkippung des Kolbens bei Winddruck ausgeglichen wird, bei Orkan der Fall sein kann. In dieser Ausnehmung kann ferner ein Schlaufenträger angeordnet sein, der eine minimale Öffnung der Schlaufe 506 vorgibt und dadurch ihre Entfaltung über den Spalt 501 hinweg sichert. Alternativ kann, wie in der dargestellten Ausführungsform, auch eine Andruck-und Haltefeder 512 mit im oberen Lager verankert werden, die den Dichtabschnitt 508 in jeder der Positionen an die den Lagern gegenüberliegende Wand drückt.

Ferner erkennt man in den Figuren 5a-c jeweils Verankerungen 515 und optionale Dichtlippen 514.

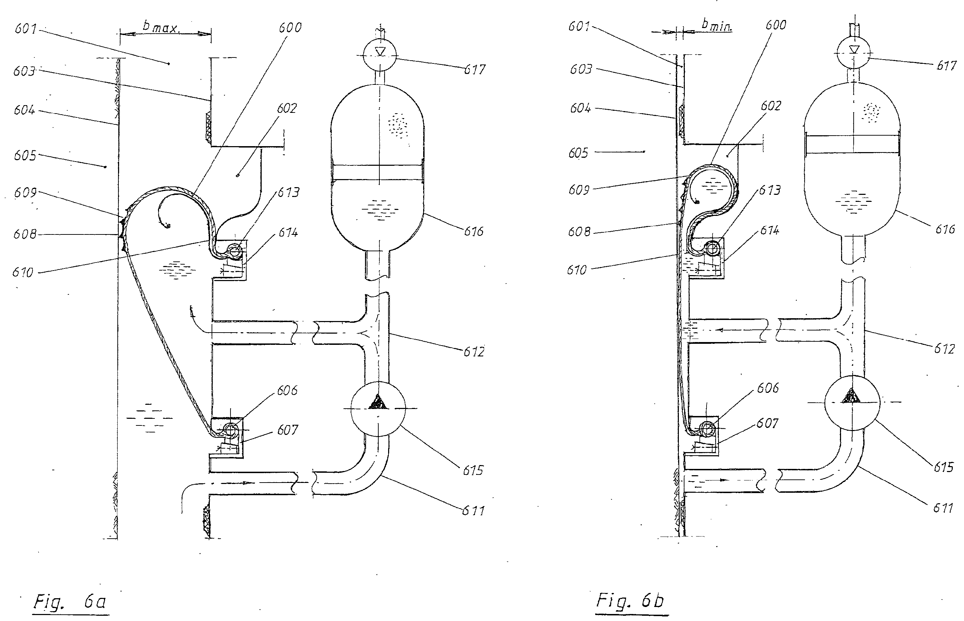

Figur 6a zeigt eine schlauchartige Dichtung 600, welche als den Kolben radial umgebenden Dichtmanschette ausgeführt ist, bei der der im Spalt 601 der Breite b zwischen Außenwand 604 des Kolbens 605 und Innenwand 603 des Hydraulikzylinders durch einen im abzudichtenden Spalt 601 angeordneten Dichtabschnitt 608 abgedichtet wird, der in der dargestellten Querschnittsebene durch den Kolben, die dessen Längsachse enthält, betrachtet eine Schlaufe 609 bildet. Dabei sind beide Enden 606,613 bzw. Ränder der Dichtmanschette in zwei im Hydraulikzylinder bzw. dessen Innenwand 603 eingelassenen Lagern 607,614 verankert, so dass jeweils eine doppellagige Dichtmanschette entsteht, wobei der nicht gelagerte, die Schlaufe 609 bildende Mittelteil zwischen den Enden 606,613 nach oben weist und eine Länge hat, die das Zweifache des maximalen Abstands zwischen Außenwand 604 des Kolbens und Innenwand 603 des Hydraulikzylinders um mindestens 200%, bevorzugt 300% übersteigt.

Da zumindest der gesamte im Spalt b angeordnete Teil der Schlaufe 609 bei diesem Aufbau der Dichtung 600 durch den Dichtabschnitt 608 gebildet wird, muss verhindert werden, dass der Druck der Hydraulikflüssigkeit die Schlaufe 609 einfach zusammendrückt und dadurch ein Austritt von Hydraulikflüssigkeit möglich wird. Dies wird dadurch erreicht, dass Hydraulikflüssigkeit in ein Rohrsystem eintreten kann und durch Zuleitungen 611,612 in das Innere der Schlaufe 609 eintreten kann, so dass dieses nicht einfach zusammengedrückt werden kann.

Zweckmäßigerweise, aber nicht zwingend, wird, wie in Figur 6a und 6b dargestellt ist, die Zuleitung zum Innenraum der Schlaufe 609 mit einer Druckerhöhungs-Pumpe 615 und einem Gasdruckspeicher 616 mit Verdichter 617 verbunden, so dass die den Innenraum der Schlaufe 609 füllende Hydraulikflüssigkeit unter einem höheren, beispielsweise um 5% gegenüber dem Druck der Hydraulikflüssigkeit erhöhten, Druck steht. Dieser erhöhte Druck im Innenraum der Schlaufe 609 führt insbesondere dazu, dass der Teil des Dichtabschnitts 608, der mit der Außenwand 604 des Kolbens in Kontakt steht, mit hohem Druck an die Außenwand 604 des Kolbens gepresst wird, was den erwünschten Effekt mit sich bringt, dass die fluiddichte Schicht in eine etwaig vorhandene Oberflächenstruktur der Außenwand 604 des Kolbens hineingedrückt wird und so ein Durchsickern von Hydraulikflüssigkeit effektiver vermieden wird.

Wie insbesondere in Figur 6b deutlich wird, ist auch hier eine Ausnehmung 602 im Hydraulikzylinder bzw. dessen Innenwand 603 vorgesehen, in den die Schlaufe 609 bei minimalem Spaltabstand aufgenommen werden kann.

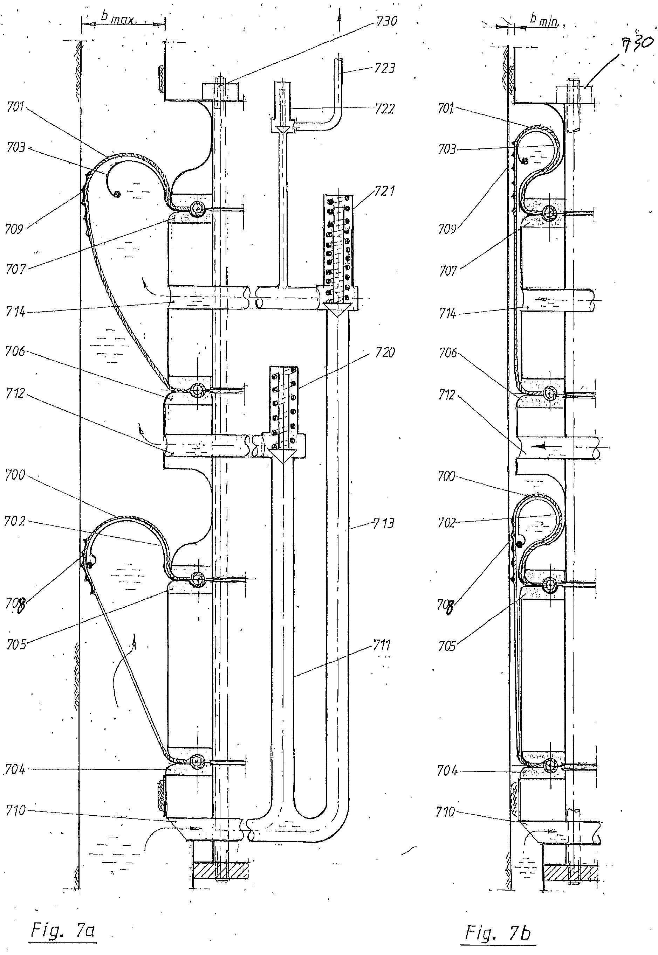

Figur 7a zeigt eine Querschnittsdarstellung einer zweistufigen Dichtungsanordnung, die aus einer analog zu Figur 5a aufgebauten zwei im Wesentlichen gleich aufgebauten, übereinander angeordneten schirmartigen Dichtungen 700 und schlauchartigen Dichtung 701, zusammengesetzt ist, wobei die Dichtungen 700,701 im Wesentlichen von ihrem Aufbau her jeweils der in den Figuren 5a bzw. 6a gezeigten Dichtung entsprechen, auf deren Beschreibung jeweils verwiesen wird.

Im zweistufig abgedichteten Ausführungsbeispiel der Figur 7 ist im Rohrsystem stromaufwärts der Zuleitung 712 ein Druckminderer 720 vorgesehen, der z.B. den Druck der Hydraulikflüssigkeit auf 50% des an der unteren Dichtung 700 herrschenden Drucks reduziert. Insbesondere kann durch Zuleitung 712 der Bereich des Spalts, der zwischen der unteren Dichtung 700 und der oberen Dichtung 701 liegt, mit Hydraulikflüssigkeit, die unter reduziertem Druck steht, gefüllt werden. Dies kann zu einer Entlastung der unteren Dichtung 700 führen. Grundsätzlich können auch mehr als zwei solche Dichtstufen vorgesehen werden, so dass eine insgesamt zu bewältigenden hohe Druckdifferenz durch Hintereinanderschaltung mehrerer Dichtungen, deren Belastung jeweils durch Beaufschlagung von oben durch unter geringerem Druck stehende Hydraulikflüssigkeit reduziert wird, abgebaut werden kann.

Figur 7b ist eine Darstellung der zweistufigen Dichtungsanordnung aus Figur 7a bei minimaler Spaltbreite.

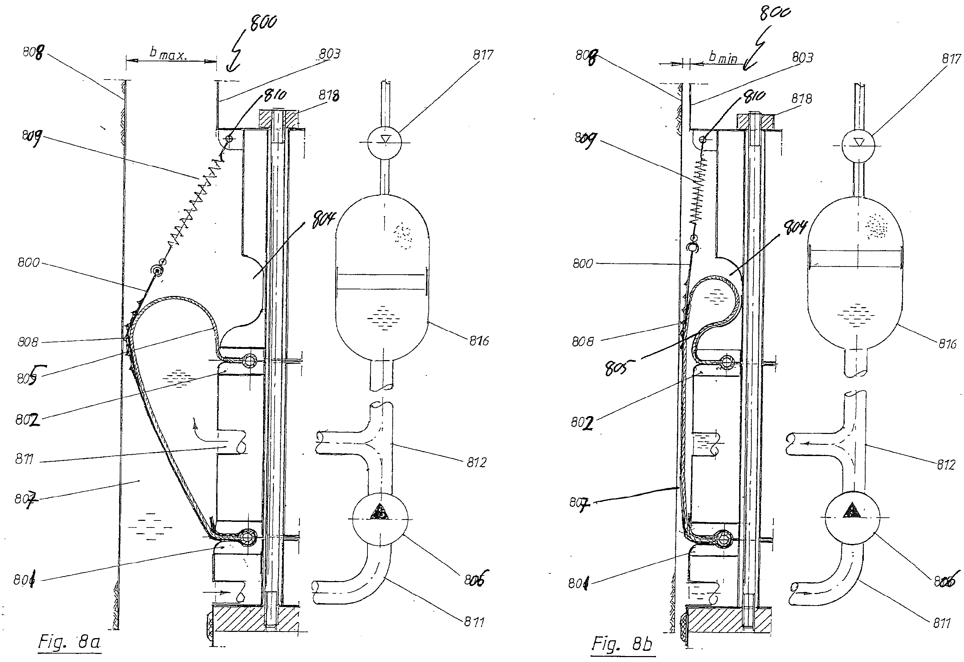

Fig.8a zeigt eine Querschnittsdarstellung einer vierten Dichtungsanordnung, basierend auf dem Prinzip einer Dichtschürze, bei maximaler Spaltbreite. Die in Figur 8a dargestellte Dichtung 800 ist an einem oberen Lager 801 und einem unteren Lager 802, die beide in der Innenwand 803 des Hydraulikzylinders angeordnet sind, verankert ist. Dabei überdeckt ein Abschnitt der Dichtung 800 einen radial um den Kolben herumlaufenden Druckschlauch 805. Der Druckschlauch 805 kann über das Leitungssystem 811,812 mit Druckerhöhungspumpe 806 und Gasdruckspeicher 816 mit Verdichter 817 unter einen den an der Dichtung 800 herrschenden Druck der Hydraulikflüssigkeit übersteigenden Druck gesetzt werden, so dass sich der Druckschlauch 805 in einen Spalt 807 der Breite b zwischen der Innenwand 803 des Hydraulikzylinder und der Außenwand 808 des Kolbens hinein ausdehnt und die Dichtung 800 in jeder Richtung senkrecht zur Hubrichtung an einem Kontaktpunkt in Kontakt mit der Außenwand 808 des Kolbens gepresst wird. In Figur 8a bildet die gesamte Dichtung 800 den Dichtabschnitt, er muss sich jedoch zumindest vom unteren Lager 802 bis zum Kontaktpunkt erstrecken, damit keine Hydraulikflüssigkeit austreten kann. Ferner erkennt man ein Spannsystem 818.

Im Ausführungsbeispiel gemäß Figur 8a erfolgt die Verankerung der Dichtung 800 im oberen Lager 801 über eine Zugfeder 809. Daraus ergibt sich, dass die Verankerung der Dichtung 800 im oberen Lager 801 derart beweglich ausgeführt ist, dass sie die Veränderung der Weglänge vom unteren Lager 802 über die Oberfläche des Druckschlauchs 805 zum oberen Lager, die mit der Ausdehnung des Druckschlauchs 805 einher geht, kompensiert.

Wie aus den Figuren 8b die die Dichtung 800 bei anderer Spaltbreite als in Figur 8a zeigt, hervorgeht, wird hier eine variable Spaltbreite dadurch kompensiert, dass der Druckschlauch 805 sich unterschiedlich weit ausdehnt bzw. ausgehnen kann und dadurch die sicher Abdichtung unabhängig von veränderlichen Spaltbreiten gewährleistet werden kann. Bei minimaler Spaltbreite kann er in die Ausnehmung 804 aufgemommen werden.

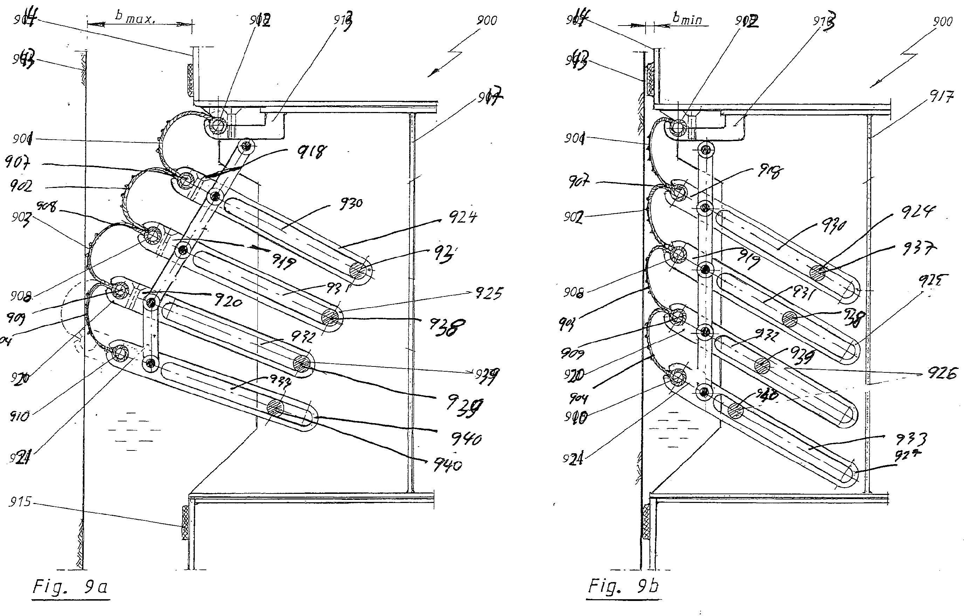

Figur 9a zeigt eine Querschnittsdarstellung einer fünften Dichtungsanordnung, basierend auf einer als Balg ausgeführten Dichtung 900. Der Balg ist aus mehreren gleich langen Dichtabschnitten 901,902,903,904, die miteinander an Verbindungsstellen 907,908,909 verbunden sind, ausgeführt.

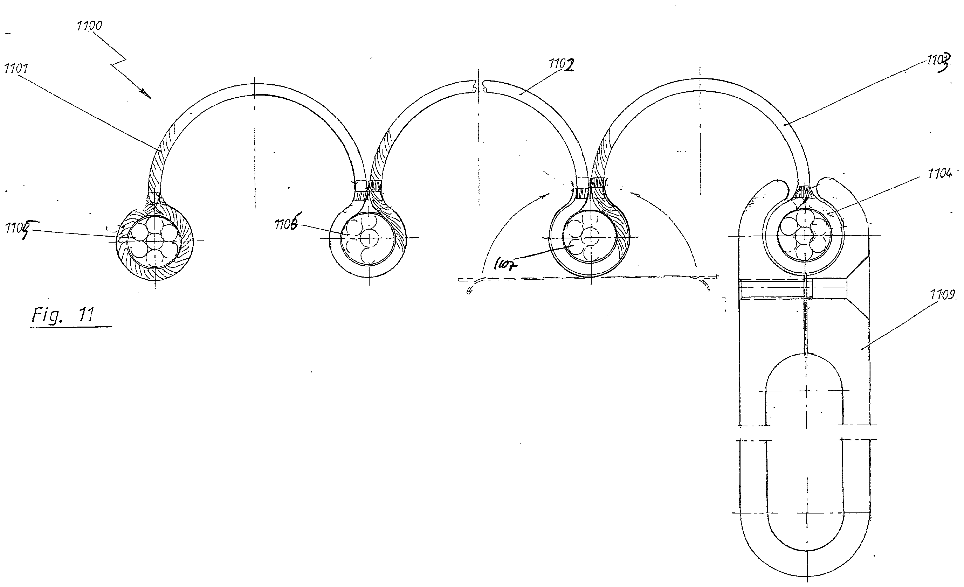

Wie man besonders gut in der Darstellung des Balgs gemäß Figur 11 erkennt, können als Verbindungsstellen für die Dichtabschnitte 1101,1102,1103 Wulstseile 1105,1106,1107 dienen, um welche die die Trägerstruktur der Dichtabschnitte 1101,1102, 1103 bildenden Stahlseile oder Abschnitte von Stahlseilen herumgeschlungen sind. Die Verwendung der Wulstseile 1105,1106, 1107,1108 als Verbindungsstellen hat insbesondere den Vorteil, dass dadurch auf besonders einfache Weise eine mechanische Verbindung zu den Verbindungsstellen herstellbar ist.

In Figur 11 ist exemplarisch eine der Möglichkeiten skizziert, um diese Verbindung zu schaffen, nämlich eine Klammer 1109, die eine Verbindungsstelle umgreift. Es gibt aber auch andere Möglichkeiten, eine solche Verbindung herzustellen, beispielsweise mit auf das Wulstseil 1107 aufgefädelten Laschen.

Wieder Bezug nehmend auf Figur 9a ist bei der dort dargestellten Dichtungsanordnung die Dichtung 900 mit ihrem oberen Ende 912 in einer Verankerung 913 in einem in die Innenwand 914 des Hydraulikzylinders 915 eingelassenen und ggf. dort verspannten Dichtungskasten 917 aus Stahl befestigt.

An den Verbindungsstellen 907,908,909,910 und am unteren Ende des Balgs greift jeweils ein hier als Klammer ausgestaltetes mechanisches Verbindungselement 918,919,920,921 an, welches jeweils mit einer Schubstange 924,925,926,927 mit Langloch 930,931,932,933 verbunden ist. Im Langloch 930,931,932,933 geführt sind in den Seitenwänden 936 des Dichtungskastens 917 verankerte Führungs-und Begrenzungsstangen 937,938,939,940, welche äquidistant angeordnet auf einer schräg von oben nach unten auf die Außenwand 943 des Kolbens zu laufenden Linie liegen. Dementsprechend kann der unterste Dichtabschnitt am weitesten in den Spalt hineingeschoben werden.

Am Dichtungskasten 917 ist ein Einlauf 944 für Hydraulikflüssigkeit vorgesehen. Dementsprechend tritt Hydraulikflüssigkeit in den Dichtungskasten ein und schiebt die einzelnen Dichtabschnitte 901,902,903,904 so weit auf die Außenwand 943 des Kolbens zu, bis entweder das am weitesten von der Außenwand 943 entfernte Ende des Langlochs 930,931,932,933 an der ihm zugeordneten Führungsstange 937,938,939,940 anschlägt oder bis der Dichtabschnitt an der Außenwand 943 des Kolbens anliegt. Alle weiter unten liegenden Dichtabschnitte, die grundsätzlich weiter in Richtung auf die Außenwand 943 des Kolbens vorgeschoben werden könnten, weil ihre Führungsstangen näher an dieser angeordnet sind, werden dann ebenfalls an der Außenwand 943 des Kolbens zur Anlage kommen. Dieser Effekt wird auch durch die Figur 9b die die Wirkung der Dichtung 900 der Figur 9a bei unterschiedlicher Spaltbreite zeigt, noch einmal veranschaulicht.

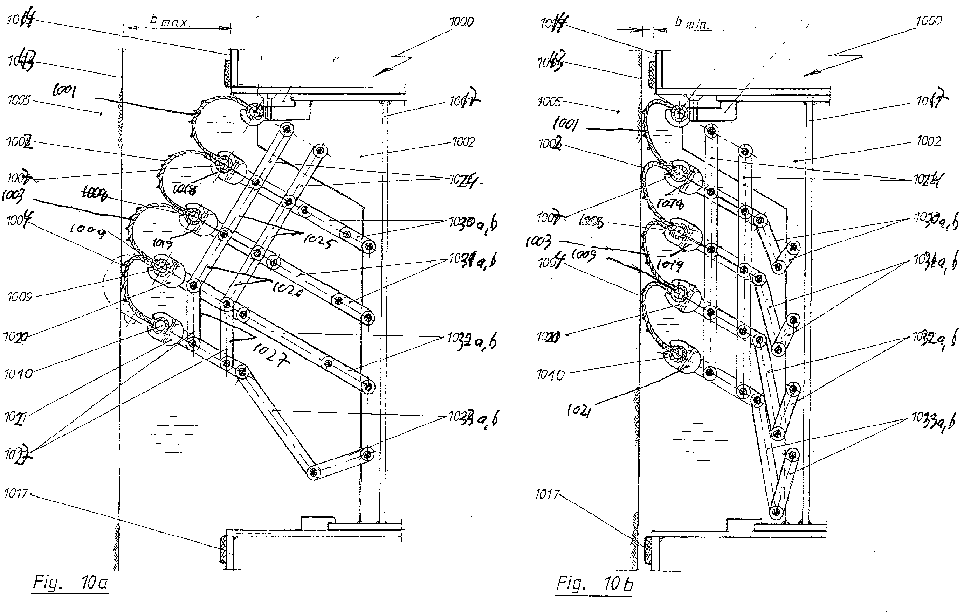

Figur 10a zeigt eine Variante der Dichtungsanordnung aus Figur 9a mit einer alternativen mechanischen Positioniervorrichtung. Auch die Dichtung 1000 ist aus Dichtabschnitten 1001,1002, 1003,1004 zusammengesetzt, die miteinander an Verbindungsstellen 1007,1008,1009 verbunden sind, an denen jeweils mechanische Verbindungselemente 1018,1019,1020, 1021 angreifen.

Der Unterschied zwischen den Dichtungsanordnungen gemäß Figur 10a und Figur 9a besteht in der Mechanik, die die einzelnen Dichtabschnitte führt, um den Kontakt zur Außenwand 1043 des Kolbens herzustellen. In der Variante gemäß Figur 10a sind jeweils die mechanischen Verbindungselemente 1018,1019,1020, 1021 mit ihren Nachbarn durch jeweils gleich lange Abstandshalter 1024,1025,1026 verbunden, welche in der Schnittebene der Darstellung der Figur 10a drehbar miteinander und mit den Verbindungselementen 1018, 1019,1020,1021 verbunden sind. An den dem Dichtungskasten 1017 zugewandten Enden der Verbindungselemente 1018,1019, 1020, 1021 sind diese in der Schnittebene der Darstellung der Figur 10a drehbar mit einem zweiarmigen, ebenfalls in dieser Ebene drehbaren Scherensystem 1030a,b,1031a,b,1032a,b, 1033a,b verbunden, das in dieser Ebene drehbar am Dichtungskasten 1017 angeordnet ist, wobei die Länge der die jeweiligen Komponenten des Scherensystems bildenen kurzen Hebel 1030a,1031a,1032a, 1033aund langen Hebel 1030b,1031b,1032b,1033b von oben nach unten jeweils um eine definierte Länge länger werden.

Ist keine Hydraulikflüssigkeit im Dichtungskasten 1017 vorhanden, so führt diese Anordnung dazu, dass die Dichtung 1000 herabhängt und die Hebelsysteme V-förmig zusammengeklappt sind, wie dies auch in Figur 10b zu sehen ist. Im Betriebszustand des Lageenergiespeichers ist dies aber nicht der Fall, sondern der Druck der im Dichtungskasten 1017 vorhandenen Hydraulikflüssigkeit d drückt die Dichtabschnitte 1001,1002,1003,1004, 1005 so weit wie es das Scherensystem zulässt an die Außenwand 1043 des Kolbens heran. Zur Veranschaulichung der Wirkungsweise dieser Mechanik ist in den Figuren 10a und 10b auch deren Adaption auf unterschiedliche Spaltbreiten dargestellt.

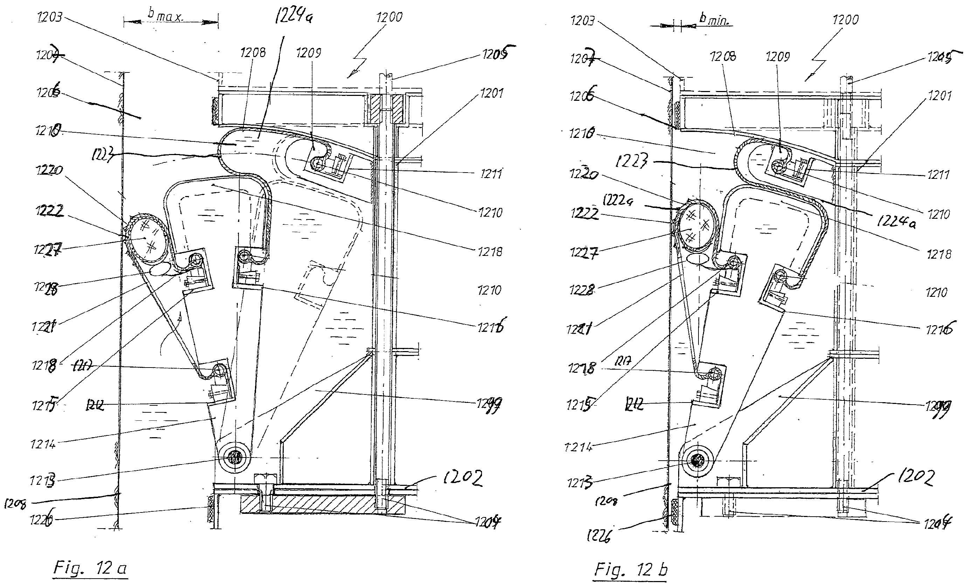

Die nachfolgend anhand der Figuren 12 bis 15 diskutierten Dichtungsanordnungen haben als gemeinsames Konstruktionsprinzip, dass der Dichtabschnitt mit mindestens einem, bevorzugt seinem oberen Rand an einem starren, aber drehbar oder verschiebbar im Kolben oder, bevorzugt, in der Innenwand des Hydraulikzylinders gelagerten Dichtungsträger gelagert ist, welcher durch die Drehung oder die Verschiebung in den Spalt zwischen der Innenwand des Hydraulikzylinders und dem Kolben hinein bewegbar ist, so dass der in den Spalt hinein bewegte Dichtungsträger oder ein daran befestigtes Anbauteil, das gegebenenfalls auch als weiterer Dichtabschnitt ausgestaltet sein kann, den Durchfluss von Hydraulikflüssigkeit durch den Teil des Spalts, der von dem Dichtungsträger oder dem daran befestigten Anbauteil überdeckt wird, sperrt, wobei der Dichtabschnitt den zwischen dem Dichtungsträger und der Innenwand des Hydraulikylinders, wenn der Dichtungsträger im Kolben gelagert ist oder zwischen dem Dichtungsträger und dem Kolben, wenn der Dichtungsträger in der Innenwand des Hydraulikzylinders gelagert ist, verbleibenden Teil des Spalts abdichtet.

Diese nachfolgend auch als Klappen-Schirm-Dichtung bezeichnete Kategorie von Dichtungsanordnungen vereinfacht den mechanischen Aufbau im Vergleich zu den Dichtungsanordnungen 900, 1000, die vorstehend diskutiert wurden, erheblich, ohne den Vorteil aufzugeben, dass der Dichtabschnitt eine im Vergleich zu reinen Rollmembran- oder reinen Schirmdichtungen, wie sie oben anhand der Figuren 4 und 5 diskutiert wurden, geringe Länge aufweist und gut kontrollierbar ist, aufzugeben.

Konkret zeigt Figur 12a eine Querschnittsdarstellung einer Dichtungsanordnung 1200, welche in einem beispielsweise aus Edelstahl gefertigten Dichtungskasten 1201 mit einer Bodenplatte 1202 aufgenommen ist, der in der Ausführungsform gemäß Figur 12a in einer durch ihn ausgefüllten und daher nicht mehr sichtbaren Ausnehmung an der Innenwand 1203 des Hydraulikzylinders aufgenommen und an diesem mit Verankerungen 1204,1205 verankert ist. Der Dichtungskasten 1201, der z.B. ein Stahlkasten sein kann, der optional mit nicht in Figur 12a erkennbaren Querschotten und einer Beton-Verfüllung ausgesteift sein kann, weist einen Ankerkasten 1209 auf, der in eine im Wesentlichen kreissektorförmige Ausnehmung 1210 im Dichtungskasten 1201 (die auch in etwaig vorhandenen Querschotten angeordnet ist), deren Grenzfläche zum Dichtungskasten 1201 hin durch eine Edelstahlschicht 1211 gebildet wird, hineinragt. Mit anderen Worten ist an der oberen, dem Spalt abgewandten Ecke der kreissektorförmigen Ausnehmung 1210 im Dichtungskasten 1201 ist der Ankerkasten 1209 im Dichtungskasten 1201 verankert.

In der nach unten zeigender Spitze der kreissektorförmigen Ausnehmung 1210 ist eine im Dichtungskasten 1201 verankerte Drehachse 1213 vorgesehen, auf der ein Dichtungsträger 1214, der ebenfalls eine im wesentlichen kreissektorförmige Form hat, die aber bevorzugt einen geringeren Radius als den Radius der kreissektorförmigen Ausnehmung 1210 hat und einen kleineren Öffnungswinkel α aufweist, so angeordnet ist, dass er zumindest in einem Winkelbereich um die Drehachse 1213 herum drehbar ist, wobei aber bevorzugt gewährleistet sein sollte, dass in jeder Position des Dichtungsträgers 1214 ein Fluidkanal 1299 zwischen dem Dichtungsträger 1214 und der Edelstahlschicht 1211 vorhanden ist, dessen Funktion weiter unten erläutert wird.

Am oberen Ende des Dichtungsträgers 1214 ist sowohl auf der Innenseite, also in Richtung auf den Spalt 1206 hin, als auch auf der Außenseite, also im Richtung vom Spalt 1206 weg, jeweils ein Ankerkasten 1215,1216 angeordnet. Am unteren Ende des Dichtungsträgers 1214, aber oberhalb der Drehachse 1213, ist auf seiner Innenseite ein weiterer Ankerkasten 1212 angeordnet.

In den beiden auf der Innenseite des Dichtungskastens 1201 angeordneten Ankerkästen 1209,1215 sind die Enden 1217,1218 einer Schirmdichtung 1219, die -abgesehen von den Lagerpunktenvon ihrem Aufbau her der oben anhand der Figur 5a erläuterten Schirmdichtung entspricht. Auch hier ist die Schirmdichtung 1219 eine doppellagige Dichtmanschette, deren nicht gelagerter, im Spalt 1206 angeordneter Mittelteil im Querschnitt betrachtet die Form einer Schlaufe 1220 hat, welche einen für Hydraulikflüssigkeit durchlässigen Abschnitt 1221 und einen Dichtabschnitt 1222 aufweist und bei der der für Hydraulikflüssigkeit durchlässige Abschnitt 1221, eine untere, der Hydraulikflüssigkeit zugewandte Seite der Schlaufe 1220 bzw. der doppellagigen Dichtmanschette, so dass die untere Seite der Schlaufe 1220 zumindest abschnittsweise für den Durchtritt von Hydraulikflüssigkeit durchlässig ist. Der Dichtabschnitt 1222 bildet die obere Lage und den gekrümmten Abschnitt der Schlaufe 1220, in dem die obere Lage der Schlaufe 1220 in die untere Lage der Schlaufe 1220 übergeht.

In den beiden verbleibenden, vom Spalt 1206 entfernt liegenden Ankerkästen 1212, 1216 sind jeweils die Enden bzw. Ränder eines weiteren erfindungsgemäß aufgebauten, insbesondere z.B. wie oben anhand der Figuren 3a bis 3d erläutert aufgebauten Dichtabschnitts 1223 verankert. Dieser Dichtabschnitt 1223 bildet somit eine Rollmembran, die aber im Gegensatz zu der oben anhand der Figuren 4a bis 4d erläuterten Rollmembran nicht eine Verschiebung des Kolbens, sondern die Drehbewegung des Dichtungsträgers 1214 ermöglicht. Der Dichtabschnitt 1223 ist notwendig, um den wegen der unterschiedlichen Radien von Dichtungsträger 1214 und kreissektorförmiger Ausnehmung 1210 vorhandenen Kanal 1224 abzudichten, er dient aber gleichzeitig auch dazu, die Reaktion der Dichtungsanordnung 1200 auf eine Vergrößerung der Breite des Spaltes 1206 zu gewährleisten. Durch den Fluidkanal 1299 wird nämlich Hydraulikflüssigkeit in den Raum 1224a eintreten, welche den Dichtungsträger 1214 und damit auch die an diesem angeordnete Schirmdichtung 1219 in Richtung auf die Außenwand 1207 des Kolbens drückt.

Der Spalt 1206 wird bei der Dichtungsanordnung 1200 von zwei Komponenten abgedichtet, nämlich einerseits von der Schirm-dichtung 1219 und andererseits vom Dichtungsträger 1214, falls dieser vollständig radial umlaufend ausgeführt ist, oder von an diesem angeordneten Anbauteilen, die insbesondere als an der gekrümmten Seite des Dichtungsträgers 1214 angeordneten, nicht dargestellten Dichtungsblechen, die radial umlaufend ausgeführt sind.

Schließlich soll noch auf den am Dichtungskasten 1201 vorgesehenen Puffer 1226 hingewiesen werden, der einen minimalen Abstand zwischen der Außenwand 1207 des Kolbens und der Innenwand 1203 des Hydraulikzylinders definiert.

Alternativ kann der untere, innenseitige Ankerkasten 1212 unterhalb der Drehachse 1213 des Dichtungsträgers 1214 im Dichtungskasten 1201 angeordnet sein statt oberhalb der Drehachse 1213 im Dichtungsträger 1214.

Ferner ist in Figur 12 a ein von einer Stützfeder 1228 in Position gehaltener, mit einem Fluid, insbesondere Wasser oder Gel gefüllter Druckschlauch 1227 vorgesehen, der die Form des Dichtabschnitts 1222 der Schirmdichtung 1219 im Wesentlichen vorgibt.

Die Dichtungsanordung 1200 weist ferner an ihrem Dichtabschnitt 1222 der Schirmdichtung 1222 Dichtlippen 1222a auf. Das Vorsehen derartiger Dichtlippen 1222a am Dichtabschnitt 1222, das eine grundsätzlich auf alle diskutierten Ausführungsformen der Erfindung angewendet werden kann, bringt den Vorteil mit sich, dass sie einen Schutz des Dichtabschnitts 1222 gegen Abnutzung, insbesondere gegen Abrieb beim Verfahren des Kolbens im Hubzylinder, bieten und somit die Lebensdauer des Dichtabschnitts 1222 erhöhen.

Figur 12b zeigt die Dichtungsanordnung 1200 bei minimaler Spaltbreite.

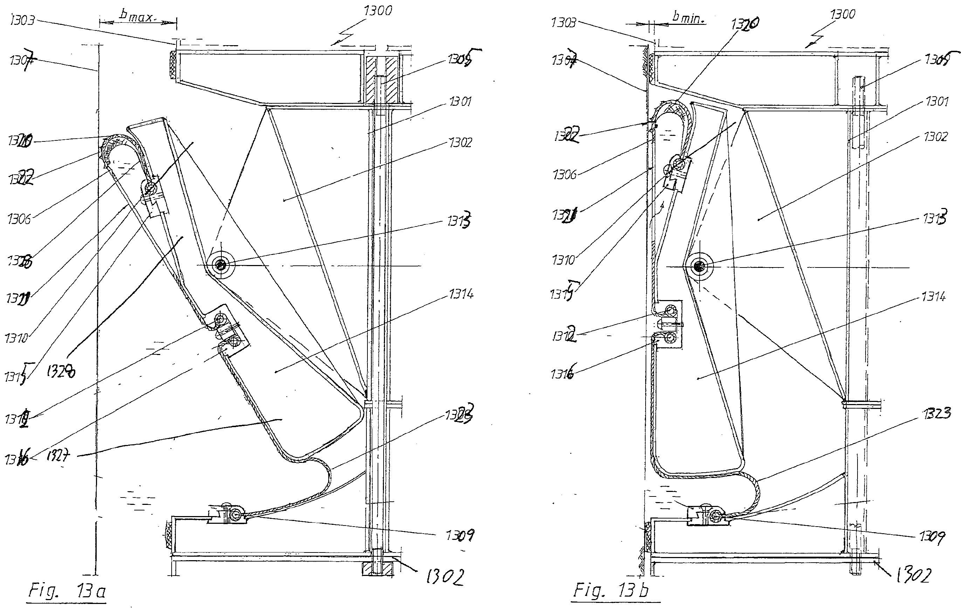

Figur 13a zeigt eine weitere Variante einer Klappen-Schirm-Dichtung, die sich von der bislang diskutierten, diesem Aufbauprinzip unterfallenden Dichtungsanordnung 1200 dadurch unterscheidet, dass der Dichtungsträger 1314 in Form eines an der Drehachse 1313 gelagerten, zweiarmigen Hebels mit einem ersten Arm 1328 und einem zweiten Arm 1327, also in Form einer Wippe, realisiert ist und dass der Dichtabschnitt 1323 mit seinen Enden oder Rändern in Ankerkästen 1309,1316 verankert ist, die unterhalb der Drehachse 1313 am zweiten Arm 1327 bzw. im Dichtungskasten 1301 angeordnet sind.

Der auf die vom Dichtabschnitt 1323 gebildete Rollmembran einwirkende Druck der Hydraulikflüssigkeit wirkt bei dieser Anordnung in Richtung weg vom Kolben am Ende des zweiten Arms 1327, so dass der erste Arm 1328 des Dichtungsträgers 1314 gebildete erste Arm an die Außenwand 1307 des Kolbens gepresst wird. Je nach Wahl der Länge des zweiten Arms 1327 kann somit der Anpressdruck variiert werden; allerdings ist mit erheblichen Biegemomenten zu rechnen. Die anderen Bezugszeichen ergeben sich aus den Bezugszeichen der Figur 12 durch Addition von Hundert.

Figur 13b zeigt die Dichtungsanordnung 1300 in der Position, die sie bei einer anderen Spaltbreite einnimmt.

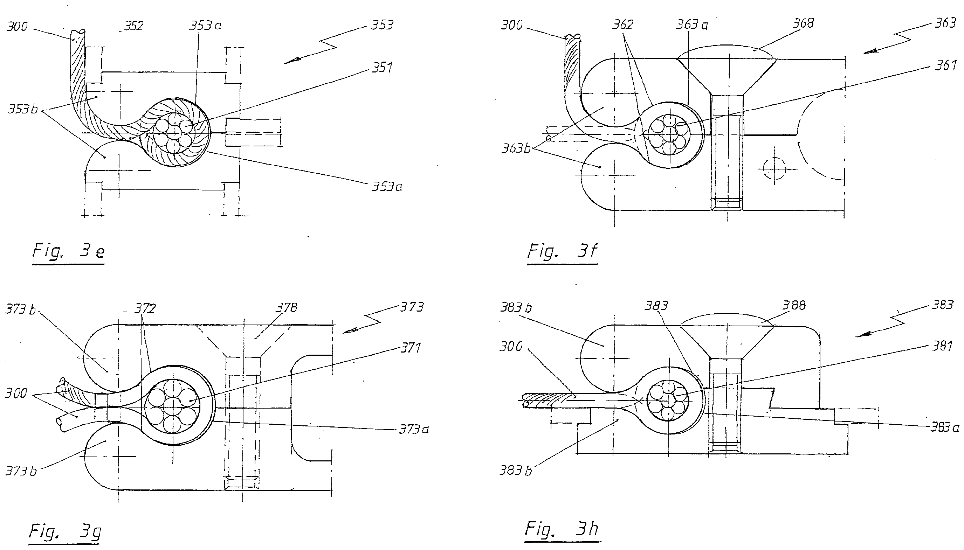

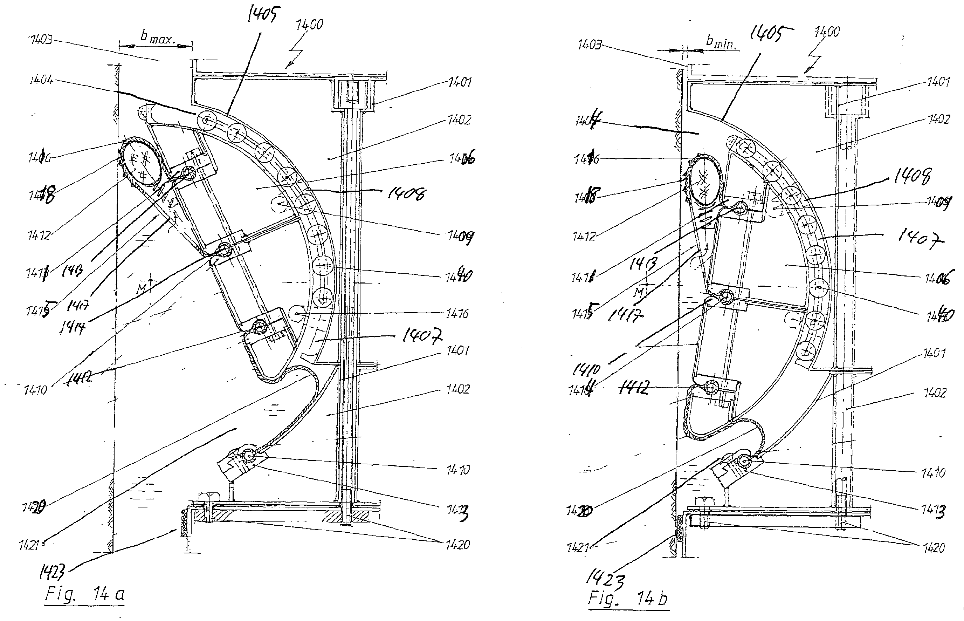

Fig.14a zeigt eine neunte Dichtungsanordnung 1400, mit der die Problematik hoher Biegemomente beherrschbar ist. Der Dichtungskasten 1401 mit Edelstahlrahmen 1402 weist hier auf der dem Spalt 1403 zugewandten Seite eine kreissegmentförmige Ausnehmung 1404 mit einer durch eine Edelstahlschicht gebildeten Grenzfläche 1405 auf, wobei der Mittelpunkt M des dieses Kreissegment definierenden Kreises bevorzugt im Spalt 1403 angeordnet ist, wenn der Kolben konzentrisch zum Hydraulikzylinder angeordnet ist. Im unteren Abschnitt der Ausnehmung 1404 ist ein Ankerkasten 1413 angeordnet, der z.B. gemäß einer der Varianten der Figur 3 ausgestaltet sein kann.

Der Dichtungsträger 1406 ist ebenfalls kreissegmentförmig ausgebildet, wobei seine Form durch einen Kreis mit demselben Mittelpunkt M, aber einem kleineren Radius als der Radius des Kreissegments der kreissegmentförmigen Ausnehmung 1404 aufweist, so dass sich zwischen Dichtungsträger 1406 und Grenzfläche 1405 ein Kanal 1407 befindet. Im Kanal 1407 sind Druckrollen 1440 angeordnet, auf denen der Dichtungsträger 1406 durch Halteklammern 1408 mit Andruckrollen 1409 drehbar gelagert ist. Es sind aber auch andere Arten der Lagerung, z.B. Gleitlager, für den Dichtungsträger 1406 möglich.

Im Dichtungsträger 1406 ist auf der dem Spalt 1403 zugewandten Seite auf der Symmetrieachse des Kreissegments, das die Form des Dichtungsträgers 1406 definiert, ein erster Ankerkasten 1410 gelagert, oberhalb der Symmetrieachse ein zweiter Ankerkasten 1411 und unterhalb der Symmetrieachse ein dritter Ankerkasten 1412. Auch die Ankerkästen 1410 bis 1412 können beispielsweise einer der Varianten der Figur 3 entsprechen.

In den beiden oberen auf der Innenseite des Dichtungsträgers 1406 angeordneten Ankerkästen 1410,1411 sind die Enden 1413,1414 einer Schirmdichtung 1415, die -abgesehen von den Lagerpunkten- von ihrem Aufbau her der oben anhand der Figur 6a erläuterten Schirmdichtung entspricht. Auch hier ist die Schirmdichtung 1415 eine doppellagige Dichtmanschette, deren nicht gelagerter, im Spalt 1403 angeordneter Mittelteil im Querschnitt betrachtet die Form einer Schlaufe 1416 hat, welche einen für Hydraulikflüssigkeit durchlässigen Abschnitt 1417 und einen Dichtabschnitt 1418 aufweist und bei der der für Hydraulikflüssigkeit durchlässige Abschnitt 1417, eine untere, der Hydraulikflüssigkeit zugewandte Seite der Schlaufe 1416 bzw. der doppellagigen Dichtmanschette bildet, so dass die untere Seite der Schlaufe 1416 zumindest abschnittsweise für den Durchtritt von Hydraulikflüssigkeit durchlässig ist. Der Dichtabschnitt 1418 bildet die obere Lage und den gekrümmten Abschnitt der Schlaufe 1416, in dem die obere Lage der Schlaufe 1416 in die untere Lage der Schlaufe 1416 übergeht.

In den beiden verbleibenden Ankerkästen 1412, 1413 sind jeweils die Enden bzw. Ränder eines weiteren erfindungsgemäß aufgebauten, insbesondere z.B. wie oben anhand der Figuren 2a bis 2d erläutert aufgebauten weiteren Dichtabschnitts 1420 verankert. Dieser Dichtabschnitt 1420 bildet somit eine Rollmembran, die aber im Gegensatz zu der oben anhand der Figuren 4a bis 4d erläuterten Rollmembran nicht eine Verschiebung des Kolbens, sondern die Drehbewegung des Dichtungsträgers 1406 ermöglicht. Der Dichtabschnitt 1420 ist notwendig, um den wegen der unterschiedlichen Radien des kreissegmentförmigen Dichtungsträgers 1406 und der kreissektorförmigen Ausnehmung 1404 vorhandenen Kanal 1407 abzudichten, er dient aber gleichzeitig auch dazu, die Reaktion der Dichtungsanordnung 1400 auf eine Vergrößerung der Breite des Spaltes 1403 zu gewährleisten. Aus dem Spalt 1403 wird nämlich Hydraulikflüssigkeit in den Raum 1421 eintreten, welche den Dichtungsträger 1406 und damit auch die an diesem angeordnete Schirmdichtung 1415 in Richtung auf die Außenwand des Kolbens zu dreht.

Der Spalt 1403 wird bei der Dichtungsanordnung 1400 von zwei Komponenten abgedichtet, nämlich einerseits von der Schirm-dichtung 1421 und andererseits vom Dichtungsträger 1406 oder von an diesem angeordneten Anbauteilen, z.B. einer Segmentabdichtung 1422.

Schließlich soll noch auf die am Dichtungskasten 1401 vorgesehenen Puffer 1423,1424 hingewiesen werden, die einen minimalen Abstand zwischen der Außenwand des Kolbens und der Innenwand des Hydraulikzylinders definieren.

Figur 14b zeigt die Dichtungsanordnung 1400 aus Figur 14a bei einer anderen Spaltbreite.

In einer nicht dargestellten Variante der Dichtungsanordnung 1400 aus Figur 14a sind die in Figur 14a vorhandene Schirm-dichtung 1415 und die Rollmembran in Gestalt des Dichtabschnitts 1420 zu einer kombinierten Dichtung zusammengefasst, wobei sich der fluiddichte Abschnitt der kombinierten Dichtung, der dem Dichtabschnitt 1420 entspricht, bis über den Ankerkasten 1410 hinaus erstreckt. Auf diese Weise wird der Ankerkasten 1412 aus Figur 14a überflüssig und kann ebenso weggelassen werden, wie die Segmentabdichtung 1422.

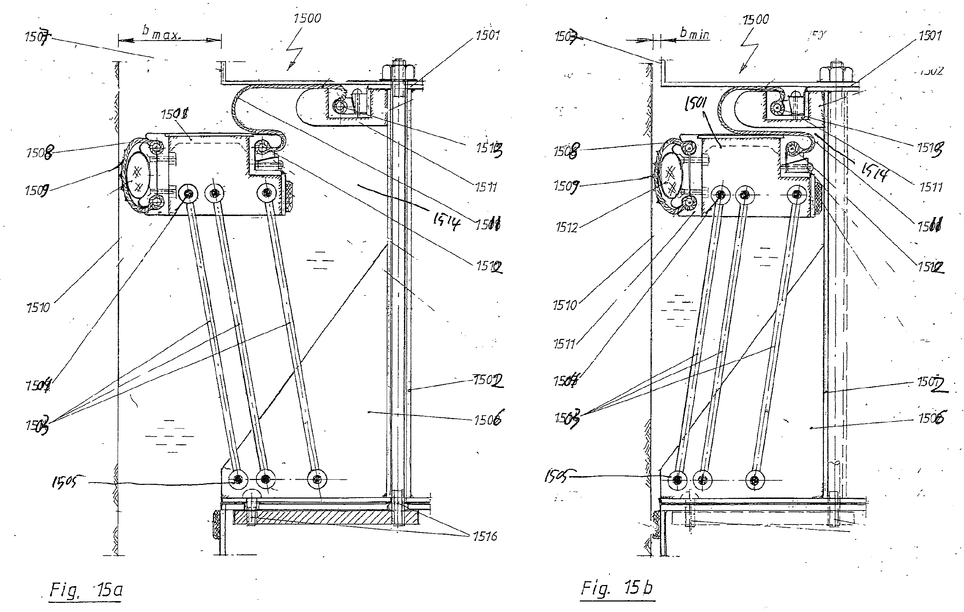

Figur 15a zeigt eine Querschnittsdarstellung einer weiteren Dichtungsanordnung 1500, die das Grundprinzip der Dichtungsanordnungen 1200,1300,1400 insofern variiert, als sie einen Dichtungsträger 1501 aufweist, der sich statt durch eine Dreh-oder Klappbewegung durch eine Translation, konkret in Gestalt einer Parallelverschiebung, an eine Änderung der Spaltbreite anpasst. Dazu ist der Dichtungsträger 1501 in einem Dichtungskasten 1502 angeordnet, mit dem er über Zugstangen 1503 verbunden ist. Die Zugstangen 1503 sind mit ihrem einen Ende in im Dichtungsträger 1501 vorgesehenen Lagern 1504 und mit ihrem anderen Ende in Lagern 1505, die in einem am Boden des Dichtungskastens 1502 angeordneten Lagerblock 1506 gelagert sind, und zwar so, dass sie um Achsen senkrecht zur Schnittebene drehbar gelagert sind, so dass eine Parallelverschiebung des Dichtungsträgers 1501 als Reaktion auf eine Änderung der Breite des Spalts 1507 erfolgen kann, so dass eine an der Stirnseite des Dichtungsträgers 1501 gelagerte Dichtung 1508 mit Dichtlippen 1509 an die Außenwand 1510 des Kolbens gedrückt wird.

Angetrieben wird diese Bewegung durch den als Rollmembran ausgebildeten Dichtabschnitt 1511, dessen eines Ende in einem an der Oberseite des Dichtungsträgers 1501 angeordneten Ankerkasten 1512 und dessen anderes Ende in einem an einer Decke der Ausnehmung des Dichtungskastens 1502 angeordneten Ankerkasten 1513 gelagert ist, auf den von außen her Druck der durch den Kanal 1514 geführten Hydraulikflüssigkeit wirkt.

Fig.15b zeigt die Dichtungsanordnung 1500 gemäß Figur 15a bei einer anderen Spaltbreite.

Insbesondere bei Dichtungsanordnungen, die in Dichtungskästen angeordnet sind, möglich ist, durch eine polygonförmige Anordnung von linearen Einzelsegmenten eine radial umlaufende Dichtung zu realisieren.

Naturgemäß ist das Hauptproblem die Abdichtung der einzelnen, als Folge der polygonförmigen Anordnung unter einem kleinen Winkel zueinander angeordneten Segmente. Im Hinblick auf die Dichtabschnitte kann das Problem einfach durch ein entsprechendes Verkleben von Stößen von erfindungsgemäß aufgebauten Dichtabschnitten realisiert werden. Zur Abdichtung der Fugen zwischen den Rahmen von benachbarten Dichtungskästen werden an diesen elastische Abdicht-Klötze mit Dichtlippen angeordnet.

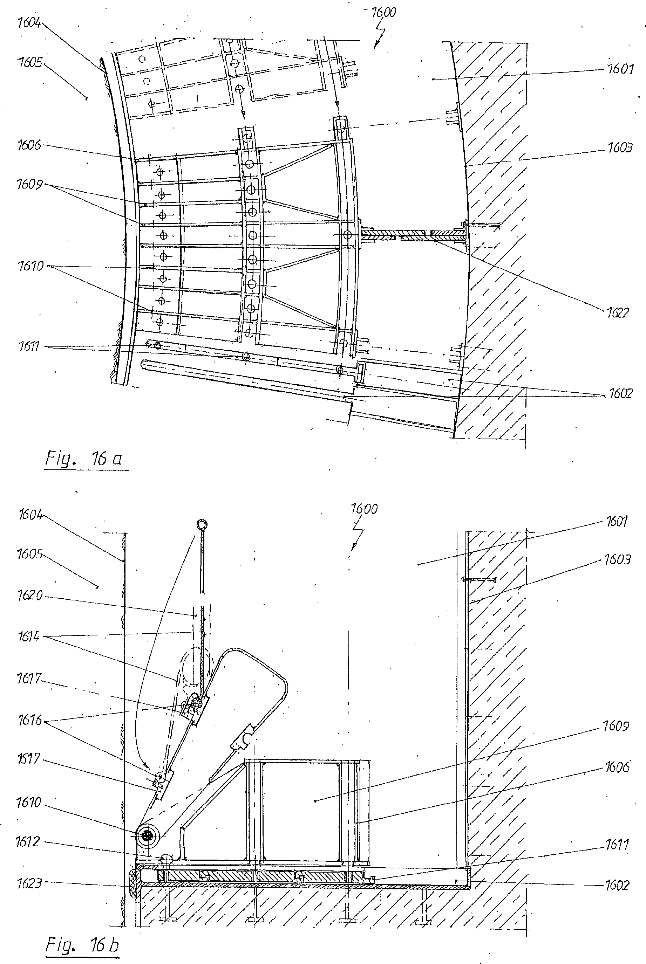

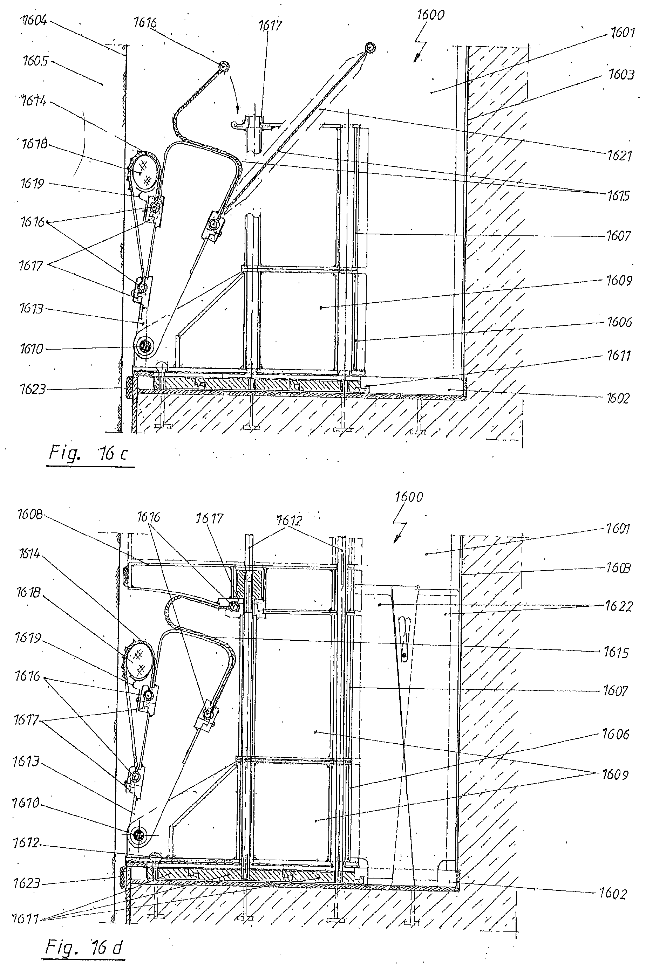

Weitere Details zum Aufbauen, zur Struktur und zur Verbindung derartiger Segmente werden nun anhand der Figuren 16 a bis d und 17 a bis d erläutert:

Fig.16a zeigt einen Grundriss eines Beton-Außenrings mit Ankerschienen und Dichtkasten-Unterteil 1606 für ein Segment einer ringförmigen Dichtungsanlage 1600, Man erkennt eine Dichtungskammer 1601 im Beton-Außenring mit senkrechter MontageWand 1603, ein im Boden der Dichtungskammer 1601 angeordnetes Ankerschienensystem 1602, den Kolben 1605 mit seiner Außenwand 1604, Querrippen 1609, Gewindeanker 1611 mit Ankerverschraubung 1612 und Druckverstrebung 1622.

Fig.16b zeigt einen Vertikalschnitt eines ersten Montageabschnitts für eine Dichtungsanordnung gemäß Figur 12a mit installiertem Dichtkasten-Unterteil 1606 nebst Kolben-Puffer 1623, um die Drehachse 1610 rotierbar montiertem Dichtungsträger 1613 mit Ankerkästen 1617 und partiell installiertem Abdichtschirm 1614 mit Stoßverklebung 1620

Nach weiteren Schritten der Dichtschirm-Montage ergibt sich dann der in Figur 16c dargestellte Vertikalschnitt eines zweiten Montageabschnitts für eine Dichtungsanordnung gemäß Figur 12a nach Abschluss der Installation des Abdichtschirms 1614, dessen Endwülste 1616 nun in den dem Kolben 1605 zugewandten Ankerkästen 1617 aufgenommen sind und der nun um den elastischen Druckschlauch 1618, der vom Druckschlauchträger 1619 getragen wird, herumgeschlagen wird. Ferner ist das Dichtungskasten-Mittelteil 1606 installiert und die Installation der Rollmembran 1615 hat begonnen.

Nach Befestigen der Endwülste 1616 der Rollmembran 1615 in den noch freien Ankerkästen 1617, Installation des Dichtkasten-Oberteils 1608 und einer Druckverstrebung 1622 gegen die Beton-Ringwand erhält man dann die in Figur 16d im Vertikalschnitt gezeigte Situation.

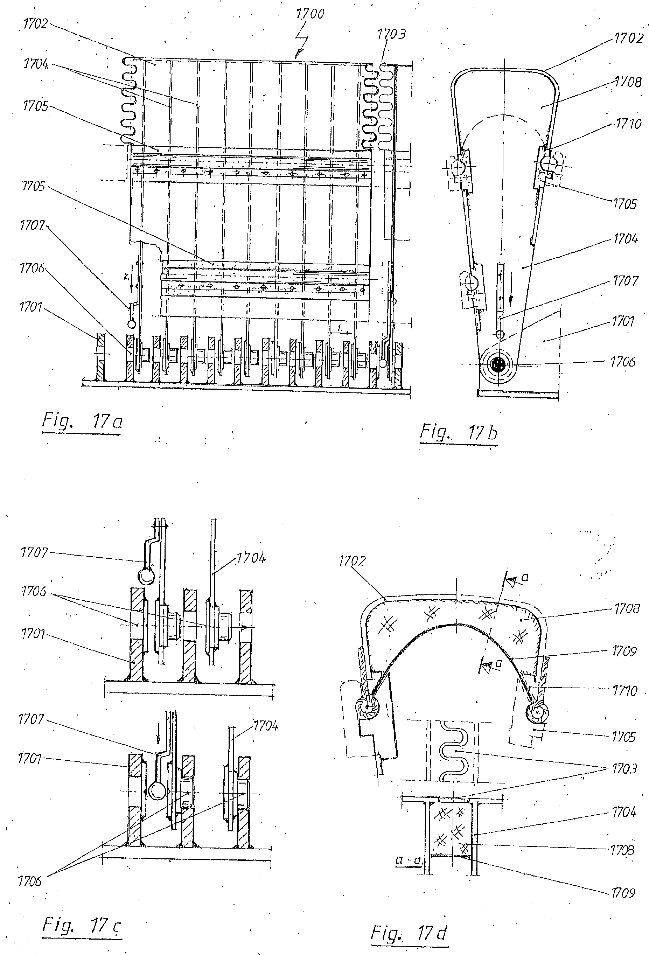

Figur 17a zeigt den Aufbau eines Klappensegments 1700 für eine Dichtungsanordnung gemäß Figur 12a, aber ohne Dichtabschnitte in einem Blick auf die Klappe von der Kolbenseite, wobei das Klappensegment 1700 gerade eingesetzt wird, wie daran zu erkennen ist, dass die Drehgelenke 1706 der Klappenträger 1704 mit den an ihm angeordneten Lagern bzw. Ankerkästen 1705 noch nicht in den Drehgelenkaufnahmen 1711 verankert sind und dass der Klappenstoß 1703 noch nicht bündig mit dem strichliert dargestellten Klappenstoß des benachbarten Klappensegments in Eingriff steht. Wie diese Verankerung vonstatten gehen kann und mit einer Sicherung 1707 gesichert werden kann ist schematisch in Figur 17c dargestellt.

Wie man insbesondere aus Figur 17b, die einen Schnitt durch einen am Knotenblech 1701 des Dichtungskastens angeordneten Dichtungsträger 1704 des Klappensegments 1700 aus Figur 17a zeigt, entnimmt, sind zwischen den einzelnen Dichtungsträgern 1704 Fugenblöcke 1708, die z.B. aus Hartgummi bestehen können, vorgesehen. Insbesondere diese Maßnahme ermöglicht es, die bei Variationen der Spaltbreite in einer Segmentbauweise wirkenden Kräfte in Richtung senkrecht zu den großen Flächen des Dichtungsträgers aufzunehmen und die notwendigen elastischen Deformationen zu erlauben.

Wie insbesondere Figur 17d zeigt, kann die Abdichtung gegen Fluidaustritt durch am Fugenblock vorgesehenes Dichtgewebe 1709 weiter verbessert werden.

### Bezugszeichenliste

- 100: Lageenergiespeicher
- 110: Hydraulikzylinder
- 111: Lagerblock
- 112: Zentrierdorn
- 113: Schotterbett
- 120: Kolben
- 121: trichterförmige Öffnung
- 122: Lagerpunkt
- 125: Zylinderwand
- 130: Hydraulikflüssigkeit
- 131: Druckleitung
- 140: Transport-, Versorgungs- und Turbinenschacht
- 141: Versorgungsleitung
- 150: Betonring
- 151: Zuganker
- 152: Dichtung
- 152a,b: Dichtungsanordnung
- 153: Havariesystem
- 154: Positionierungs-Anlage
- 155: Abstreifer
- 156: Schutzdach
- 157: Puffer
- 158a,b,c,d: Rohr- und Ablaufsystem
- 159: Werkstattfahrzeug
- 160: Betonring
- 161: Tank (Wind-Trimmung)
- 162: Tank (Schwerkraft-Trimmung)
- 163,164: Rohrsystem

- 200: Dichtung
- 210,220: Sektion
- 211,221: Faserbündel
- 212,222: Stahlseil
- 212a,212b: Abschnitt
- 213,223: fluiddichtes Gewebe
- 214,224: Zwischenraum
- 216,226: Abschnitt
- 217,227: Abschnitt
- 218,219: Schlaufe
- 230,231: Wulstseil
- 232: Schlaufenband
- 233: Kunstfaser-Geflecht
- 235: Fuge
- 240: Verankerung
- 241: obere Hälfte (der Verankerung)
- 242: untere Hälfte (der Verankerung)

- 310,320,330,340,350, 360,370,380: Verankerung

- 311,321,331,341,351, 361,371,381: Wulstseil

- 312,322,332,342,352, 362,372,382: Dichtungsendabschnitt

- 313,323,333,343,353, 363,373,383: Ankerkasten

- 313a,323a,333a,343a, 353a,363a, 373a,383a: Ausnehmung

- 313b,323b,333b,343b, 353b,363b,373b,383b: Führungsabschnitt

- 314,324,334,343, 353,363,373,383: Spannmittel

- 400: Dichtung
- 401: Spalt
- 403: Innenwand (des Hydraulikzylinders)
- 404: Außenwand (des Kolbens)
- 405: Kolben
- 406,413: Ende der Dichtung
- 407,414: Lager
- 408,417: Ausnehmung
- 409,416: Decke (der Ausnehmung)
- 410,418: Stempel
- 411,419: Boden (der Ausnehmung)
- 412,420: Betonring

- 500: Dichtung
- 501: Spalt
- 502: Innenwand
- 503: Außenwand
- 504,505: Ende der Dichtung
- 506: Schlaufe
- 507: durchlässiger Abschnitt
- 508: Dichtabschnitt
- 509,510: Ankerkasten
- 511: Ausnehmung
- 512: Schlaufenträger
- 513: Puffer
- 514: Dichtlippe
- 515: Verankerung
- 600: Dichtung
- 601: Spalt
- 602: Ausnehmung
- 603: Innenwand (des Hydraulikzylinders)
- 604: Außenwand (des Kolbens)
- 605: Kolben
- 606,613: Ende (der Dichtung)
- 607,614: Lager
- 608: Dichtabschnitt
- 609: Schlaufe
- 610: Schlaufenträger
- 611,612: Zuleitung
- 615: Druckerhöhungs-Pumpe
- 616: Gasdruckspeicher
- 617: Verdichter

- 700,701: Dichtung
- 702,703: Schlaufenträger und Andruckfeder
- 704-707: Lager
- 708,709: Dichtabschnitt
- 710-714: Zuleitungen
- 720,721: Druckminderer
- 722: Überdruck-Ventil
- 723: Ableitung
- 730: Spannsystem

- 800: Dichtung
- 801,802,810: Lager
- 803: Innenwand
- 804: Ausnehmung
- 805: Druckschlauch
- 806: Pumpe
- 807: Spalt
- 808: Außenwand
- 809: Zugfeder

- 900: Dichtung
- 901-906: Dichtabschnitt
- 907-911: Verbindungsstelle
- 912: Ende (der Dichtung)
- 913: Verankerung
- 914: Innenwand
- 917: Dichtungskasten
- 918-921: mechanisches Verbindungselement
- 924-927: Träger
- 930-933: Langloch
- 936: Seitenwand (des Dichtungskastens)
- 937-940: Schubstangen
- 943: Außenwand

- 1000: Dichtung
- 1001-1004: Dichtabschnitt
- 1007-1010: Verbindungsstelle

- 1012: Ende (der Dichtung)
- 1013: Verankerung
- 1014: Innenwand
- 1017: Dichtungskasten
- 1018-1021: mechanisches Verbindungselement
- 1024-1027: Gestänge
- 1030-1034: Scherensystem
- 1030a-1034a: Hebel
- 1030b-1034b: Hebel
- 1036: Seitenwand (des Dichtungskastens)
- 1043: Außenwand

- 1101-1104: Verbindungsstelle
- 1105-1108: Wulstseile
- 1109: Klammer

- 1200,1300: Dichtungsanordnung
- 1201,1301: Dichtungskasten
- 1202,1302: Bodenplatte
- 1203,1303: Innenwand
- 1204,1205,1304,1305: Verankerung
- 1206,1306: Spalt
- 1207,1307: Außenwand
- 1208,1308: Oberflächen-Beschichtung
- 1209,1309: Ankerkasten
- 1210,1310: Ausnehmung (im Dichtungskasten)
- 1211,1311: Edelstahlschicht
- 1212,1312: Ankerkasten
- 1213,1313: Drehachse
- 1214,1314: Dichtungsträger
- 1215,1216,1315,1316,: Ankerkasten
- 1217,1218,1317,1318: Enden
- 1219,1319: Schirmdichtung
- 1220,1320: Schlaufe
- 1221,1321: durchlässiger Abschnitt
- 1222,1322: Dichtabschnitt
- 1223,1323: weiterer Dichtabschnitt
- 1224,1324: Kanal
- 1224a,1324a: Raum
- 1226,1326: Puffer
- 1299,1399: Fluidkanal
- 1227: gefüllter Druckschlauch
- 1228: Stützfeder
- 1222a: Dichtlippen

- 1327: zweiter Arm
- 1328: erster Arm

- 1400: Dichtungsanordnung
- 1401: Dichtungskasten
- 1402: Edelstahlrahmen
- 1403: Spalt
- 1404: Ausnehmung
- 1405: Grenzfläche
- 1406: Dichtungsträger
- 1407: Kanal
- 1408: Halteklammer
- 1409: Andruckrolle
- 1410,1411,1412: Ankerkasten
- 1413,1414: Enden
- 1415: Schirmdichtung
- 1416: Schlaufe
- 1417: durchlässiger Abschnitt
- 1418: Dichtabschnitt
- 1420: weiterer Dichtabschnitt
- 1421: Raum
- 1422: Segmentabdichtung
- 1423,1424: Puffer
- 1440: Druckrolle

- 1500: Dichtungsanordnung
- 1501: Dichtungsträger
- 1502: Dichtungskasten
- 1503: Zugstange
- 1504,1505: Lager
- 1506: Lagerblock
- 1507: Spalt
- 1508: Dichtung
- 1509: Dichtlippe
- 1510: Außenwand
- 1511: Dichtabschnitt
- 1512,1513: Ankerkasten
- 1514: Kanal

- 1600: ringförmige Dichtungsanlage
- 1601: Dichtungskammer
- 1602: Ankerschienensystem
- 1603: senkrechte Montagewand
- 1604: Außenwand (des Kolbens)
- 1605: Kolben
- 1606: Dichtungskasten-Unterteil
- 1607: Dichtungskasten-Mittelteil
- 1608: Dichtungskasten-Oberteil
- 1609: Querrippen
- 1610: Drehachse
- 1611: Gewindeanker
- 1612: Ankerverschraubung
- 1613: Dichtungsträger
- 1614: Abdichtschirm
- 1615: Rollmembran
- 1616: Endwulst
- 1617: Ankerkasten
- 1618: elastischer Druckschlauch
- 1619: Druckschlauchträger
- 1620: Stoßverklebung (des Abdichtschirms)
- 1621: Stoßverklebung (der Rollmembran)
- 1622: Druckverstrebung
- 1623: Kolben-Puffer

- 1700: Klappensegment
- 1701: Knotenblech (des Dichtungskastens)
- 1702: Klappe
- 1703: Klappenstoß
- 1704: Dichtungsträger
- 1705: Ankerkasten
- 1706: Drehgelenk
- 1707: Drehpunktsicherung
- 1708: Fugenblock
- 1709: Dichtgewebe
- 1710: Ankerkastenschlitzung
- 1711: Drehgelenkaufnahme

- P: Pumpe
- G: Generator
- V: Ventil
- r: Radius (des Kolbens)
- b: Breite (des Spalts)
- M: Kreismittelpunkt

## Patentansprüche

1. Lageenergiespeicher (100) mit einem Hydraulikzylinder (110), in dem ein Kolben (120) zur Speicherung von Energie in Form von potentieller Energie des Kolbens (120) angeordnet ist, wobei die Position des Kolbens (120) relativ zur Erdoberfläche veränderbar ist, mit einer Pumpe, mit der eine Hydraulikflüssigkeit (130) über Leitungen in den Hydraulikzylinder (110) pumpbar ist, so dass der Kolben (120) angehoben wird, und mit einem Generator zur Umwandlung von Strömungsenergie von beim Absinken des Kolbens (120) aus dem Hydraulikzylinder (110) verdrängter Hydraulikflüssigkeit (130) in Elektrizität, wobei zwischen dem Hydraulikzylinder (110) und dem Kolben (120) eine Dichtung (400,500,600,700,701,800,900,1000) oder Dichtungsanordnung (1200,1300,1400,1500) zumindest partiell angeordnet ist,
**dadurch gekennzeichnet, dass** die Dichtung (400,500,600,700,701,800,900,1000) oder Dichtungsanordnung (1200,1300,1400,1500) zumindest einen Dichtabschnitt (608,708,709,901,1001,1222,1223, 1322,1323,1422,1423,1522,1523) mit einer flexiblen Trägerstruktur zur Aufnahme der wirkenden Kräfte aufweist, die ein- oder beidseitig mit einer fluiddichten Schicht zur Abdichtung gegen den Durchtritt von Fluid beschichtet oder mit einem erstarrten fluiddichten Material durchtränkt ist.

2. Lageenergiespeicher (100) nach Anspruch 1,
**dadurch gekennzeichnet, dass** der Dichtabschnitt (608,708,709,901,1001,1222,1223, 1322, 1323, 1422, 1423, 1522, 1523) oder die Dichtung (400,500,600,700,701,800,900,1000) in Umfangsrichtung des Kolbens (120) elastisch ist.

3. Lageenergiespeicher (100) nach Anspruch 1 oder 2,
**dadurch gekennzeichnet, dass** die flexible Trägerstruktur aus nebeneinander angeordneten Stahlseilen (212,222) oder nebeneinander angeordneten Abschnitten (212a,212b) eines oder mehrerer Stahlseile (212) besteht, die mit einem Gewebe (213,223) miteinander verbunden sind und dass die fluiddichte Schicht oder das erstarrte fluiddichte Material aus Gummi, Silikon oder einem elastischen Kunststoff besteht.

4. Lageenergiespeicher (100) nach einem vorstehenden Anspruch,
**dadurch gekennzeichnet, dass** zwischen dem Hydraulikzylinder (110) und dem Kolben (120) eine radial umlaufende Dichtung (400) angeordnet ist, deren durch die gesamte Dichtung (400) gebildeter Dichtabschnitt mit einem Ende (406) bzw. einem Rand in einem ersten, in die Innenwand (403) des Hydraulikzylinders (110) eingelassenen Lager (407) verankert ist, wobei das andere Ende (413) des Dichtabschnitts bzw. dessen anderer Rand in einem zweiten, in die Außenwand (404) des Kolbens (110) eingelassenen Lager (414) verankert ist.

5. Lageenergiespeicher (100) nach Anspruch 4,
**dadurch gekennzeichnet, dass** der Abstand des ersten Lagers (407) und des zweiten Lagers (414) bei vollständig entladenem Lageenergiespeicher (100) der halben maximalen Hubhöhe entspricht und dass das zweite, in die Außenwand(404) des Kolbens (120) eingelassene Lager (414), bei vollständig entladenem Lageenergiespeicher (100) unterhalb des ersten, in die Innenwand (403) des Hydraulikzylinders (110) eingelassenen Lagers (407) angeordnet ist.

6. Lageenergiespeicher (100) nach einem der Ansprüche 1 bis 3,
**dadurch gekennzeichnet, dass** eine den Kolben (120) radial zu seiner Hubrichtung umgebende Dichtung (500) vorhanden ist, deren im abzudichtenden Spalt angeordneter Abschnitt in einer Querschnittsebene durch den Kolben (120), die dessen Längsachse enthält, betrachtet eine Schlaufe (506) bildet und bei der beide Enden (504,505) bzw. Ränder der Dichtung (500) in zwei an der oder in der Innenwand (502) des Hydraulikzylinders (110) eingelassenen Lagern (509,510) oder in zwei an der oder in der Außenwand (503) des Kolbens (120) eingelassenen Lagern verankert sind, so dass eine doppellagige Dichtmanschette entsteht, wobei das nicht gelagerte, die Schlaufe (506) bildende Mittelteil der Dichtung (500) zwischen den Endabschnitten nach oben weist und eine Länge hat, die das Zweifache des maximalen Abstands zwischen der Außenwand (503) des Kolbens (120) und Innenwand (502) des Hydraulikzylinders (110) um mindestens 200%, bevorzugt 300% übersteigt und wobei die untere, der Hydraulikflüssigkeit (130) zugewandte Lage der doppellagigen Dichtmanschette im schlaufenförmigen Abschnitt zumindest abschnittsweise für den Durchtritt von Hydraulikflüssigkeit (130) durchlässig ist, während die obere Lage der Schlaufe (506) und der gekrümmte Bereich der Schlaufe (506), in dem die obere Lage in die untere Lage der doppellagigen Dichtmanschette übergeht, durch den Dichtabschnitt (508) gebildet werden.

7. Lageenergiespeicher (100) nach einem der Ansprüche 1 bis 3,
**dadurch gekennzeichnet, dass** eine den Kolben (120) radial umgebenden Dichtmanschette vorhanden ist, deren im abzudichtenden Spalt angeordneter Dichtabschnitt (601) in einer Querschnittsebene durch den Kolben (120), die dessen Längsachse enthält, betrachtet eine Schlaufe (602) bildet und bei der beide Enden bzw. Ränder der Dichtmanschette in zwei am oder im Hydraulikzylinder (110) eingelassenen Lagern (605,606) oder in zwei am oder im Kolben (120) eingelassenen Lagern verankert sind, vorhanden ist, so dass eine doppellagige Dichtmanschette entsteht, wobei das nicht gelagerte, die Schlaufe (602) bildende Mittelteil zwischen den Endabschnitten nach oben weist und eine Länge hat, die das Zweifache des maximalen Abstands zwischen Kolben (120) und Innenwand des Hydraulikzylinders (110) um mindestens 200%, bevorzugt 300% übersteigt und dass der Innenraum der Schlaufe (602) durch Beschickung mit einem Fluid durch ein im Hydraulikzylinder (110), wenn die Lager (605,606) im Hydraulikzylinder (110) eingelassen sind, oder im Kolben (120), wenn die Lager im Kolben (120) eingelassen sind vorgesehenes Rohrsystem (628) unter einen Druck gesetzt werden kann, der mindestens dem Druck der Hydraulikflüssigkeit (130) im Spalt (699) an der Dichtung (600) entspricht.

8. Lageenergiespeicher (100) nach Anspruch 7,
**dadurch gekennzeichnet, dass** Mittel zur Erhöhung des Drucks in der Schlaufe (606) vorhanden sind.

9. Lageenergiespeicher (100) nach einem der Ansprüche 1 bis 3,
**dadurch gekennzeichnet, dass** eine Dichtung (800) vorhanden ist, die an einem oberen Lager (801) und einem unteren Lager (802), die beide in der Innenwand des Hydraulikzylinders (110) oder beide im Kolben (120) angeordnet sind, verankert ist und dass ein Abschnitt der Dichtung (800) einen in einer umlaufenden Ausnehmung (804) der Innenwand (803) des Hydraulikzylinders (110), wenn die Lager (801,802) dort angeordnet sind oder in einer Ausnehmung im Kolben (120), wenn die Lager (801,802) dort angeordnet sind, vorgesehenen, radial um den Kolben (120) herumlaufenden Druckschlauch (805) überdeckt, der über eine Pumpe (P) unter einen den an der Dichtung (800) herrschenden Druck der Hydraulikflüssigkeit (130) übersteigenden Druck gesetzt werden kann, so dass sich der Druckschlauch (805) in einen Spalt (807) zwischen Hydraulikzylinder (110) und Kolben (120) hinein ausdehnt und die Dichtung (800) in jeder Richtung senkrecht zur Hubrichtung an einen Kontaktpunkt in Kontakt mit der inneren Oberfläche des Hydraulikzylinders (110), wenn die Dichtung am Kolben (120) verankert ist oder der äußeren Oberfläche des Kolbens (120), wenn die Dichtung am Hydraulikzylinder (110) verankert ist, gepresst wird, wobei sich der Dichtabschnitt der Dichtung in dieser Position zumindest vom unteren Lager bis zum Kontaktpunkt erstreckt, so dass keine Hydraulikflüssigkeit (130) austreten kann.

10. Lageenergiespeicher (100) nach einem der Ansprüche 1 bis 3,
**dadurch gekennzeichnet, dass** die Dichtung (900,1000) als Balg aus mehreren Dichtabschnitten (901, 902, 903, 904, 1001, 1002, 1002, 1003,), die miteinander an Verbindungsstellen (907,908, 909,910) verbunden sind, ausgeführt ist, wobei an zumindest einigen der Verbindungsstellen eine mechanische Führung vorgesehen ist, welche eine Anpassung der Dichtung (900,1000) an die Spaltbreite ermöglicht.

11. Lageenergiespeicher (100) nach einem der Ansprüche 1 bis 3,
**dadurch gekennzeichnet, dass** der Dichtabschnitt (1222, 1322, 1422, 1522,) mit mindestens einem, bevorzugt seinem oberen Rand an einem starren, aber drehbar oder verschiebbar in der Außenwand des Kolbens Kolben oder, bevorzugt, in der Innenwand (1203,1303,1403,1503) des Hydraulikzylinders gelagerten Dichtungsträger (1214,1314,1414,1514) gelagert ist, welcher durch die Drehung oder die Verschiebung in den Spalt (1206,1306,1406,1506) zwischen der Innenwand des Hydraulikzylinders und dem Kolben hinein bewegbar ist, so dass der in den Spalt (1206,1306,1406, 1506) hinein bewegte Dichtungsträger (1214,1314,1414,1514) oder ein daran befestigtes Anbauteil den Durchfluss von Hydraulikflüssigkeit durch den Teil des Spalts (1206,1306,1406,1506), der von dem Dichtungsträger (1214,1314, 1414,1514) oder dem daran befestigten Anbauteil überdeckt wird, sperrt, wobei der Dichtabschnitt (1222,1322,1422, 1522) den zwischen dem Dichtungsträger (1214,1314,1414, 1514) und der Innenwand des Hydraulikylinders (110), wenn der Dichtungsträger (1214,1314,1414,1514) im Kolben (120) gelagert ist oder zwischen dem Dichtungsträger (1214, 1314,1414,1514) und dem Kolben (120), wenn der Dichtungsträger (1214,1314,1414,1514) in der Innenwand des Hydraulikzylinders (110) gelagert ist, verbleibenden Teil des Spalts (1206,1306,1406,1506)abdichtet.

12. Lageenergiespeicher (100) nach Anspruch 11,
**dadurch gekennzeichnet, dass** der Dichtungsträger (1406) kreissegmentförmig ist und so drehbar auf Druckrollen (1440) gelagert ist, dass er auf einer Kreisbahn geführt wird.

13. Lageenergiespeicher (100) nach Anspruch 11 oder 12,
**dadurch gekennzeichnet, dass** zwischen dem Dichtungsträger und seinem Lager ein als Rollmembran ausgeführter weiterer Dichtabschnitt (1223,1323, 1423,1523) angeordnet ist, so dass durch den Druck der Hydraulikflüssigkeit auf den weiteren Dichtabschnitt der Dichtabschnitt (1223,1323,1423,1523) angepresst wird.

14. Lageenergiespeicher (100) nach einem der Ansprüche 6 bis 11,
**dadurch gekennzeichnet, dass** in der Innenwand des Hydraulikzylinders (110), wenn die Dichtung am Hydraulikzylinder (110) angeordnet ist, oder in der Außenwand des Kolbens (120), wenn die Dichtung am Kolben (120) angeordnet ist, eine Ausnehmung vorhanden ist, in die die Dichtung aufgenommen werden kann, wenn sich die Breite des Spalts zwischen Hydraulikzylinder (110) und Kolben (120) verringert.

15. Lageenergiespeicher (100) nach einem der vorstehenden Ansprüche,
**dadurch gekennzeichnet, dass** Zentriermittel zur Zentrierung des Kolbens (120)im Hydraulikzylinder (110) vorhanden sind.

16. Lageenergiespeicher (100) nach einem der vorstehenden Ansprüche,
**dadurch gekennzeichnet, dass** als Lager für die Dichtung am Hydraulikzylinder (110) und/oder am Kolben (120) ein umlaufender Betonring (150,160) vorgesehen ist.

17. Lageenergiespeicher (100) nach einem der vorstehenden Ansprüche,
**dadurch gekennzeichnet, dass** die innere Wandfläche des Hydraulikzylinders und/oder die äußere Wandfläche des Kolbens zumindest in dem Höhenbereich zwischen dem Punkt, an dem die Dichtung bei vollständig entladenem Lageenergiespeicher anliegt und dem Punkt, an dem die Dichtung bei maximal geladenen Lageenergiespeicher anliegt, mit einer die Rauigkeit der Wandfläche reduzierenden Schicht verkleidet oder beschichtet sind.

18. Lageenergiespeicher nach einem der vorstehenden Ansprüche,
**dadurch gekennzeichnet, dass** die Wand des Hydraulikzylinders aus Bohrpfählen aus Beton gebildet ist, wobei auf der Innenseite des Hydraulikzylinders Abdicht-Gewebe-Matten aus einem gegenüber dem Durchtritt von Hydraulikflüssigkeit dichten Material einander überlappend angeordnet sind, wobei jede Abdicht-Gewebe-Matte an einem Bohrpfahl verankert ist.

19. Lageenergiespeicher nach einem der vorstehenden Ansprüche,
**dadurch gekennzeichnet, dass** der Kolben durch einen Topf , der mit einem Füllmaterial einer Dichte ρ > 2t/m³ gefüllt ist, gebildet wird.

20. Lageenergiespeicher (100) nach einem der vorstehenden Ansprüche,
**dadurch gekennzeichnet, dass** an der Oberseite des Kolbens (120) eine ringförmige Anordnung von mehreren Ballasttanks konzentrisch zur Zentralachse des Kolbens vorgesehen ist, wobei der Füllstand der Ballasttanks voneinander unabhängig regelbar ist.

## Claims

1. Positional energy store (100), comprising a hydraulic cylinder (110) in which a piston (120) is arranged for the storage of energy in the form of potential energy of the piston (120), wherein the position of the piston (120) relative to the surface of the earth is variable, also comprising a pump by which a hydraulic fluid (130) can be pumped via lines into the hydraulic cylinder (110) so that the piston (120) is raised, and a generator by which flow energy of the hydraulic fluid (130) displaced from the hydraulic cylinder (110) during the lowering of the piston (120) is converted into electricity, wherein a seal (400, 500, 600, 700, 701, 800, 900, 1000) or seal arrangement (1200, 1300, 1400, 1500) is arranged at least partially between the hydraulic cylinder (110) and the piston (120), **characterised in that** the seal (400, 500, 600, 700, 701, 800, 900, 1000) or seal arrangement (1200, 1300, 1400, 1500) has at least one sealing section (608, 708, 709, 901, 1001, 1222, 1223, 1322, 1323, 1422, 1423, 1622, 1523) with a flexible carrier structure for accommodating the acting forces, the carrier structure being coated on one or both sides with a fluid-tight layer for sealing against the passage of fluid or being impregnated with a solidified fluid-tight material.

2. Positional energy store (100) according to claim 1, **characterised in that** the sealing section (608, 708, 709, 91, 1001, 1222, 1223, 1322, 1323, 1422, 1423, 1522, 1523) or the seal (400, 500, 600, 700, 701, 800, 900, 1000) is elastic in the circumferential direction of the piston (120).

3. Positional energy store (100) according to claim 1 or 2, **characterised in that** the flexible carrier structure consists of steel cables (212, 222) which are arranged adjacent to one another or sections (212a, 212b) of one or more steel cables (212) which are arranged adjacent to one another, and are connected to one another by way of a fabric (213, 223), and **in that** the fluid-tight layer or the solidified fluid-tight material is made of rubber, silicon or an elastic plastic.

4. Positional energy store (100) according to one of the preceding claims, **characterised in that** a radially encircling seal (400) is arranged between the hydraulic cylinder (110) and the piston (120), the sealing section formed by the entire seal (400) being anchored by one end (406) or an edge in a first bearing (407) which is recessed into the inner wall (403) of the hydraulic cylinder (110), wherein the other end (413) of the sealing section or the other edge thereof is anchored in a second bearing (414) which is recessed into the outer wall (404) of the piston (110).

5. Positional energy store (100) according to claim 4, **characterised in that** the spacing of the first bearing (407) and of the second bearing (414) when the positional energy store (100) is fully discharged corresponds to half of the maximum lifting height, and **in that** when the positional energy store (100) is fully discharged the second bearing (414) which is recessed into the outer wall (404) of the piston (120) is arranged below the first bearing (407) recessed into the inner wall (403) of the hydraulic cylinder (110).

6. Positional energy store (100) according to one of claims 1 to 3, **characterised in that** a seal (500) surrounding the piston (120) radially with respect to the lifting direction thereof is provided, and the section of the seal arranged in the gap to be sealed forms a loop (506) when viewed in a cross-sectional plane through the piston (120) containing the longitudinal axis thereof, wherein both ends (504, 505) or edges of the seal (500) are anchored in two bearings (509, 510) recessed on or in the inner wall (502) of the hydraulic cylinder (110) or in two bearings recessed on or in the outer wall (503) of the piston (120), so that a double-layer sealing sleeve is produced, wherein the unsupported central part of the seal (500) forming the loop (506) between the end sections points upward and has a length which is greater than two times the maximum spacing between the outer wall (503) of the piston (120) and the inner wall (502) of the hydraulic cylinder (110) by at least 200%, preferably 300%, and wherein the lower layer of the double-layer sealing sleeve in the loop-shaped section which faces the hydraulic fluid (130)is at least partially permeable for the passage of hydraulic fluid (130), whilst the upper layer of the loop (506) and the curved region of the loop (506) in which the upper layer transitions into the lower layer of the double-layer sealing sleeve forming the sealing section (508).

7. Positional energy store (100) according to one of claims 1 to 3, **characterised in that** a sealing sleeve radially surrounding the piston (120) is provided, and the sealing section (601) thereof arranged in the gap to be sealed forms a loop (602) when viewed in a cross-sectional plane through the piston (120) containing the longitudinal axis thereof, wherein both ends or edges of the sealing sleeve are anchored in two bearings (605, 606) recessed on or in the hydraulic cylinder (110) or in two bearings recessed on or in the piston (120), so that a double-layer sealing sleeve is produced, wherein the unsupported central part forming the loop (602) between the end sections points upward and has a length which is greater than two times the maximum spacing between the piston (120) and the inner wall of the hydraulic cylinder (110) by at least 200%, preferably 300%, and wherein a pipe system (628) for supplying a fluid is provided in the hydraulic cylinder (110) if the bearings (605, 606) are recessed in the hydraulic cylinder (110) or is provided in the piston (120) if the bearings are recessed in the piston (120), and wherein the interior of the loop (602) can be subjected to a pressure which corresponds to the pressure of the hydraulic fluid (130) in the gap (699) on the seal (600).

8. Positional energy store (100) according to claim 7, **characterised in that** means are provided for increasing the pressure in the loop (606).

9. Positional energy store (100) according to one of claims 1 to 3, **characterised in that** a seal (800) is provided which is anchored on an upper bearing (801) and on a lower bearing (802) which are both arranged in the inner wall of the hydraulic cylinder (110) or are both arranged in the piston (120), and **in that** a section of the seal (800) covers a pressure hose (805) which is provided in an encircling recess (804) of the inner wall (803) of the hydraulic cylinder (110) if the bearings (801, 802) are arranged there or is provided in a recess in the piston (120) if the bearings (801, 802) are arranged there, wherein the section radially encircles the piston (120) and can be subjected by a pump (P) to a pressure which exceeds a pressure of the hydraulic fluid (130) prevailing on the seal (800), so that the pressure hose (805) expands into a gap (807) between the hydraulic cylinder (110) and the piston (120) and the seal (800) is pressed in each direction perpendicular to the lifting direction at a contact point in contact with the inner surface of the hydraulic cylinder (110) if the seal is anchored on the piston (120) or with the outer surface of the piston (120) if the seal is anchored on the hydraulic cylinder (110), and wherein in this position the sealing section of the seal extends at least from the lower bearing to the contact point so that no hydraulic fluid (130) can escape.

10. Positional energy store (100) according to one of claims 1 to 3, **characterised in that** the seal (900,1000) is configured as bellows consisting of a plurality of sealing sections (901, 902, 903, 904, 1001, 1002, 1002, 1003) which are connected to one another at connection points (907, 908, 909, 910), wherein a mechanical guide is provided at least at some of the connection points, which enables an adaptation of the seal (900, 1000) to the gap width.

11. Positional energy store (100) according to one of claims 1 to 3, **characterised in that** the sealing section (1222, 1322, 1422, 1522) is mounted with at least one edge, preferably its upper edge, on a seal carrier (1214, 1314, 1414, 1514) which is mounted rotatably or displaceably in the outer wall of the piston or in the inner wall (1203, 1303, 1403, 1503) of the hydraulic cylinder, wherein the seal carrier is movable, by rotation or displacement, into the gap (1206, 1306, 1406, 1506) between the inner wall of the hydraulic cylinder and the piston, so that the seal carrier (1214,1314,1414,1514) or an accessory fastened thereon moved into the gap (1206, 1306, 1406, 1506) blocks the throughflow of hydraulic fluid through the part of the gap (1206, 1306, 1406, 1506) which is covered by the seal carrier (1214, 1314, 1414, 1514) or the accessory fastened thereon, wherein the sealing section (1222, 1322, 1422, 1522) seals the remaining part of the gap (1206, 1306, 1406, 1506) between the seal carrier (1214, 1314, 1414, 1514) and the inner wall of the hydraulic cylinder (110), if the seal carrier (1214, 1314, 1414, 1514) is mounted in the piston (120), or between the seal carrier (1214, 1314,1414,1514) and the piston (120), if the seal carrier (1214, 1314, 1414, 1514) is mounted in the inner wall of the hydraulic cylinder (110).

12. Positional energy store (100) according to claim 11, **characterised in that** the seal carrier (1406) has the shape of a circular segment and is mounted rotatably on pressure rollers (1440) so that it is guided on a circular path.

13. Positional energy store (100) according to claim 11 or 12, **characterised in that** a further sealing section (1223, 1323, 1423, 1523) configured as a rolling diaphragm is arranged between the seal carrier and the bearing thereof, so that pressure of the hydraulic fluid on the further sealing section causes the sealing section (1223, 1323, 1423, 1523) to be pressed on.

14. Positional energy store (100) according to one of claims 6 to 11, **characterised in that** there is a recess in the inner wall of the hydraulic cylinder (110), if the seal is arranged on the hydraulic cylinder (110), or in the outer wall of the piston (120), if the seal is arranged on the piston (120), and the seal can be accommodated in the recess if the width of the gap between the hydraulic cylinder (110) and the piston (120) decreases.

15. Positional energy store (100) according to one of the preceding claims, **characterised in that** centring means are provided for centring the piston (120) in the hydraulic cylinder (110).

16. Positional energy store (100) according to one of the preceding claims, **characterised in that** an encircling concrete ring (150, 160) is provided as a bearing for the seal on the hydraulic cylinder (110) and/or on the piston (120).

17. Positional energy store (100) according to one of the preceding claims, **characterised in that** the inner wall surface of the hydraulic cylinder and/or the outer wall surface of the piston are lined or coated with a layer which reduces the roughness of the wall surface at least in the height region between the point against which the seal bears when the positional energy store is fully discharged and a point against which the seal bears when the positional energy store is charged to a maximum extent.

18. Positional energy store according to one of the preceding claims, **characterised in that** the wall of the hydraulic cylinder is formed from drilled piles made of concrete, wherein sealing fabric mats composed of a material which is impermeable to the passage of hydraulic fluid are arranged overlapping one another on the inside of the hydraulic cylinder, wherein each sealing fabric mat is anchored on a drilled pile.

19. Positional energy store according to one of the preceding claims, **characterised in that** the piston is formed by a pot filled with a filler material having a density ρ > 2t/m³.

20. Positional energy store (100) according to one of the preceding claims, **characterised in that** a ring-shaped arrangement of a plurality of ballast tanks is provided on the upper face of the piston (120) concentrically with respect to the central axis of the piston, wherein the filling levels of the ballast tanks can be regulated independently of each other.

## Revendications

1. Accumulateur d'énergie potentielle (100) comportant un cylindre hydraulique (110) dans lequel est monté un piston (120) permettant d'accumuler de l'énergie sous la forme d'énergie potentielle du piston (120), la position du piston (120) par rapport à la surface du sol pouvant être modifiée, ainsi qu'une pompe avec laquelle un fluide hydraulique (130) peut être pompé dans le cylindre hydraulique (110) par des conduites de façon à permettre de lever le piston (120), et un générateur permettant de transformer l'énergie d'écoulement du fluide hydraulique (130) refoulé du cylindre hydraulique (110) lors de l'abaissement du piston (120) en électricité, accumulateur d'énergie potentielle dans lequel, entre le cylindre hydraulique (110) et le piston (120) est monté au moins partiellement une garniture d'étanchéité (400, 500, 600, 700, 701, 800, 900, 1000) ou un dispositif d'étanchéité (1200, 1300, 1400, 150),
**caractérisé en ce que**
la garniture d'étanchéité (400, 500, 600, 700, 701, 800, 900, 1000) ou le dispositif d'étanchéité (1200, 1300, 1400, 1500) comporte au moins un segment d'étanchéité (608, 708, 709, 901, 1001, 1222, 1223, 1322, 1323, 1422, 1423, 1522, 1523) ayant une structure support flexible pour permettre la réception des forces actives, qui est recouvert d'un côté ou des deux côtés d'une couche étanche au fluide pour permettre d'assurer l'étanchéité vis-à-vis de la pénétration de fluide, ou est imprégnée d'un matériau étanche au fluide durci.

2. Accumulateur d'énergie potentielle (100) conforme à la revendication 1,
**caractérisé en ce que**
le segment d'étanchéité (608, 708, 709, 901, 1001, 1222, 1223, 1322, 1323, 1422, 1423, 1522, 1523) ou la garniture d'étanchéité (400, 500, 600, 700, 701, 800, 900, 1000) est élastique dans la direction périphérique du piston (120).

3. Accumulateur d'énergie potentielle (100) conforme à la revendication 1 ou 2,
**caractérisé en ce que**
la structure support flexible est constituée de câbles en acier (212, 222) situés côte à côte ou de segments (212a, 212b) situés côte à côte d'un ou de plusieurs câble(s) en acier (212) qui sont reliés par un tissu (213, 223), et **en ce que** la couche étanche au fluide ou le matériau étanche au fluide durci est constitué de caoutchouc, de silicone ou d'une matière plastique élastique.

4. Accumulateur d'énergie potentielle (100) conforme à l'une des revendications précédentes,
**caractérisé en ce qu'**
entre le cylindre hydraulique (110) et le piston (120) est montée une garniture d'étanchéité (400) s'étendant radialement dont le segment d'étanchéité formé par la totalité de la garniture d'étanchéité (400) est ancré par une extrémité (406) ou un bord dans un premier palier (407) inséré dans la paroi interne (403) du cylindre hydraulique (110), l'autre extrémité (413) du segment d'étanchéité ou son autre bord étant encré dans un second palier (414) inséré dans la paroi externe (404) du piston (110).

5. Accumulateur d'énergie potentielle (100) conforme à la revendication 4,
**caractérisé en ce que**
la distance entre le premier palier (407) et le second palier (414) correspond, lorsque l'accumulateur d'énergie potentielle (100) est totalement déchargé à la moitié de la hauteur de la course de levage maximum, et **en ce que** le second palier (414) inséré dans la paroi externe (404) du piston (120) est situé, lorsque l'accumulateur d'énergie potentielle (100) est totalement déchargé au-dessous du premier palier (407) inséré dans la paroi interne (403) du cylindre hydraulique (110).

6. Accumulateur d'énergie potentielle (100) conforme à l'une des revendications 1 à 3,
**caractérisé en ce qu'**
il est prévu une garniture d'étanchéité (500) entourant le piston (120) radialement à sa direction de levage, dont le segment situé dans l'intervalle à rendre étanche forme, dans un plan de section au travers du piston (120) qui renferme son axe longitudinal, une boucle (506), et les deux extrémités (504, 505) ou bords de la garniture d'étanchéité (500) sont ancrés dans deux paliers (509, 510) insérés sur ou dans la paroi interne (502) du cylindre hydraulique (110), ou dans deux paliers insérés sur ou dans la paroi externe (503) du piston (120) de façon à former un manchon d'étanchéité à double couches, la partie médiane de la garniture d'étanchéité (500) non montée sur paliers formant la boucle (506) s'étendant vers le haut entre les segments d'extrémité et ayant une longueur supérieure au double de la distance maximum entre la paroi externe (503) du piston (120) et la paroi interne (502) du cylindre hydraulique (110) d'au moins 200%, de préférence de 300%, et la couche inférieure tournée vers le fluide hydraulique (130) du manchon d'étanchéité à double couches étant, dans le segment en forme de boucle, au moins par segments perméable pour permettre le passage de fluide hydraulique (130), alors que la couche supérieure de la boucle (506) et la zone cintrée de cette boucle (506) dans laquelle la couche supérieure passe dans la couche inférieure du manchon d'étanchéité à double couches sont formés par le segment d'étanchéité (508).

7. Accumulateur d'énergie potentielle (100) conforme à l'une des revendications 1 à 3,
**caractérisé en ce qu'**
il est prévu un manchon d'étanchéité entourant radialement le piston (120) dont le segment d'étanchéité (601) situé dans l'intervalle à rendre étanche forme, une boucle (602), dans un plan de section au travers du piston (120) qui renferme son axe longitudinal, et les deux extrémités ou bords du manchon d'étanchéité sont ancrés dans deux paliers (605, 606) insérés dans ou sur le cylindre hydraulique (110) ou dans deux paliers insérés sur ou dans le piston (120), de façon à former un manchon d'étanchéité à double couches, la partie médiane entre les segments d'extrémité non montée sur paliers formant la boucle (602) s'étendant vers le haut et ayant une longueur supérieure au double de la distance maximum entre le piston (120) et la paroi interne du cylindre hydraulique (110) d'au moins 200%, de préférence de 300%, et, le volume interne de la boucle (602) peut être, par alimentation d'un fluide dans un système tubulaire (628) prévu dans le cylindre hydraulique (110) lorsque les paliers (605, 606) sont insérés dans le cylindre hydraulique (110) ou dans le piston (120) lorsque les paliers sont insérés dans le piston (120), mis sous une pression qui correspond au moins à la pression du fluide hydraulique (130) dans l'intervalle (699) sur la garniture d'étanchéité.

8. Accumulateur d'énergie potentielle (100) conforme à la revendication 7,
**caractérisé en ce qu'**
il est prévu des moyens permettant d'augmenter la pression dans la boucle (606).

9. Accumulateur d'énergie potentielle (100) conforme à l'une des revendications 1 à 3,
**caractérisé en ce qu'**
il est prévu une garniture d'étanchéité (800) qui est ancrée sur un palier supérieur (801) et sur un palier inférieur (802) qui sont tous deux situés dans la paroi interne du cylindre hydraulique (110) ou tous deux situés dans le piston (120), et un segment de la garniture d'étanchéité (800) recouvre un tuyau de pression (805) s'étendant radialement autour du piston (120) prévu dans un évidement périphérique (804) de la paroi interne (803) du cylindre hydraulique (110) lorsque les paliers (801, 802) y sont situés ou dans un évidement du piston (120) lorsque les paliers (801, 802) y sont situés, et qui peut être mis, par l'intermédiaire d'une pompe (P) sous une pression dépassant la pression du fluide hydraulique (130) régnant sur la garniture d'étanchéité (800) de sorte que le tuyau de pression (805) se dilate dans l'intervalle (807) situé entre le cylindre hydraulique (110) et le piston (120), et que la garniture d'étanchéité (800) soit comprimée dans chaque direction perpendiculaire à la direction de levage, au niveau d'un point de contact en contact avec la surface interne du cylindre hydraulique (110) lorsque la garniture d'étanchéité est ancrée sur le piston (120) ou avec la surface externe du piston (120) lorsque la garniture d'étanchéité est ancrée sur le cylindre hydraulique (110), le segment d'étanchéité de la garniture d'étanchéité s'étendant dans cette position au moins du palier inférieur au point de contact de sorte que le fluide hydraulique (130) ne puisse pas sortir.

10. Accumulateur d'énergie potentielle (100) conforme à l'une des revendications 1 à 3,
**caractérisé en ce que**
la garniture d'étanchéité (900, 1000) est réalisée sous la forme d'un soufflet constitué de plusieurs segments d'étanchéité (901, 902, 903, 904, 1001, 1002, 1003), qui sont reliés au niveau d'emplacements de liaison (907, 908, 909, 910), et, au niveau d'au moins certains des emplacements de liaison il est prévu un guidage mécanique qui permet une adaptation de la garniture d'étanchéité (900, 1000) à la largeur de l'intervalle.

11. Accumulateur d'énergie potentielle (100) conforme à l'une des revendications 1 à 3,
**caractérisé en ce que**
le segment d'étanchéité (1222, 1322, 1422, 1522) est monté, par au moins l'un de ses bords, de préférence son bord supérieur sur un support d'étanchéité (1214, 1314, 1414, 1514) rigide mais mobile en rotation ou en translation monté dans la paroi externe du piston ou de préférence dans la paroi interne (1203, 1303, 1403, 1503) du cylindre hydraulique, et qui est mobile par rotation ou par translation dans l'intervalle (1206, 1306, 1406, 1506) entre la paroi interne du cylindre hydraulique et le piston de sorte que le support d'étanchéité se déplaçant dans l'intervalle (1206, 1306, 1406, 1506) ou une pièce qui y est fixée bloque le passage du fluide hydraulique au travers de la partie de l'intervalle (1206, 1306, 1406, 1506) qui est recouverte par le support d'étanchéité (1214, 1314, 1414, 1514) ou la pièce qui y est fixée, le segment d'étanchéité (1222, 1322, 1422, 1522) assurant l'étanchéité de la partie restante de l'intervalle (1206, 1306, 1406, 1506) entre le support d'étanchéité (1214, 1314, 1414, 1514) et la paroi interne du cylindre hydraulique (110) lorsque le support d'étanchéité (1214, 1314, 1414, 1514) est monté dans le piston (120) ou entre le support d'étanchéité (1214, 1314, 1414, 1514) et le piston (120) lorsque le support d'étanchéité (1214, 1314, 1414, 1514) est monté dans la paroi interne du cylindre hydraulique (110).

12. Accumulateur d'énergie potentielle (100) conforme à la revendication 1,
**caractérisé en ce que**
le support d'étanchéité (1406) est en forme de section de cercle et est monté mobile en rotation sur des galets presseurs (1440) de façon à être guidé sur une piste circulaire.

13. Accumulateur d'énergie potentielle (100) conforme à la revendication 11 ou 12,
**caractérisé en ce qu'**
entre le support d'étanchéité et son palier est monté un autre segment d'étanchéité (1223, 1323, 1423, 1523) réalisé sous la forme d'une membrane de roulement de sorte que la pression du fluide hydraulique sur cet autre segment d'étanchéité comprime le segment d'étanchéité (1223, 1323, 1423, 1523).

14. Accumulateur d'énergie potentielle (100) conforme à l'une des revendications 6 à 11,
**caractérisé en ce que**
dans la paroi interne du cylindre hydraulique (110) lorsque la garniture d'étanchéité est montée sur le cylindre hydraulique (110), ou dans la paroi externe du piston (120) lorsque la garniture d'étanchéité est montée sur le piston (120) il est prévu un évidement dans lequel la garniture d'étanchéité peut être logée lorsque la largeur de l'intervalle entre le cylindre hydraulique (110) et le piston (120) diminue.

15. Accumulateur d'énergie potentielle (100) conforme à l'une des revendications précédentes,
**caractérisé en ce qu'**
il est prévu des moyens de centrage du piston (120) dans le cylindre hydraulique (110).

16. Accumulateur d'énergie potentielle (100) conforme à l'une des revendications précédentes,
**caractérisé en ce qu'**
en tant que palier de la garniture d'étanchéité, il est prévu sur le cylindre hydraulique (110) et/ou sur le piston (120) une bague en béton périphérique (150, 160).

17. Accumulateur d'énergie potentielle (100) conforme à l'une des revendications précédentes,
**caractérisé en ce que**
la surface de paroi interne du cylindre hydraulique et/ou la surface de paroi externe du piston est(sont) revêtue(s) ou recouverte(s), au moins dans la zone de la hauteur située entre le point sur lequel s'applique la garniture d'étanchéité lorsque l'accumulateur d'énergie potentielle est totalement déchargé et le point sur lequel s'applique la garniture d'étanchéité lorsque l'accumulateur d'énergie potentielle est chargé au maximum, d'une couche réduisant la rugosité de cette(ces) surface(s) de paroi.

18. Accumulateur d'énergie potentielle conforme à l'une des revendications précédentes,
**caractérisé en ce que**
la paroi du cylindre hydraulique est formée par des pieux forés en béton, et, sur le côté interne du cylindre hydraulique sont disposés des nappes de tissu d'étanchéité en un matériau étanche au passage de fluide hydraulique qui se chevauchent, chaque nappe de tissu d'étanchéité étant ancrée sur un pieux foré.

19. Accumulateur d'énergie potentielle conforme à l'une des revendications précédentes,
**caractérisé en ce que**
le piston est formé par un pot rempli d'un matériau de remplissage ayant une densité ρ > 2t/m³.

20. Accumulateur d'énergie potentielle (100) conforme à l'une des revendications précédentes,
**caractérisé en ce qu'**
il est prévu sur le côté supérieur du piston (112) un agencement annulaire de plusieurs ballasts pouvant être réglés indépendamment.
